(19) Europäisches Patentamt
European Patent Office
Office européen des brevets

(11) **EP 4 548 781 A1**

(12) **EUROPEAN PATENT APPLICATION**
published in accordance with Art. 153(4) EPC


(43) Date of publication:
**07.05.2025 Bulletin 2025/19**

(21) Application number: **23831494.2**

(22) Date of filing: **28.06.2023**

(51) International Patent Classification (IPC):
***A23L 33/17*** *(2016.01)* ***A23L 2/00*** *(2006.01)*
***A23L 2/52*** *(2006.01)* ***C12C 5/02*** *(2006.01)*
***C12C 12/00*** *(2006.01)* ***C12G 3/04*** *(2019.01)*

(52) Cooperative Patent Classification (CPC):
**A23L 2/00; A23L 2/52; A23L 33/17; C12C 5/02; C12C 12/00; C12G 3/04**

(86) International application number:
**PCT/JP2023/023929**

(87) International publication number:
**WO 2024/005054 (04.01.2024 Gazette 2024/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.06.2022 JP 2022105574**



(71) Applicant: **Suntory Holdings Limited**
**Osaka-shi, Osaka 530-8203 (JP)**

(72) Inventors:
- **TANIKAWA Tsubasa**
  **Mishima-gun, Osaka 618-0001 (JP)**
- **KATO Yuichi**
  **Fuchu-shi, Tokyo 183-8533 (JP)**
- **MIZUGUCHI Ikuma**
  **Fuchu-shi, Tokyo 183-8533 (JP)**
- **TAKII Yoko**
  **Mishima-gun, Osaka 618-0001 (JP)**
- **TAKEMASA Ryo**
  **Mishima-gun, Osaka 618-0001 (JP)**

(74) Representative: **Vossius & Partner**
**Patentanwälte Rechtsanwälte mbB**
**Siebertstrasse 3**
**81675 München (DE)**


(54) **PROCESSED FOOD PRODUCT**


(57) Provided is a processed food product which has a xanthine/pyroglutamic acid ratio between the xanthine content (units: μg/g) and the pyroglutamic acid content (units: μg/g) of 0.0200 or less and a pyroglutamic acid content of 40 μg/g or greater.


EP 4 548 781 A1

## Description

Technical Field

The present invention relates to a processed food, an additive for a processed food, a method for producing a processed food, and a method for lowering a purine content in a processed food.

Background Art

In recent years, a health consciousness trend is driving demand for processed foods with a lowered content of purines. Purines are considered to be a cause of gout. Examples of processed foods known to contain a large amount of purines include beer-taste beverages. As described in Patent Document 1, development of beer-taste beverages with a lowered content of purines is now being conducted.

Citation List

Patent Document

Patent Document 1: JP 2018-64503 A

Summary of Invention

Technical Problem

Under such circumstances, a processed food with a lowered content of purines is demanded.

Solution to Problem

The present invention provides a processed food containing a predetermined amount of uric acid. Specifically, the present invention provides the following embodiments [1] to [29].

[1] A processed food having a xanthine/pyroglutamic acid ratio between a content of xanthine (unit: μg/g) and a content of pyroglutamic acid (unit: μg/g) of 0.0200 or less,
the content of pyroglutamic acid being 40 μg/g or more.
[2] The processed food according to [1], wherein the content of xanthine is 2.2 μg/g or less.
[3] The processed food according to [1] or [2], wherein the processed food has a content of uric acid of 2.0 μg/g or more.
[4] The processed food according to [1] or [2], wherein the processed food has a content of uric acid of less than 2.0 μg/g.
[5] The processed food according to [4], wherein the processed food has a content of allantoin of 0.10 μg/g or more and 50.0 μg/g or less.
[6] A processed food containing at least one component (X) selected from the group consisting of a protein having had xanthine oxidase activity and a component derived from the protein.
[7] A processed food containing at least one component (X) selected from the group consisting of a protein having had xanthine oxidase activity and a component derived from the protein, and at least one component (U) selected from the group consisting of a protein having had uricase activity and a component derived from the protein.
[8] The processed food according to [6] or [7], wherein the processed food has a content of pyroglutamic acid of 10 μg/g or more.
[9] The processed food according to any one of [1] to [8], wherein the processed food is a beer-taste beverage.
[10] The processed food according to [9], wherein the beer-taste beverage contains no spirits.
[11] The processed food according to [9] or [10], wherein the beer-taste beverage has a total content of ester components of 500 mass ppb or more in terms of an original wort extract concentration of 14.5 mass% based on a total amount of the beer-taste beverage, the ester components including ethyl butyrate, ethyl caproate, ethyl octanoate, and ethyl decanoate.
[12] The processed food according to any one of [9] to [11], wherein the beer-taste beverage has a malt proportion of 10 mass% or more.
[13] The processed food according to any one of [9] to [12], wherein the beer-taste beverage has an alcoholic strength of 1.0 (v/v)% or more.

[14] The processed food according to any one of [9] to [12], wherein the beer-taste beverage has an alcoholic strength of less than 1.0 (v/v)%.

[15] The processed food according to any one of [9] to [14], wherein the beer-taste beverage is a fermented beverage.

[16] The processed food according to any one of [9] to [15], wherein the beer-taste beverage is a fermented malt beverage.

[17] The processed food according to any one of [9] to [16], wherein the beer-taste beverage has an original wort extract concentration of 7.5 mass% or more.

[18] An additive for a processed food, the additive having at least one of xanthine oxidase activity or uricase activity.

[19] The additive for a processed food according to [18], wherein the additive is added in a production process of a beer-taste beverage.

[20] The additive for a processed food according to [19], wherein the beer-taste beverage is a fermented malt beverage.

[21] The additive for a processed food according to any one of [18] to [20], wherein the additive for a processed food has a xanthine oxidase activity value of 0.01 U or more.

[22] The additive for a processed food according to any one of [18] to [21], wherein the additive for a processed food has a uricase activity value of 0.01 U or more.

[23] A method for producing a processed food, the method including step (a): adding an additive for a processed food having at least one of xanthine oxidase activity or uricase activity.

[24] A method for producing a beer-taste beverage, the method including step (a): adding an additive for a processed food having at least one of xanthine oxidase activity or uricase activity.

[25] The method for producing a beer-taste beverage according to [24], the method including the following steps (1) to (3), wherein step (a) is performed at least before step (1), simultaneously with one or more steps of steps (1) to (3), between two steps selected from steps (1) to (3), or after step (3):

step (1): performing at least one treatment of saccharification treatment, boiling treatment, or solid content removal treatment on a raw material to produce a pre-fermentation liquid;

step (2): cooling the pre-fermentation liquid obtained in step (1) to produce a cooled pre-fermentation liquid;

step (3): adding yeast to the cooled pre-fermentation liquid obtained in step (2) to perform alcoholic fermentation.

[26] The method for producing a beer-taste beverage according to [24] or [25], wherein the beer-taste beverage has a malt proportion of 10 mass% or more.

[27] A method for lowering a purine content in a processed food, the method including adding an additive for a processed food having xanthine oxidase activity to convert xanthine into uric acid, thereby lowering a content of purines, in a production process of a processed food.

[28] A method for lowering a purine content in a processed food, the method including adding an additive for a processed food having xanthine oxidase activity and an additive for a processed food having uricase activity to convert xanthine into uric acid and further convert uric acid into allantoin, thereby lowering a content of purines, in a production process of a processed food.

[29] The method for lowering a purine content in a processed food according to [27] or [28], wherein the processed food is a beer-taste beverage.

Advantageous Effects of Invention

The processed food according to a preferred embodiment of the present invention can be a processed food with a lowered content of purines.

Description of Embodiments

For numerical ranges described in the present specification, any combination of upper and lower limits is possible. For example, a numerical range of "preferably from 30 to 100, more preferably from 40 to 80" also includes a range of "from 30 to 80" and a range of "from 40 to 100" in the numerical range described in the present specification. For example, the numerical range of "preferably 30 or more, and more preferably 40 or more, and preferably 100 or less, and more preferably 80 or less" also includes a range of "from 30 to 80" and a range of "from 40 to 100" in the numerical range described in the present specification.

As a numerical range described in the present specification, for example, a description of "from 60 to 100" means a range "60 or more (60 or more than 60) and 100 or less (100 or less than 100)".

1. Processed food

A processed food according to an embodiment of the present invention is a food obtained by applying a certain processing to a food material, and examples include processed foods belonging to middle classifications 72 to 76 in Japan Standard Commodity Classification revised in June 1990, with the exception of ice and manufactured tobacco belonging to middle classification 76.

Examples of a specific processed food according to an embodiment of the present invention include processed vegetable products (such as canned vegetables, bottled vegetables, processed tomato products, processed mushroom products, salt-preserved vegetables, pickled vegetables, frozen vegetable food, dried vegetables, and vegetables boiled in soy sauce), processed fruit products (such as canned fruits, bottled fruits, fruit beverage raw materials, jam, marmalade, fruit butter, pickled fruits, dried fruits, and frozen fruit food), tea products, coffee products, cocoa products, spices, noodles, breads, confectionery, cooked legume products (such as sweet bean paste products, boiled legume products, tofu, deep-fried tofu products, tofu skin, freeze dried tofu, fermented soy beans, roasted soybean flour, soy milk products, peanut products, and roasted beans), konjac jelly, meat products (such as processed meat products, canned game meat, bottled game meat, and frozen game meat food), dairy products (such as liquid milk, cream, condensed milk, concentrated milk, powdered milk, skimmed milk, skimmed concentrated milk, fermented milk, lactic acid bacteria beverages, butter, cheese, curd, whey, ice creams, lactose, casein preparations, and food made from milk or the like as a main raw material), processed egg products (such as liquid chicken egg, powdered chicken egg, processed frozen chicken egg products, processed products of duck eggs, and processed products of quail eggs), processed fish and shellfish (such as dried fish and shellfish, salted and dried fish and shellfish, boiled dried fish and shellfish, salt-preserved fish and shellfish, canned fish and shellfish, frozen fish and shellfish, frozen aquatic food, fish paste products, smoked fish and shellfish, dried and fermented fish, dried fermented fish flakes, salted and fermented fish and guts, aquatic products boiled in soy sauce, pickled aquatic products, and seasoned processed aquatic products), processed seaweeds (such as processed kelp products, processed laver products, processed wakame seaweed (Undaria pinnatifida) products, processed hiziki (Hizikia fusiformis), agar, salt-preserved seaweeds, frozen seaweed food, and dried seaweeds for producing agar), seasonings (such as common salt, miso, soy sauce, sauce, vinegar, Wafu Dashi no Moto (powdered Japanese soup stock), consommé cubes, umami seasonings, flavor seasonings, curry roux, soup for noodles or the like, and sauce for grilled meat), soup, dried soup, edible oils and/or fats (such as edible vegetable oils and/or fats, edible animal oils and fats, margarine, shortening, and processed oil and/or fat food), cooked food (such as cooked frozen food, chilled food, retort pouch food, boiled food, grilled food, deep-fried food, steamed food, dressed food, and cooked rice), yeast, baking powder, animal protein, seasoning vegetable protein, malts (such as malt, malt extract, and malt syrup), aromatic syrup extract, aromatic syrup concentrate, aromatic syrup paste, aromatic syrup powder, powdered juice, drinking water, sparkling soft drinks (such as carbonated water; cola drinks; carbonated drinks containing juice, such as fruit juice or vegetable juice; juice-flavored carbonated drinks (such as fruit juice-flavored carbonated drinks and vegetable juice-flavored carbonated drinks); fruit-colored carbonated drinks; carbonated drinks containing milk or the like, and non-alcoholic beer-taste beverages), non-sparkling soft drinks (such as fruit drinks, vegetable drinks, juice drinks of fruit juice or vegetable juice, juice-flavored drinks such as fruit juice-flavored drinks and vegetable juice-flavored drinks, fruit pulp drinks, flavored drinks, flavored syrups, acid drinks made from milk or a dairy product, coffee drinks, caffeine drinks, tea-based drinks, and drinks of soy milk or the like), alcoholic beverages (such as beer-taste beverages, liqueurs, wine (grape wine), fruit liquor, refined sake, low-malt beer, unrefined sake, distilled liquor, hard liquor, shochu (a distilled spirit made from an ingredient, such as sweet potato, barley, buckwheat, or sugar cane), sake, shaoxing wine (Chinese rice wine), whiskey, brandy, rum, gin, vodka, tequila, makgeolli (Korean unrefined wine made from rice, wheat, or the like), and shochu highball).

The processed food according to an embodiment of the present invention may be a fermented food produced through a fermentation step or may be a non-fermented food produced without undergoing a fermentation step.

The processed food according to an embodiment of the present invention may be a processed food containing a functional component or may be a processed food with a limited content of a functional component.

In the present specification, the functional component refers to an organic or inorganic component that is generally not a nutrient essential for vital activity but is expected to have various functional effects, such as a health maintenance effect, an antioxidant effect, and an alleviating effect on the action of hazardous substances, such as carcinogens. These components are incorporated into the processed food and can be supplied as nutritional components that serve the regulatory functions of the living body.

The content of the functional component contained in the processed food with a limited content of the functional component may be less than 1 mass%, less than 7500 mass ppm, less than 5000 mass ppm, less than 2500 mass ppm, less than 1000 mass ppm, less than 750 mass ppm, less than 500 mass ppm, less than 250 mass ppm, less than 100 mass ppm, less than 75 mass ppm, less than 50 mass ppm, less than 25 mass ppm, less than 10 mass ppm, less than 1.0 mass ppm, less than 100 mass ppb, less than 10 mass ppb, less than 1 mass ppb, or less than 0.1 mass ppb based on the total amount (100 mass%) of the processed food.

The processed food according to an embodiment of the present invention includes an embodiment in which the

processed food is a beverage.

The beverage according to an embodiment of the present invention may be a fermented beverage produced through a fermentation step using yeast or may be a non-fermented beverage.

The beverage according to an embodiment of the present invention may be a sweetened beverage or may be a non-sweetened beverage.

The beverage according to an embodiment of the present invention may be an extracted beverage, such as tea or coffee, or may be a non-extracted beverage.

The beverage according to an embodiment of the present invention may be a milk beverage containing raw milk, powdered milk, or the like, or may be a non-milk beverage.

The beverage according to an embodiment of the present invention may be an alcoholic beverage with an alcoholic strength of 1.0 (v/v)% or more or may be a non-alcoholic beverage with an alcoholic strength of less than 1.0 (v/v)%.

The alcoholic strength of the alcoholic beverage according to an embodiment of the present invention may be 1.0 (v/v)% or more, 1.2 (v/v)% or more, 1.4 (v/v)% or more, 1.6 (v/v)% or more, 1.8 (v/v)% or more, 2.0 (v/v)% or more, 2.2 (v/v)% or more, 2.4 (v/v)% or more, 2.6 (v/v)% or more, 2.8 (v/v)% or more, 3.0 (v/v)% or more, 3.2 (v/v)% or more, 3.4 (v/v)% or more, 3.6 (v/v)% or more, 3.8 (v/v)% or more, 4.0 (v/v)% or more, 4.2 (v/v)% or more, 4.4 (v/v)% or more, 4.6 (v/v)% or more, 4.8 (v/v)% or more, 5.0 (v/v)% or more, 5.2 (v/v)% or more, 5.4 (v/v)% or more, 5.6 (v/v)% or more, 5.8 (v/v)% or more, 6.0 (v/v)% or more, 6.2 (v/v)% or more, 6.4 (v/v)% or more, 6.6 (v/v)% or more, 6.8 (v/v)% or more, 7.0 (v/v)% or more, 7.2 (v/v)% or more, 7.4 (v/v)% or more, 7.6 (v/v)% or more, 7.8 (v/v)% or more, 8.0 (v/v)% or more, 8.2 (v/v)% or more, 8.4 (v/v)% or more, 8.6 (v/v)% or more, 8.8 (v/v)% or more, 9.0 (v/v)% or more, 9.2 (v/v)% or more, 9.4 (v/v)% or more, 9.6 (v/v)% or more, 9.8 (v/v)% or more, 10.0 (v/v)% or more, 11.0 (v/v)% or more, 12.0 (v/v)% or more, 13.0 (v/v)% or more, 14.0 (v/v)% or more, 15.0 (v/v)% or more, 16.0 (v/v)% or more, 17.0 (v/v)% or more, 18.0 (v/v)% or more, 19.0 (v/v)% or more, or 20.0 (v/v)% or more.

The alcoholic strength of the alcoholic beverage according to an embodiment of the present invention may be 99.0 (v/v)% or less, 90.0 (v/v)% or less, 80.0 (v/v)% or less, 70.0 (v/v)% or less, 60.0 (v/v)% or less, 50.0 (v/v)% or less, 40.0 (v/v)% or less, 30.0 (v/v)% or less, 29.0 (v/v)% or less, 28.0 (v/v)% or less, 27.0 (v/v)% or less, 26.0 (v/v)% or less, 25.0 (v/v)% or less, 24.0 (v/v)% or less, 23.0 (v/v)% or less, 22.0 (v/v)% or less, 21.0 (v/v)% or less, 20.0 (v/v)% or less, 19.8 (v/v)% or less, 19.6 (v/v)% or less, 19.4 (v/v)% or less, 19.2 (v/v)% or less, 19.0 (v/v)% or less, 18.8 (v/v)% or less, 18.6 (v/v)% or less, 18.4 (v/v)% or less, 18.2 (v/v)% or less, 18.0 (v/v)% or less, 17.8 (v/v)% or less, 17.6 (v/v)% or less, 17.4 (v/v)% or less, 17.2 (v/v)% or less, 17.0 (v/v)% or less, 16.8 (v/v)% or less, 16.6 (v/v)% or less, 16.4 (v/v)% or less, 16.2 (v/v)% or less, 16.0 (v/v)% or less, 15.8 (v/v)% or less, 15.6 (v/v)% or less, 15.4 (v/v)% or less, 15.2 (v/v)% or less, 15.0 (v/v)% or less, 14.8 (v/v)% or less, 14.6 (v/v)% or less, 14.4 (v/v)% or less, 14.2 (v/v)% or less, 14.0 (v/v)% or less, 13.8 (v/v)% or less, 13.6 (v/v)% or less, 13.4 (v/v)% or less, 13.2 (v/v)% or less, 13.0 (v/v)% or less, 12.8 (v/v)% or less, 12.6 (v/v)% or less, 12.4 (v/v)% or less, 12.2 (v/v)% or less, 12.0 (v/v)% or less, 11.8 (v/v)% or less, 11.6 (v/v)% or less, 11.4 (v/v)% or less, 11.2 (v/v)% or less, 11.0 (v/v)% or less, 10.8 (v/v)% or less, 10.6 (v/v)% or less, 10.4 (v/v)% or less, 10.2 (v/v)% or less, 10.0 (v/v)% or less, 9.8 (v/v)% or less, 9.6 (v/v)% or less, 9.4 (v/v)% or less, 9.2 (v/v)% or less, 9.0 (v/v)% or less, 8.8 (v/v)% or less, 8.6 (v/v)% or less, 8.4 (v/v)% or less, 8.2 (v/v)% or less, 8.0 (v/v)% or less, 7.8 (v/v)% or less, 7.6 (v/v)% or less, 7.4 (v/v)% or less, 7.2 (v/v)% or less, 7.0 (v/v)% or less, 6.8 (v/v)% or less, 6.6 (v/v)% or less, 6.4 (v/v)% or less, 6.2 (v/v)% or less, 6.0 (v/v)% or less, 5.8 (v/v)% or less, 5.6 (v/v)% or less, 5.4 (v/v)% or less, 5.2 (v/v)% or less, 5.0 (v/v)% or less, 4.8 (v/v)% or less, 4.6 (v/v)% or less, 4.4 (v/v)% or less, 4.2 (v/v)% or less, 4.0 (v/v)% or less, 3.8 (v/v)% or less, 3.6 (v/v)% or less, 3.4 (v/v)% or less, 3.2 (v/v)% or less, 3.0 (v/v)% or less, 2.8 (v/v)% or less, 2.6 (v/v)% or less, 2.4 (v/v)% or less, 2.2 (v/v)% or less, 2.0 (v/v)% or less, 1.8 (v/v)% or less, 1.6 (v/v)% or less, 1.4 (v/v)% or less, or 1.2 (v/v)% or less.

The alcoholic strength of the non-alcoholic beverage according to an embodiment of the present invention may be less than 1.0 (v/v)%, 0.9 (v/v)% or less, 0.8 (v/v)% or less, 0.7 (v/v)% or less, 0.6 (v/v)% or less, 0.5 (v/v)% or less, 0.4 (v/v)% or less, 0.3 (v/v)% or less, 0.2 (v/v)% or less, 0.1 (v/v)% or less, 0.05 (v/v)% or less, 0.01 (v/v)% or less, 0.0050 (v/v)% or less, or 0.0025 (v/v)% or less, or the non-alcoholic beverage may be a non-alcoholic beverage substantially free of alcohol.

The "non-alcoholic beverage substantially free of alcohol" does not exclude beverages containing a trace amount of alcohol that is undetectable. The non-alcoholic beverage also includes beverages whose alcoholic strength is 0 (v/v)% when the value is rounded off to the integer, beverages whose alcoholic strength is 0.0 (v/v)% when the value is rounded off to the first decimal place, and beverages whose alcoholic strength is 0.00 (v/v)% when the value is rounded off to the second decimal place.

In addition, the non-alcoholic beverage according to an embodiment of the present invention may be a beverage with an alcoholic strength of 0.1 (v/v)% or more and less than 1.0 (v/v)%, 0.2 (v/v)% or more and less than 1.0 (v/v)%, 0.3 (v/v)% or more and less than 1.0 (v/v)%, 0.4 (v/v)% or more and less than 1.0 (v/v)%, 0.5 (v/v)% or more and less than 1.0 (v/v)%, 0.6 (v/v)% or more and less than 1.0 (v/v)%, 0.7 (v/v)% or more and less than 1.0 (v/v)%, 0.8 (v/v)% or more and less than 1.0 (v/v)%, or 0.9 (v/v)% or more and less than 1.0 (v/v)%.

The non-alcoholic beverage may be a non-sweet beverage, such as a non-alcoholic beer-taste beverage, or may be a sweet beverage, such as a soft drink.

In the present specification, the "alcoholic strength" or "alcohol content" refers to a content of ethanol and does not include aliphatic alcohols.

In addition, in the present specification, the "alcoholic strength" or "alcohol content" is expressed as a volume/volume percentage ((v/v)%) and can be measured by any known method, for example, with a vibrating densimeter. Specifically, the alcoholic strength can be determined by preparing a sample from the beverage by removing carbonic acid gas through filtration or with ultrasonication, distilling the sample over direct heat, measuring the density of the resulting distillate at 15°C, and converting the density using "Table 2. Conversion Table of Alcohol Content, Density (15°C), and Specific Gravity (15/15°C)", which is an attached table of the Official Analysis Method of the National Tax Agency (2007 National Tax Agency Order No. 6, revised on June 22, 2007). In addition, a non-alcoholic beverage with an alcoholic strength of less than 1.0 (v/v)% can also be measured using a commercially available alcohol measuring instrument or gas chromatography.

The processed food according to an embodiment of the present invention may be a processed food containing a high-intensity sweetener or may be a processed food with a limited content of a high-intensity sweetener.

The content of the high-intensity sweetener contained in the processed food with a limited content of the high-intensity sweetener may be less than 10.0 parts by mass, less than 5.0 parts by mass, less than 2.0 parts by mass, less than 1.0 parts by mass, less than 0.1 parts by mass, less than 0.05 parts by mass, less than 0.01 parts by mass, less than 0.001 parts by mass, or less than 0.0001 parts by mass relative to 100 parts by mass of the total amount of uric acid contained in the processed food.

In addition, the content of the high-intensity sweetener contained in the processed food with a limited content of the high-intensity sweetener may be less than 1000 mass ppm, less than 100 mass ppm, less than 75 mass ppm, less than 50 mass ppm, less than 40 mass ppm, less than 30 mass ppm, less than 25 mass ppm, less than 20 mass ppm, less than 15 mass ppm, less than 10 mass ppm, less than 1 mass ppm, less than 100 mass ppb, less than 10 mass ppb, less than 1 mass ppb, less than 100 mass ppt, less than 10 mass ppt, or less than 1 mass ppt based on the total amount (100 mass%) of the processed food.

Examples of the high-intensity sweetener include both natural high-intensity sweeteners and artificial high-intensity sweeteners, for example, rebaudioside A, rebaudioside B, rebaudioside C, rebaudioside D, rebaudioside E, rebaudioside F, dulcoside A, dulcoside B, rubusoside, stevia, stevioside, mogroside IV, mogroside V, monk fruit (Siraitia grosvenorii) sweetener, siamenoside, monatin and its salts (monatin SS, monatin RR, monatin RS, monatin SR), curculin, glycyrrhizinic acid and its salts, thaumatin, monellin, mabinlin, brazzein, hernandulcin, phyllodulcin, glycyphyllin, phlorizin, trilobatin, baiyunoside, osladin, erythritol, polypodoside A, pterocaryoside A, pterocaryoside B, mucrodioside, phlomisoside I, periandrin I, abrusoside A, and cyclocarioside I.

The processed food according to an embodiment of the present invention may be a processed food containing rebaudioside A or may be a processed food with a limited content of rebaudioside A.

The content of rebaudioside A contained in the processed food with a limited content of rebaudioside A may be less than 10.0 parts by mass, less than 5.0 parts by mass, less than 2.0 parts by mass, less than 1.0 parts by mass, less than 0.1 parts by mass, less than 0.05 parts by mass, less than 0.01 parts by mass, less than 0.001 parts by mass, or less than 0.0001 parts by mass relative to 100 parts by mass of the total amount of uric acid contained in the processed food.

In addition, the content of rebaudioside A contained in the processed food with a limited content of rebaudioside A may be less than 1000 mass ppm, less than 100 mass ppm, less than 10 mass ppm, less than 1 mass ppm, less than 100 mass ppb, less than 10 mass ppb, less than 1 mass ppb, less than 100 mass ppt, less than 10 mass ppt, or less than 1 mass ppt based on the total amount (100 mass%) of the processed food.

The processed food according to an embodiment of the present invention may be a processed food containing erythritol or may be a processed food with a limited content of erythritol.

The content of erythritol contained in the processed food with a limited content of erythritol may be less than 10.0 parts by mass, less than 5.0 parts by mass, less than 2.0 parts by mass, less than 1.0 parts by mass, less than 0.1 parts by mass, less than 0.05 parts by mass, less than 0.01 parts by mass, less than 0.001 parts by mass, or less than 0.0001 parts by mass relative to 100 parts by mass of the total amount of uric acid contained in the processed food.

In addition, the content of erythritol contained in the processed food with a limited content of erythritol may be less than 1000 mass ppm, less than 100 mass ppm, less than 10 mass ppm, less than 1 mass ppm, less than 100 mass ppb, less than 10 mass ppb, less than 1 mass ppb, less than 100 mass ppt, less than 10 mass ppt, or less than 1 mass ppt based on the total amount (100 mass%) of the processed food.

The raw material of the processed food according to an embodiment of the present invention is not particularly limited, and even a raw material containing a large amount of purines can be used.

The raw material containing purines used in an embodiment of the present invention is not particularly limited, and examples include grains, such as barley and the like (such as barley, wheat, rye, wild oats, oats, adlay, and oats), rice (such as white rice and brown rice), corn, kaoliang, potatoes, legumes (such as soybeans and peas), buckwheat,

sorghum, foxtail millet, and Japanese millet; vegetables (such as spinach, cauliflower, broccoli, bean sprouts, white radish sprouts, okra, fava beans, and green peas); mushrooms (such as maitake mushroom, shiitake mushroom, nameko mushroom, enoki mushroom, button mushroom, and oyster mushroom), legumes (soybeans, adzuki beans, peanuts, fava beans, and green soybeans), bean products (such as tofu, soy milk, miso, soy sauce, okara (soy pulp), and natto (fermented soybeans)), pork, chicken, beef, mutton, whale meat, meat products (ham, sausage, bacon, salami, corned beef, and liver paste), fish meat (such as skipjack tuna, tuna, chicken grunt, Japanese Spanish mackerel, Japanese whiting, flying fish, rainbow trout, red barracuda, red sea bream, left-eyed flounder, herring, horse mackerel, greenling, mackerel, tilefish, yellowtail, salmon, ayu (sweet fish), Japanese sea bass, rockfish, sardine, saury, carp, right-eyed flounder, loach, Japanese surfsmelt, eel, Japanese sandfish, and anglerfish), fish roe or fish roe products (cod roe, spicy cod roe, sujiko (salmon roe in the sac), herring roe, and ikura (salmon roe)), squid, octopus, shrimp, krill, crab, shellfish (such as Japanese littleneck clam, oyster, clam, and scallop), dried fish, processed fish products (such as fish meatballs, chikuwa (grilled tube-shaped fish paste), kamaboko (steamed fish paste), naruto (a boiled fish paste with a pink spiral pattern), fish sausage, and satsuma-age (fried fish paste)), almonds, green juice powder, yeast, chlorella, euglena, and royal jelly.

With the use of these raw materials containing purines in production of processed foods, processed foods with improved flavor are produced, but the processed foods also contain purines.

In the present specification, the "purines" refers to compounds having a purine nucleus structure, and specific examples include purine bases (adenine, guanine, xanthine, and hypoxanthine), purine nucleosides (adenosine, guanosine, and inosine), purine nucleotides (adenylic acid, guanylic acid, and inosinic acid), and low-molecular-weight or high-molecular-weight nucleic acids (oligonucleotides and polynucleotides).

A processed food according to an embodiment of the present invention is obtained by focusing on non-assimilable xanthine in purines and lowering the content of xanthine.

For example, in the production process of a processed food involving a fermentation step, a yeast-assimilable purine can be reduced by the fermentation step using yeast. Adenosine and guanosine, which are yeast-non-assimilable purines, can be converted into yeast-assimilable purines by enzymatic treatment with purine nucleosidase, but at the same time, xanthine, which is a non-assimilable purine, can also be produced. Thus, the processed food according to an embodiment of the present invention is a processed food with a lowered content of purines obtained by reducing the content of non-assimilable xanthine.

The content of xanthine in the processed food according to an embodiment of the present invention is preferably 2.2 μg/g or less, 2.00 μg/g or less, 1.90 μg/g or less, 1.80 μg/g or less, 1.70 μg/g or less, 1.60 μg/g or less, 1.50 μg/g or less, 1.40 μg/g or less, 1.30 μg/g or less, 1.20 μg/g or less, 1.10 μg/g or less, 1.00 μg/g or less, 0.90 μg/g or less, 0.80 μg/g or less, 0.70 μg/g or less, 0.60 μg/g or less, 0.50 μg/g or less, 0.40 μg/g or less, 0.30 μg/g or less, 0.20 μg/g or less, or 0.10 μg/g or less, and may be 0.00 μg/g or more, more than 0.00 μg/g, 0.10 μg/g or more, 0.20 μg/g or more, 0.30 μg/g or more, 0.40 μg/g or more, 0.50 μg/g or more, 0.60 μg/g or more, 0.70 μg/g or more, 0.80 μg/g or more, 0.90 μg/g or more, 1.00 μg/g or more, 1.10 μg/g or more, 1.20 μg/g or more, 1.30 μg/g or more, 1.40 μg/g or more, 1.50 μg/g or more, 1.60 μg/g or more, 1.70 μg/g or more, 1.80 μg/g or more, or 1.90 μg/g or more.

The total content of adenine and guanine in the processed food according to an embodiment of the present invention is preferably 22.0 μg/g or less, more preferably 20.0 μg/g or less, even more preferably less than 20.0 μg/g, still more preferably 19.0 μg/g or less, particularly preferably 18.0 μg/g or less, and further may be 17.0 μg/g or less, 16.5 μg/g or less, 16.0 μg/g or less, 15.5 μg/g or less, 15.0 μg/g or less, 14.5 μg/g or less, 14.0 μg/g or less, 13.5 μg/g or less, 13.0 μg/g or less, 12.5 μg/g or less, 12.0 μg/g or less, 11.5 μg/g or less, 11.0 μg/g or less, 10.5 μg/g or less, 10.0 μg/g or less, less than 10.0 μg/g, 9.5 μg/g or less, 9.0 μg/g or less, 8.5 μg/g or less, 8.0 μg/g or less, 7.5 μg/g or less, 7.0 μg/g or less, 6.5 μg/g or less, 6.0 μg/g or less, 5.5 μg/g or less, 5.0 μg/g or less, less than 5.0 μg/g, 4.5 μg/g or less, 4.0 μg/g or less, 3.5 μg/g or less, 3.0 μg/g or less, 2.5 μg/g or less, 2.2 μg/g or less, 2.0 μg/g or less, 1.7 μg/g or less, 1.5 μg/g or less, 1.2 μg/g or less, or 1.0 μg/g or less, and may be more than 0.00 μg/g, 0.01 μg/g or more, 0.05 μg/g or more, 0.10 μg/g or more, 0.20 μg/g or more, 0.30 μg/g or more, 0.40 μg/g or more, 0.50 μg/g or more, 0.60 μg/g or more, 0.70 μg/g or more, 0.80 μg/g or more, 0.90 μg/g or more, 1.00 μg/g or more, 1.10 μg/g or more, 1.20 μg/g or more, 1.30 μg/g or more, 1.40 μg/g or more, 1.50 μg/g or more, 1.60 μg/g or more, 1.70 μg/g or more, 1.80 μg/g or more, or 1.90 μg/g or more.

The content of total purines in the processed food according to an embodiment of the present invention is preferably less than 25.0 μg/g, 22.0 μg/g or less, 21.9 μg/g or less, 21.8 μg/g or less, 21.7 μg/g or less, 21.6 μg/g or less, 21.5 μg/g or less, 21.4 μg/g or less, 21.3 μg/g or less, 21.2 μg/g or less, 21.1 μg/g or less, 21.0 μg/g or less, 20.9 μg/g or less, 20.8 μg/g or less, 20.7 μg/g or less, 20.6 μg/g or less, 20.5 μg/g or less, 20.4 μg/g or less, 20.3 μg/g or less, 20.2 μg/g or less, 20.1 μg/g or less, 20.0 μg/g or less, 19.9 μg/g or less, 19.8 μg/g or less, 19.7 μg/g or less, 19.6 μg/g or less, 19.5 μg/g or less, 19.4 μg/g or less, 19.3 μg/g or less, 19.2 μg/g or less, 19.1 μg/g or less, 19.0 μg/g or less, 18.9 μg/g or less, 18.8 μg/g or less, 18.7 μg/g or less, 18.6 μg/g or less, 18.5 μg/g or less, 18.4 μg/g or less, 18.3 μg/g or less, 18.2 μg/g or less, 18.1 μg/g or less, 18.0 μg/g or less, 17.9 μg/g or less, 17.8 μg/g or less, 17.7 μg/g or less, 17.6 μg/g or less, 17.5 μg/g or less, 17.4 μg/g or less, 17.3 μg/g or less, 17.2 μg/g or less, 17.1 μg/g or less, 17.0 μg/g or less, 16.9 μg/g or less, 16.8 μg/g or less, 16.7 μg/g or less, 16.6 μg/g or less, 16.5 μg/g or less, 16.4 μg/g or less, 16.3 μg/g or less, 16.2 μg/g or less,

16.1 μg/g or less, 16.0 μg/g or less, 15.9 μg/g or less, 15.8 μg/g or less, 15.7 μg/g or less, 15.6 μg/g or less, 15.5 μg/g or less, 15.4 μg/g or less, 15.3 μg/g or less, 15.2 μg/g or less, 15.1 μg/g or less, 15.0 μg/g or less, 14.9 μg/g or less, 14.8 μg/g or less, 14.7 μg/g or less, 14.6 μg/g or less, 14.5 μg/g or less, 14.4 μg/g or less, 14.3 μg/g or less, 14.2 μg/g or less, 14.1 μg/g or less, 14.0 μg/g or less, 13.9 μg/g or less, 13.8 μg/g or less, 13.7 μg/g or less, 13.6 μg/g or less, 13.5 μg/g or less, 13.4 μg/g or less, 13.3 μg/g or less, 13.2 μg/g or less, 13.1 μg/g or less, 13.0 μg/g or less, 12.9 μg/g or less, 12.8 μg/g or less, 12.7 μg/g or less, 12.6 μg/g or less, 12.5 μg/g or less, 12.4 μg/g or less, 12.3 μg/g or less, 12.2 μg/g or less, 12.1 μg/g or less, 12.0 μg/g or less, 11.9 μg/g or less, 11.8 μg/g or less, 11.7 μg/g or less, 11.6 μg/g or less, 11.5 μg/g or less, 11.4 μg/g or less, 11.3 μg/g or less, 11.2 μg/g or less, 11.1 μg/g or less, 11.0 μg/g or less, 10.9 μg/g or less, 10.8 μg/g or less, 10.7 μg/g or less, 10.6 μg/g or less, 10.5 μg/g or less, 10.4 μg/g or less, 10.3 μg/g or less, 10.2 μg/g or less, 10.1 μg/g or less, 10.0 μg/g or less, 9.9 μg/g or less, 9.8 μg/g or less, 9.7 μg/g or less, 9.6 μg/g or less, 9.5 μg/g or less, 9.4 μg/g or less, 9.3 μg/g or less, 9.2 μg/g or less, 9.1 μg/g or less, 9.0 μg/g or less, 8.9 μg/g or less, 8.8 μg/g or less, 8.7 μg/g or less, 8.6 μg/g or less, 8.5 μg/g or less, 8.4 μg/g or less, 8.3 μg/g or less, 8.2 μg/g or less, 8.1 μg/g or less, 8.0 μg/g or less, 7.9 μg/g or less, 7.8 μg/g or less, 7.7 μg/g or less, 7.6 μg/g or less, 7.5 μg/g or less, 7.4 μg/g or less, 7.3 μg/g or less, 7.2 μg/g or less, 7.1 μg/g or less, 7.0 μg/g or less, 6.9 μg/g or less, 6.8 μg/g or less, 6.7 μg/g or less, 6.6 μg/g or less, 6.5 μg/g or less, 6.4 μg/g or less, 6.3 μg/g or less, 6.2 μg/g or less, 6.1 μg/g or less, 6.0 μg/g or less, 5.9 μg/g or less, 5.8 μg/g or less, 5.7 μg/g or less, 5.6 μg/g or less, 5.5 μg/g or less, 5.4 μg/g or less, 5.3 μg/g or less, 5.2 μg/g or less, 5.1 μg/g or less, 5.0 μg/g or less, 4.9 μg/g or less, 4.8 μg/g or less, 4.7 μg/g or less, 4.6 μg/g or less, 4.5 μg/g or less, 4.4 μg/g or less, 4.3 μg/g or less, 4.2 μg/g or less, 4.1 μg/g or less, 4.0 μg/g or less, 3.9 μg/g or less, 3.8 μg/g or less, 3.7 μg/g or less, 3.6 μg/g or less, 3.5 μg/g or less, 3.4 μg/g or less, 3.3 μg/g or less, 3.2 μg/g or less, 3.1 μg/g or less, 3.0 μg/g or less, 2.9 μg/g or less, 2.8 μg/g or less, 2.7 μg/g or less, 2.6 μg/g or less, 2.5 μg/g or less, 2.4 μg/g or less, 2.3 μg/g or less, 2.2 μg/g or less, 2.1 μg/g or less, 2.0 μg/g or less, 1.9 μg/g or less, 1.8 μg/g or less, 1.7 μg/g or less, 1.6 μg/g or less, 1.5 μg/g or less, 1.4 μg/g or less, 1.3 μg/g or less, 1.2 μg/g or less, 1.1 μg/g or less, 1.0 μg/g or less, 0.9 μg/g or less, 0.8 μg/g or less, 0.7 μg/g or less, 0.6 μg/g or less, 0.5 μg/g or less, 0.4 μg/g or less, 0.3 μg/g or less, or 0.2 μg/g or less.

The content of total purines according to an embodiment of the present invention is preferably more than 0.00 μg/g, 0.01 μg/g or more, 0.05 μg/g or more, 0.1 μg/g or more, 0.2 μg/g or more, 0.3 μg/g or more, 0.4 μg/g or more, 0.5 μg/g or more, 0.6 μg/g or more, 0.7 μg/g or more, 0.8 μg/g or more, 0.9 μg/g or more, 1.0 μg/g or more, 1.1 μg/g or more, 1.2 μg/g or more, 1.3 μg/g or more, 1.4 μg/g or more, 1.5 μg/g or more, 1.6 μg/g or more, 1.7 μg/g or more, 1.8 μg/g or more, 1.9 μg/g or more, 2.0 μg/g or more, 2.1 μg/g or more, 2.2 μg/g or more, 2.3 μg/g or more, 2.4 μg/g or more, 2.5 μg/g or more, 2.6 μg/g or more, 2.7 μg/g or more, 2.8 μg/g or more, 2.9 μg/g or more, 3.0 μg/g or more, 3.1 μg/g or more, 3.2 μg/g or more, 3.3 μg/g or more, 3.4 μg/g or more, 3.5 μg/g or more, 3.6 μg/g or more, 3.7 μg/g or more, 3.8 μg/g or more, 3.9 μg/g or more, 4.0 μg/g or more, 4.1 μg/g or more, 4.2 μg/g or more, 4.3 μg/g or more, 4.4 μg/g or more, 4.5 μg/g or more, 4.6 μg/g or more, 4.7 μg/g or more, 4.8 μg/g or more, 4.9 μg/g or more, 5.0 μg/g or more, 5.1 μg/g or more, 5.2 μg/g or more, 5.3 μg/g or more, 5.4 μg/g or more, 5.5 μg/g or more, 5.6 μg/g or more, 5.7 μg/g or more, 5.8 μg/g or more, 5.9 μg/g or more, 6.0 μg/g or more, 6.1 μg/g or more, 6.2 μg/g or more, 6.3 μg/g or more, 6.4 μg/g or more, 6.5 μg/g or more, 6.6 μg/g or more, 6.7 μg/g or more, 6.8 μg/g or more, 6.9 μg/g or more, 7.0 μg/g or more, 7.1 μg/g or more, 7.2 μg/g or more, 7.3 μg/g or more, 7.4 μg/g or more, 7.5 μg/g or more, 7.6 μg/g or more, 7.7 μg/g or more, 7.8 μg/g or more, 7.9 μg/g or more, 8.0 μg/g or more, 8.1 μg/g or more, 8.2 μg/g or more, 8.3 μg/g or more, 8.4 μg/g or more, 8.5 μg/g or more, 8.6 μg/g or more, 8.7 μg/g or more, 8.8 μg/g or more, 8.9 μg/g or more, 9.0 μg/g or more, 9.1 μg/g or more, 9.2 μg/g or more, 9.3 μg/g or more, 9.4 μg/g or more, 9.5 μg/g or more, 9.6 μg/g or more, 9.7 μg/g or more, 9.8 μg/g or more, 9.9 μg/g or more, 10.0 μg/g or more, 10.1 μg/g or more, 10.2 μg/g or more, 10.3 μg/g or more, 10.4 μg/g or more, 10.5 μg/g or more, 10.6 μg/g or more, 10.7 μg/g or more, 10.8 μg/g or more, 10.9 μg/g or more, 11.0 μg/g or more, 11.1 μg/g or more, 11.2 μg/g or more, 11.3 μg/g or more, 11.4 μg/g or more, 11.5 μg/g or more, 11.6 μg/g or more, 11.7 μg/g or more, 11.8 μg/g or more, 11.9 μg/g or more, 12.0 μg/g or more, 12.1 μg/g or more, 12.2 μg/g or more, 12.3 μg/g or more, 12.4 μg/g or more, 12.5 ng/g or more, 12.6 μg/g or more, 12.7 μg/g or more, 12.8 μg/g or more, 12.9 μg/g or more, 13.0 μg/g or more, 13.1 μg/g or more, 13.2 μg/g or more, 13.3 μg/g or more, 13.4 μg/g or more, 13.5 μg/g or more, 13.6 μg/g or more, 13.7 μg/g or more, 13.8 μg/g or more, 13.9 μg/g or more, 14.0 μg/g or more, 14.1 μg/g or more, 14.2 μg/g or more, 14.3 μg/g or more, 14.4 μg/g or more, 14.5 μg/g or more, 14.6 μg/g or more, 14.7 μg/g or more, 14.8 μg/g or more, 14.9 μg/g or more, 15.0 μg/g or more, 15.1 μg/g or more, 15.2 μg/g or more, 15.3 μg/g or more, 15.4 μg/g or more, 15.5 μg/g or more, 15.6 μg/g or more, 15.7 μg/g or more, 15.8 μg/g or more, 15.9 μg/g or more, 16.0 μg/g or more, 16.1 μg/g or more, 16.2 μg/g or more, 16.3 μg/g or more, 16.4 μg/g or more, 16.5 μg/g or more, 16.6 μg/g or more, 16.7 μg/g or more, 16.8 μg/g or more, 16.9 μg/g or more, 17.0 μg/g or more, 17.1 μg/g or more, 17.2 μg/g or more, 17.3 μg/g or more, 17.4 μg/g or more, 17.5 μg/g or more, 17.6 μg/g or more, 17.7 μg/g or more, 17.8 μg/g or more, 17.9 μg/g or more, 18.0 μg/g or more, 18.1 μg/g or more, 18.2 μg/g or more, 18.3 μg/g or more, 18.4 μg/g or more, 18.5 μg/g or more, 18.6 μg/g or more, 18.7 μg/g or more, 18.8 μg/g or more, 18.9 μg/g or more, 19.0 μg/g or more, 19.1 μg/g or more, 19.2 μg/g or more, 19.3 μg/g or more, 19.4 μg/g or more, 19.5 μg/g or more, 19.6 μg/g or more, 19.7 μg/g or more, 19.8 μg/g or more, 19.9 μg/g or more, 20.0 μg/g or more, 20.1 μg/g or more, 20.2 μg/g or more, 20.3 μg/g or more, 20.4 μg/g or more, 20.5 μg/g or more, 20.6 μg/g or more, 20.7 μg/g or more, 20.8 μg/g or more, 20.9 μg/g or more, 21.0 μg/g or more, 21.1 μg/g or more, 21.2 μg/g or more, 21.3 μg/g or more, 21.4 μg/g or more, 21.5 μg/g or more, 21.6 μg/g or more, 21.7 μg/g or more, 21.8 μg/g or more, or 21.9 μg/g or more.

In the present specification, the "content of total purines" means a total content of purine bases including a group of adenine, guanine, xanthine, and hypoxanthine.

In the present specification, the content of each purine such as xanthine, adenine, and guanine and the content of total purines can be measured by a detection method using LC-MS/MS ("Guide to Microanalysis of Purines in Alcoholic Beverages", Japan Food Research Laboratories, Internet (https://www.jfrl.or jp/storage/file/news vol4 no23.pdf, searched in August 2015)).

For the means to lower the content of purines in the processed food according to an embodiment of the present invention, for example, the following means (i) to (iii) are exemplified.

(i): A means to produce a processed food using an alternative raw material, such as a raw material containing no purines or a raw material with a low content of purines, in place of a purine-rich raw material.
(ii): A means to physically remove purines by performing such a treatment as addition of a purine adsorbent and/or membrane filtration, in a production process of a processed food.
(iii): A means including, when the processed food is a fermented processed food, degrading a yeast-non-assimilable purine, such as adenosine or guanosine, into an assimilable purine using an enzyme, such as purine nucleosidase, and lowering the assimilable purine content by fermentation.

For the means (i), the flavor of the alternative raw material is inferior to that of a purine-rich raw material, which may lead to a problem of deterioration in the flavor of the processed food produced.

In addition, a means to physically remove purines, such as the means (ii), is also likely to cause deterioration in the flavor of the processed food. For example, employing the means (ii) to remove purines in a beer-taste beverage can lower the content of flavor components (esters and alcohols) and the content of bittering components (such as iso-$\alpha$-acid and $\alpha$-acid) peculiar to beer. Furthermore, the means (ii) removes only a small amount of purines. Thus, using a large proportion of a purine-rich raw material would result in a processed food with a large amount of residual purines.

On the other hand, the means (iii) can suppress the problem of flavor deterioration of the processed food, which may occur in the means (i) and (ii). However, as described above, when purine nucleosidase, which is an enzyme effective for yeast-non-assimilable purines such as adenosine and guanosine, is used, adenine and guanine can be converted into assimilable purines, but at the same time, non-assimilable xanthine can also be produced.

Thus, in an embodiment of the present invention, it is preferable to lower the content of xanthine through a xanthine oxidase treatment using an additive for a processed food having xanthine oxidase activity, and it is more preferable to lower the content of xanthine by performing a purine nucleosidase treatment, and then performing a xanthine oxidase treatment.

Xanthine oxidase is one of xanthine oxidoreductase-type enzymes, which allows production of reactive oxygen species. Xanthine oxidase can catalyze the oxidation of xanthine to uric acid, and can catalyze the oxidation of hypoxanthine to xanthine and xanthine to uric acid. That is, xanthine and hypoxanthine are converted into uric acid by performing a xanthine oxidase treatment using an additive for a processed food having xanthine oxidase activity, and thus the content of xanthine can be lowered.

The processed food prepared to contain uric acid can prevent deterioration of characteristics (e.g., such as flavor and appearance) peculiar to each processed food and can be a processed food with improved stability of various characteristics.

Thus, the processed food according to an embodiment of the present invention may contain a certain amount or more of uric acid.

In the processed food according to an embodiment of the present invention, from the viewpoint of producing a processed food with improved stability of characteristics peculiar to each processed food, the content of uric acid may be 2.0 μg/g or more, 2.5 μg/g or more, 3.0 μg/g or more, 3.5 μg/g or more, 4.0 μg/g or more, 4.5 μg/g or more, 5.0 μg/g or more, 5.5 μg/g or more, 6.0 μg/g or more, 6.5 μg/g or more, 7.0 μg/g or more, 7.5 μg/g or more, 8.0 μg/g or more, 8.5 μg/g or more, 9.0 μg/g or more, 9.5 μg/g or more, 10.0 μg/g or more, 11.0 μg/g or more, 12.0 μg/g or more, 13.0 μg/g or more, 14.0 μg/g or more, 15.0 μg/g or more, 16.0 μg/g or more, 17.0 μg/g or more, 18.0 μg/g or more, 19.0 μg/g or more, or 20.0 μg/g or more, and may be 10000 μg/g or less, 9000 μg/g or less, 8000 μg/g or less, 7000 μg/g or less, 6000 μg/g or less, 5000 μg/g or less, 4500 μg/g or less, 4000 μg/g or less, 4500 μg/g or less, 3000 μg/g or less, 2500 μg/g or less, 2200 μg/g or less, 2000 μg/g or less, 1800 μg/g or less, 1600 μg/g or less, 1500 μg/g or less, 1300 μg/g or less, 1200 μg/g or less, 1100 ng/g or less, 1000 μg/g or less, 900 μg/g or less, 800 μg/g or less, 700 μg/g or less, 600 μg/g or less, 500 μg/g or less, 450 μg/g or less, 400 μg/g or less, 350 μg/g or less, 300 μg/g or less, 280 μg/g or less, 250 μg/g or less, 220 μg/g or less, 200 μg/g or less, 180 μg/g or less, 160 μg/g or less, 150 μg/g or less, 140 μg/g or less, 130 μg/g or less, 120 μg/g or less, 110 μg/g or less, 100 μg/g or less, 95 μg/g or less, 90 μg/g or less, 85 μg/g or less, 80 μg/g or less, 75 μg/g or less, 70 μg/g or less, 65 μg/g or less, 60 μg/g or less, 55 μg/g or less, 50 μg/g or less, 45 μg/g or less, 40 μg/g or less, 35 μg/g or less, 30 μg/g or less, 27 μg/g or less, 25 μg/g or less, or 22 μg/g or less.

In the present specification, "uric acid" refers to a compound represented by the following formula and can be

synthesized, for example, from an oxypurine, such as xanthine or hypoxanthine, by xanthine oxidase. In addition, the uric acid is distinguished from a uric acid produced as an end product of metabolism of purines which are one of the constituent components of nucleic acids (DNAs and RNAs) and ATP in the human body.

[Chem. 1]

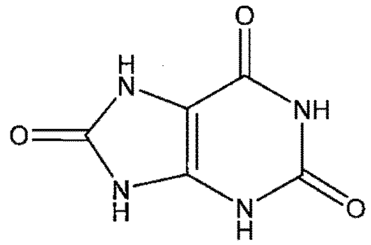

The content of uric acid means the mass of uric acid contained in 1 g of the processed food. When the processed food is a liquid, the content of uric acid can also be defined as the mass of uric acid contained in 1 mL of the liquid processed food when the density of the liquid is converted into 1.0 g/$cm^3$.

In the present specification, the content of uric acid can be measured by high-performance liquid chromatography (HPLC), for example, under the specific measurement conditions as follows.

- Measurement sample: A liquid prepared by diluting a processed food as a measurement target 10 times with distilled water and filtering the dilution through a membrane filter with a pore size of 0.2 μm. For a processed food containing a solid content, the processed food may be finely ground as necessary to facilitate dilution with distilled water.
- Measurement instrument: A high-performance liquid chromatograph Chromaster (available from Hitachi High-Technologies Corporation)
- Detector: 5420UV-VIS detector (available from Hitachi High-Technologies Corporation)
- Column: Inertsil ODS-4 (4.6 mm × 250 mm, 5 μm)
- Column temperature: 40°C
- Mobile phase: A = a 74 mM phosphate buffer solution (pH 2.2), B = methanol, A/B = 98/2 (volume ratio)
- Flow rate: 1.0 mL/min
- Injection volume: 50 μL
- Measurement wavelength: 284 nm

The content of uric acid in the processed food according to an embodiment of the present invention may be adjusted to a certain amount or less.

The content of uric acid in the processed food according to such an embodiment is preferably less than 2.0 μg/g, 1.9 μg/g or less, 1.8 μg/g or less, 1.7 μg/g or less, 1.6 μg/g or less, 1.5 μg/g or less, 1.4 μg/g or less, 1.3 μg/g or less, 1.2 μg/g or less, 1.1 μg/g or less, 1.0 μg/g or less, or less than 1.0 μg/g, and may be 0.000 μg/g or more, more than 0.000 μg/g, 0.001 μg/g or more, 0.003 μg/g or more, 0.005 μg/g or more, 0.007 μg/g or more, 0.01 μg/g or more, 0.03 μg/g or more, 0.05 μg/g or more, 0.07 μg/g or more, 0.10 μg/g or more, 0.15 μg/g or more, 0.20 μg/g or more, 0.25 μg/g or more, 0.30 μg/g or more, 0.35 μg/g or more, 0.40 μg/g or more, 0.45 μg/g or more, or 0.50 μg/g or more.

As the method for adjusting the content of uric acid in the processed food according to an embodiment of the present invention to a certain amount or less, a uricase treatment is performed in which an additive for a processed food having uricase activity is used to oxidize uric acid to degrade it into allantoin, and thus the uric acid content is reduced.

Thus, the processed food according to an embodiment of the present invention may be a processed food containing allantoin.

In the processed food according to an embodiment of the present invention, the content of allantoin may be 0.10 μg/g or more, 0.30 μg/g or more, 0.50 μg/g or more, 0.70 μg/g or more, 1.0 μg/g or more, 1.2 μg/g or more, 1.5 μg/g or more, 1.7 μg/g or more, 2.0 μg/g or more, 2.5 μg/g or more, 3.0 μg/g or more, 3.5 μg/g or more, 4.0 μg/g or more, 4.5 μg/g or more, 5.0 μg/g or more, 10.0 μg/g or more, 15.0 μg/g or more, 20.0 μg/g or more, 25.0 μg/g or more, 30.0 μg/g or more, 35.0 μg/g or more, 40.0 μg/g or more, 45.0 μg/g or more, 50.0 μg/g or more, 55.0 μg/g or more, 60.0 μg/g or more, 65.0 μg/g or more, 70.0 μg/g or more, 75.0 μg/g or more, 80.0 μg/g or more, 85.0 μg/g or more, 90.0 μg/g or more, 95.0 μg/g or more, 100.0 μg/g or more, 105.0 μg/g or more, 110.0 μg/g or more, 115.0 μg/g or more, 120.0 μg/g or more, 125.0 μg/g or more, 130.0 μg/g or more, 135.0 μg/g or more, 140.0 μg/g or more, 145.0 μg/g or more, 150.0 μg/g or more, 155.0 μg/g or more, 160.0 μg/g or more, 165.0 μg/g or more, 170.0 μg/g or more, 175.0 μg/g or more, 180.0 μg/g or more, 185.0 μg/g or more, 190.0 μg/g or more, or 195.0 μg/g or more, and may be 200.0 μg/g or less, 195.0 μg/g or less, 190.0 μg/g or less,

185.0 μg/g or less, 180.0 μg/g or less, 175.0 μg/g or less, 170.0 μg/g or less, 165.0 μg/g or less, 160.0 μg/g or less, 155.0 μg/g or less, 150.0 μg/g or less, 145.0 μg/g or less, 140.0 μg/g or less, 135.0 μg/g or less, 130.0 μg/g or less, 125.0 μg/g or less, 120.0 μg/g or less, 115.0 μg/g or less, 110.0 μg/g or less, 105.0 μg/g or less, 100.0 μg/g or less, 95.0 μg/g or less, 90.0 μg/g or less, 85.0 μg/g or less, 80.0 μg/g or less, 75.0 μg/g or less, 70.0 μg/g or less, 65.0 μg/g or less, 60.0 μg/g or less, 55.0 μg/g or less, 50.0 μg/g or less, 45.0 μg/g or less, 40.0 μg/g or less, 35.0 μg/g or less, 30.0 μg/g or less, 25.0 μg/g or less, 20.0 μg/g or less, 15.0 μg/g or less, or 10.0 μg/g or less.

Allantoin is converted into an ammonium ion.

Thus, in the processed food according to an embodiment of the present invention, the content of allantoin may be 9.0 μg/g or less, 8.0 μg/g or less, 7.0 μg/g or less, 6.0 μg/g or less, 5.0 μg/g or less, 4.0 μg/g or less, 3.0 μg/g or less, 2.0 μg/g or less, 1.0 μg/g or less, or less than 1.0 μg/g.

In the present specification, "allantoin" refers to a compound represented by the following formula and can be synthesized, for example, by oxidizing uric acid. In addition, the allantoin is distinguished from allantoin produced by oxidizing uric acid produced as an end product of metabolism of purines which are one of the constituent components of nucleic acids (DNAs and RNAs) and ATP in the human body.

[Chem. 2]

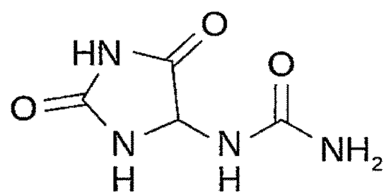

The content of allantoin means the mass of allantoin contained in 1 g of the processed food. In the case where the processed food is a liquid, the content of allantoin can also be defined as the mass of allantoin contained in 1 mL of the liquid processed food when the density of the liquid is converted into 1.0 g/cm$^3$.

In the present specification, the content of allantoin can be measured using LC-MS/MS, specifically under the following conditions.

· Measurement sample: A liquid prepared by diluting a processed food as a measurement target 10 times with distilled water and filtering the dilution through a membrane filter with a pore size of 0.2 μm. For a processed food containing a solid content, the processed food may be finely ground as necessary to facilitate dilution with distilled water.
· Measurement instrument: LCMS-8040 (available from Shimadzu Corporation)
· Column: Discovery HS F5-3 (15 cm × 2.1 mm, 3 μm)
· Column temperature: 40°C
· Mobile phase: A = a 0.03 (v/v)% formic acid aqueous solution, B = 100% acetonitrile, A/B = 90/10 (volume ratio)
· Flow rate: 0.3 mL/min
· Injection volume: 10 μL

More specific examples of the processed food according to an embodiment of the present invention include processed foods satisfying one or more of the following requirements (I), (II), and (III).

· Requirement (I): having a xanthine/pyroglutamic acid ratio between a content of xanthine (unit: μg/g) and a content of pyroglutamic acid (unit: μg/g) of 0.0200 or less, and
having a content of pyroglutamic acid of 40 μg/g or more.
· Requirement (II): containing at least one component (X) selected from the group consisting of a protein having had xanthine oxidase activity and a component derived from the protein.
· Requirement (III): containing at least one component (X) selected from the group consisting of a protein having had xanthine oxidase activity and a component derived from the protein, and at least one component (U) selected from the group consisting of a protein having had uricase activity and a component derived from the protein.

Hereinafter, the processed food according to a first embodiment of the present invention satisfying the requirement (I) is also referred to as "processed food (I)", the processed food according to a second embodiment of the present invention satisfying the requirement (II) is also referred to as "processed food (II)", and the processed food according to a third embodiment of the present invention satisfying the requirement (III) is also referred to as "processed food (III)".

In the present specification, the "processed food according to an embodiment of the present invention" includes all the embodiments of processed foods (I) to (III). Thus, the requirements defined as "the processed food according to an embodiment of the present invention" described above or below also apply to the processed foods (I) to (III).

The processed food according to an embodiment of the present invention is preferably a processed food satisfying both the requirements (I) and (II) and falling under both the processed food (I) and (II), or a processed food satisfying both the requirements (I) and (III) and falling under both the processed food (I) and (III).

1.1. Processed food (I)

The processed food (I) as an embodiment of the present invention has a xanthine/pyroglutamic acid ratio between a xanthine content (unit: μg/g) and a pyroglutamic acid content (unit: μg/g) of 0.0200 or less. Pyroglutamic acid is a component capable of improving the taste of the processed food, and a higher content of pyroglutamic acid results in more excellent taste of the processed food.

In general, for processed foods containing a large amount of pyroglutamic acid (for example, processed malt products such as fermented malt beverages), raw materials with a large content of purines are often used. To produce a processed food with a low content of purines, the processed food is produced by reducing the usage amount of a raw material having a large amount of purines, such as malt. However, when the amount of such a raw material is reduced, the content of pyroglutamic acid is also lowered, and foods having an insufficient taste are likely to be obtained.

On the other hand, in the processed food (I) as an embodiment of the present invention, the xanthine/pyroglutamic acid ratio is adjusted to 0.0200 or less, and the content of pyroglutamic acid is adjusted to 40 μg/g or more. Thus, the processed food can have an excellent taste and a lowered content of purines.

In the processed food (I) according to an embodiment of the present invention, from the viewpoint of producing a processed food with further improved taste and a lowered content of purines, the xanthine/pyroglutamic acid ratio is preferably 0.0190 or less, 0.0180 or less, 0.0170 or less, 0.0160 or less, 0.0150 or less, 0.0140 or less, 0.0130 or less, 0.0120 or less, 0.0110 or less, 0.0100 or less, 0.0090 or less, 0.0085 or less, 0.0080 or less, 0.0075 or less, 0.0070 or less, 0.0065 or less, 0.0060 or less, 0.0055 or less, 0.0050 or less, 0.0045 or less, 0.0040 or less, 0.0035 or less, 0.0030 or less, 0.0025 or less, 0.0020 or less, 0.0015 or less, or 0.0010 or less, and may be more than 0.0000, 0.0001 or more, 0.0003 or more, 0.0005 or more, 0.0007 or more, or 0.0010 or more.

The content of pyroglutamic acid in the processed food (I) according to an embodiment of the present invention is, from the viewpoint of producing a processed food with further improved taste, preferably 40 μg/g or more, 50 μg/g or more, 60 μg/g or more, 70 μg/g or more, 80 μg/g or more, 90 μg/g or more, 100 μg/g or more, 110 μg/g or more, 120 μg/g or more, 130 μg/g or more, 140 μg/g or more, 150 μg/g or more, 160 μg/g or more, 170 μg/g or more, 180 μg/g or more, 190 μg/g or more, 200 μg/g or more, 210 μg/g or more, 220 μg/g or more, 230 μg/g or more, 240 μg/g or more, 250 μg/g or more, 260 μg/g or more, 270 μg/g or more, 280 μg/g or more, 290 μg/g or more, 300 μg/g or more, 310 μg/g or more, 320 μg/g or more, 330 μg/g or more, 340 μg/g or more, 350 μg/g or more, 360 μg/g or more, 370 μg/g or more, 380 μg/g or more, 390 μg/g or more, 400 μg/g or more, 410 μg/g or more, 420 μg/g or more, 430 μg/g or more, 440 μg/g or more, 450 μg/g or more, 460 μg/g or more, 470 μg/g or more, 480 μg/g or more, 490 μg/g or more, 500 μg/g or more, 510 μg/g or more, 520 μg/g or more, 530 μg/g or more, 540 μg/g or more, 550 μg/g or more, 560 μg/g or more, 570 μg/g or more, 580 μg/g or more, 590 μg/g or more, 600 μg/g or more, 610 μg/g or more, 620 μg/g or more, 630 μg/g or more, 640 ng/g or more, 650 μg/g or more, 660 μg/g or more, 670 μg/g or more, 680 μg/g or more, 690 μg/g or more, 700 μg/g or more, 710 μg/g or more, 720 μg/g or more, 730 μg/g or more, 740 μg/g or more, 750 μg/g or more, 760 μg/g or more, 770 μg/g or more, 780 μg/g or more, 790 μg/g or more, 800 μg/g or more, 810 μg/g or more, 820 μg/g or more, 830 μg/g or more, 840 μg/g or more, 850 μg/g or more, 860 μg/g or more, 870 μg/g or more, 880 μg/g or more, 890 μg/g or more, 900 μg/g or more, 910 μg/g or more, 920 μg/g or more, 930 μg/g or more, 940 μg/g or more, 950 μg/g or more, 960 μg/g or more, 970 μg/g or more, 980 μg/g or more, or 990 μg/g or more, and may be 1000 μg/g or less, 990 μg/g or less, 980 μg/g or less, 970 μg/g or less, 960 μg/g or less, 950 μg/g or less, 940 μg/g or less, 930 μg/g or less, 920 μg/g or less, 910 μg/g or less, 900 μg/g or less, 890 μg/g or less, 880 μg/g or less, 870 μg/g or less, 860 μg/g or less, 850 μg/g or less, 840 μg/g or less, 830 μg/g or less, 820 μg/g or less, 810 μg/g or less, 800 μg/g or less, 790 μg/g or less, 780 μg/g or less, 770 μg/g or less, 760 μg/g or less, 750 μg/g or less, 740 μg/g or less, 730 μg/g or less, 720 μg/g or less, 710 μg/g or less, 700 μg/g or less, 690 μg/g or less, 680 μg/g or less, 670 μg/g or less, 660 μg/g or less, 650 μg/g or less, 640 μg/g or less, 630 μg/g or less, 620 μg/g or less, 610 μg/g or less, 600 μg/g or less, 590 μg/g or less, 580 μg/g or less, 570 μg/g or less, 560 μg/g or less, 550 μg/g or less, 540 μg/g or less, 530 μg/g or less, 520 μg/g or less, 510 μg/g or less, 500 μg/g or less, 490 μg/g or less, 480 μg/g or less, 470 μg/g or less, 460 μg/g or less, 450 μg/g or less, 440 μg/g or less, 430 μg/g or less, 420 μg/g or less, 410 μg/g or less, 400 μg/g or less, 390 μg/g or less, 380 μg/g or less, 370 μg/g or less, 360 μg/g or less, 350 μg/g or less, 340 μg/g or less, 330 μg/g or less, 320 μg/g or less, 310 μg/g or less, 300 μg/g or less, 290 μg/g or less, 280 μg/g or less, 270 μg/g or less, 260 μg/g or less, 250 μg/g or less, 240 μg/g or less, 230 μg/g or less, 220 μg/g or less, 210 μg/g or less, 200 μg/g or less, 190 μg/g or less, 180 μg/g or less, 170 μg/g or less, 160 μg/g or less, 150 μg/g or less, 140 μg/g or less, 130 μg/g or less, 120 μg/g or less, 110 μg/g or less, 100 μg/g or less, 90 μg/g or less, 80 μg/g or less, 70 μg/g or less, 60 μg/g or less, 50

μg/g or less, 40 μg/g or less, 30 μg/g or less, or 20 μg/g or less.

In the present specification, the content of pyroglutamic acid can be measured using an analyzer such as a high-performance liquid chromatography (HPLC) organic acid analysis system (instrument name: Prominence, available from Shimadzu Corporation).

In the processed food (I) according to an embodiment of the present invention, the content of xanthine, the total content of adenine and guanine, the content of total purines, the content of uric acid, and the content of allantoin are as described above.

1.2 Processed food (II)

The processed food (II) according to an embodiment of the present invention contains at least one component (X) selected from the group consisting of a protein having had xanthine oxidase activity and a component derived from the protein.

The processed food (II), because containing the component (X), can be said to be a processed food that has been subjected to a xanthine oxidase treatment.

Further, since the processed food (II) has been subjected to a xanthine oxidase treatment, in which xanthine has been changed to uric acid, it can be said that the processed food (II) is a processed food containing uric acid with reduced content of xanthine.

In the processed food (II) according to an embodiment of the present invention, the content of xanthine, the total content of adenine and guanine, and the content of total purines, are as described above.

In the processed food (II) according to an embodiment of the present invention, the content of uric acid may be 2.0 μg/g or more, 2.5 μg/g or more, 3.0 μg/g or more, 3.5 μg/g or more, 4.0 μg/g or more, 4.5 μg/g or more, 5.0 μg/g or more, 5.5 μg/g or more, 6.0 μg/g or more, 6.5 μg/g or more, 7.0 μg/g or more, 7.5 μg/g or more, 8.0 μg/g or more, 8.5 μg/g or more, 9.0 μg/g or more, 9.5 μg/g or more, 10.0 μg/g or more, 11.0 μg/g or more, 12.0 μg/g or more, 13.0 μg/g or more, 14.0 μg/g or more, 15.0 μg/g or more, 16.0 μg/g or more, 17.0 μg/g or more, 18.0 μg/g or more, 19.0 μg/g or more, or 20.0 μg/g or more, and may be 10000 μg/g or less, 9000 μg/g or less, 8000 μg/g or less, 7000 μg/g or less, 6000 μg/g or less, 5000 μg/g or less, 4500 μg/g or less, 4000 μg/g or less, 4500 μg/g or less, 3000 μg/g or less, 2500 μg/g or less, 2200 μg/g or less, 2000 μg/g or less, 1800 μg/g or less, 1600 μg/g or less, 1500 μg/g or less, 1300 μg/g or less, 1200 μg/g or less, 1100 μg/g or less, 1000 μg/g or less, 900 μg/g or less, 800 μg/g or less, 700 μg/g or less, 600 μg/g or less, 500 μg/g or less, 450 μg/g or less, 400 μg/g or less, 350 μg/g or less, 300 μg/g or less, 280 μg/g or less, 250 μg/g or less, 220 μg/g or less, 200 μg/g or less, 180 μg/g or less, 160 μg/g or less, 150 μg/g or less, 140 μg/g or less, 130 μg/g or less, 120 μg/g or less, 110 μg/g or less, 100 μg/g or less, 95 μg/g or less, 90 μg/g or less, 85 μg/g or less, 80 μg/g or less, 75 μg/g or less, 70 μg/g or less, 65 μg/g or less, 60 μg/g or less, 55 μg/g or less, 50 μg/g or less, 45 μg/g or less, 40 μg/g or less, 35 μg/g or less, 30 μg/g or less, 27 μg/g or less, 25 μg/g or less, or 22 μg/g or less.

In the processed food (II) as an embodiment of the present invention, the ratio [xanthine/uric acid] between the content of xanthine (unit: μg/g) and the content of uric acid (unit: μg/g) is preferably 0.300 or less, more preferably 0.200 or less, more preferably 0.150 or less, more preferably 0.100 or less, still more preferably 0.090 or less, still more preferably 0.080 or less, still more preferably 0.070 or less, still more preferably 0.060 or less, and particularly preferably 0.050 or less.

In the processed food (II) according to an embodiment of the present invention, the content of allantoin may be 9.0 μg/g or less, 8.0 μg/g or less, 7.0 μg/g or less, 6.0 μg/g or less, 5.0 μg/g or less, 4.0 μg/g or less, 3.0 μg/g or less, 2.0 μg/g or less, 1.0 μg/g or less, or less than 1.0 μg/g.

The "protein having had xanthine oxidase activity" contained in the processed food (II) as the component (X) refers to a protein derived from a protein having xanthine oxidase activity contained in the raw material, in which the xanthine oxidase activity is deactivated by heating, pH adjustment, or the like in the production process of the processed food.

The "component derived from the protein" contained as the component (X) includes a component in which a structure of a protein in which xanthine oxidase activity is deactivated is partially cleaved, a denatured product in which the protein is denatured to have another structure, or the like. That is, the component (X) does not need to have a structure as a complete protein.

When a raw material containing a protein having xanthine oxidase activity is used as the raw material, the processed food to be produced contains the component (X). Thus, the processed food (II) according to an embodiment of the present invention also includes a processed food using a raw material having xanthine oxidase activity.

The raw material having xanthine oxidase activity is not particularly limited, and examples include raw materials derived from a wide range of biological species ranging from bacteria, to mammals, and higher plants. Specific examples include raw milk (unsterilized raw milk) of a mammal, such as a cow; a microorganism belonging to the genus, such as Pseudomonas, Escherichia, Arthrobacter, or Nocardia; and Enterobacter cloacae, and a commercially available preparation of xanthine oxidase.

The processed food (II) as an embodiment of the present invention has had xanthine oxidase activity, but it is

sufficient that the processed food (II) contains a protein in which xanthine oxidase activity has already been deactivated or a component (X) derived from the protein, and whether the processed food (II) has xanthine oxidase activity is not limited. That is, the processed food (II) may have xanthine oxidase activity, but the processed food (II) does not have to have xanthine oxidase activity.

When the processed food (II) as an embodiment of the present invention has xanthine oxidase activity, the xanthine oxidase activity value may be 0.01 U or more, 0.05 U or more, 0.1 U or more, 0.3 U or more, 0.5 U or more, 0.7 U or more, 1.0 U or more, 1.5 U or more, 2.0 U or more, 2.5 U or more, 3.0 U or more, 3.5 U or more, 4.0 U or more, 5.0 U or more, 5.5 U or more, 6.0 U or more, 7.0 U or more, 8.0 U or more, 9.0 U or more, or 10.0 U or more, and may be 10000 U or less, 9000 U or less, 8000 U or less, 7000 U or less, or 6000 U or less.

In the present specification, the xanthine oxidase activity value means the relative amount of the enzyme when the amount of the enzyme needed for production of 1 μmol of uric acid per minute under the following conditions is defined as 1 unit (U).

A 50 mM tris-hydrochloric acid buffer solution in an amount of 2.9 ml and 0.1 ml of a 10 mM xanthine aqueous solution are mixed and pre-heated at 37°C, then 0.01 ml of a solution of an analyte is added thereto and the mixture is mixed gently. Then, the mixture is measured for a change in absorption at 293 nm per minute using a spectrophotometer controlled at 37°C with water as a control. The amount of the enzyme needed for production of 1 μmol of uric acid per minute is determined from this value and defined as 1 unit (U), and the amount of the enzyme relative to 1 unit (U) is defined as the xanthine oxidase activity value.

The content of pyroglutamic acid in the processed food (II) according to an embodiment of the present invention is, from the viewpoint of producing a processed food with further improved taste, preferably 10 μg/g or more, 20 μg/g or more, 30 μg/g or more, 40 μg/g or more, 50 μg/g or more, 60 μg/g or more, 70 μg/g or more, 80 μg/g or more, 90 μg/g or more, 100 μg/g or more, 110 μg/g or more, 120 μg/g or more, 130 μg/g or more, 140 μg/g or more, 150 μg/g or more, 160 μg/g or more, 170 μg/g or more, 180 μg/g or more, 190 μg/g or more, 200 μg/g or more, 210 μg/g or more, 220 μg/g or more, 230 μg/g or more, 240 μg/g or more, 250 μg/g or more, 260 μg/g or more, 270 μg/g or more, 280 μg/g or more, 290 μg/g or more, 300 μg/g or more, 310 μg/g or more, 320 μg/g or more, 330 μg/g or more, 340 μg/g or more, 350 μg/g or more, 360 μg/g or more, 370 μg/g or more, 380 μg/g or more, 390 μg/g or more, 400 μg/g or more, 410 μg/g or more, 420 μg/g or more, 430 μg/g or more, 440 μg/g or more, 450 μg/g or more, 460 μg/g or more, 470 μg/g or more, 480 μg/g or more, 490 μg/g or more, 500 μg/g or more, 510 μg/g or more, 520 μg/g or more, 530 μg/g or more, 540 μg/g or more, 550 μg/g or more, 560 μg/g or more, 570 μg/g or more, 580 μg/g or more, 590 μg/g or more, 600 μg/g or more, 610 μg/g or more, 620 μg/g or more, 630 μg/g or more, 640 μg/g or more, 650 μg/g or more, 660 μg/g or more, 670 μg/g or more, 680 μg/g or more, 690 μg/g or more, 700 μg/g or more, 710 μg/g or more, 720 μg/g or more, 730 μg/g or more, 740 μg/g or more, 750 μg/g or more, 760 μg/g or more, 770 μg/g or more, 780 μg/g or more, 790 μg/g or more, 800 μg/g or more, 810 μg/g or more, 820 μg/g or more, 830 μg/g or more, 840 μg/g or more, 850 μg/g or more, 860 μg/g or more, 870 μg/g or more, 880 μg/g or more, 890 μg/g or more, 900 μg/g or more, 910 μg/g or more, 920 μg/g or more, 930 μg/g or more, 940 μg/g or more, 950 μg/g or more, 960 μg/g or more, 970 μg/g or more, 980 μg/g or more, or 990 μg/g or more, and may be 1000 μg/g or less, 990 μg/g or less, 980 μg/g or less, 970 μg/g or less, 960 μg/g or less, 950 μg/g or less, 940 μg/g or less, 930 μg/g or less, 920 μg/g or less, 910 μg/g or less, 900 μg/g or less, 890 μg/g or less, 880 μg/g or less, 870 μg/g or less, 860 μg/g or less, 850 μg/g or less, 840 μg/g or less, 830 μg/g or less, 820 μg/g or less, 810 μg/g or less, 800 μg/g or less, 790 μg/g or less, 780 μg/g or less, 770 μg/g or less, 760 μg/g or less, 750 μg/g or less, 740 μg/g or less, 730 μg/g or less, 720 μg/g or less, 710 μg/g or less, 700 μg/g or less, 690 μg/g or less, 680 μg/g or less, 670 μg/g or less, 660 μg/g or less, 650 μg/g or less, 640 μg/g or less, 630 μg/g or less, 620 μg/g or less, 610 μg/g or less, 600 μg/g or less, 590 μg/g or less, 580 μg/g or less, 570 μg/g or less, 560 μg/g or less, 550 μg/g or less, 540 μg/g or less, 530 μg/g or less, 520 μg/g or less, 510 μg/g or less, 500 μg/g or less, 490 μg/g or less, 480 μg/g or less, 470 μg/g or less, 460 μg/g or less, 450 μg/g or less, 440 μg/g or less, 430 μg/g or less, 420 μg/g or less, 410 μg/g or less, 400 μg/g or less, 390 μg/g or less, 380 μg/g or less, 370 μg/g or less, 360 μg/g or less, 350 μg/g or less, 340 μg/g or less, 330 μg/g or less, 320 μg/g or less, 310 μg/g or less, 300 μg/g or less, 290 μg/g or less, 280 μg/g or less, 270 μg/g or less, 260 μg/g or less, 250 μg/g or less, 240 μg/g or less, 230 μg/g or less, 220 μg/g or less, 210 μg/g or less, 200 μg/g or less, 190 μg/g or less, 180 μg/g or less, 170 μg/g or less, 160 μg/g or less, 150 μg/g or less, 140 μg/g or less, 130 μg/g or less, 120 μg/g or less, 110 μg/g or less, 100 μg/g or less, 90 μg/g or less, 80 μg/g or less, 70 μg/g or less, 60 μg/g or less, 50 μg/g or less, 40 μg/g or less, 30 μg/g or less, or 20 μg/g or less.

1.3. Processed food (III)

The processed food (III) as an embodiment of the present invention contains at least one component (X) selected from the group consisting of a protein having had xanthine oxidase activity and a component derived from the protein, and at least one component (U) selected from the group consisting of a protein having had uricase activity and a component derived from the protein

Since the processed food (III) contains the component (X), it can be said that the processed food has been

subjected to a xanthine oxidase treatment, and since the processed food (III) contains the component (U), it can be said that the processed food has been subjected to a uricase treatment.

That is, the processed food (III) is a processed food in which xanthine is changed to uric acid through a xanthine oxidase treatment and then uric acid is changed to allantoin through a uricase treatment, and it is a processed food containing allantoin in which the content of xanthi and the content of uric acid are lowered.

In the processed food (III) according to an embodiment of the present invention, the content of xanthine, the total content of adenine and guanine, and the content of total purines, are as described above.

In the processed food (III) as an embodiment of the present invention, the content of uric acid may be 2.0 μg/g or more, 2.5 μg/g or more, 3.0 μg/g or more, 3.5 μg/g or more, 4.0 μg/g or more, 4.5 μg/g or more, 5.0 μg/g or more, 5.5 μg/g or more, 6.0 μg/g or more, 6.5 μg/g or more, 7.0 μg/g or more, 7.5 μg/g or more, 8.0 μg/g or more, 8.5 μg/g or more, 9.0 μg/g or more, 9.5 μg/g or more, 10.0 μg/g or more, 11.0 μg/g or more, 12.0 μg/g or more, 13.0 μg/g or more, 14.0 μg/g or more, 15.0 μg/g or more, 16.0 μg/g or more, 17.0 μg/g or more, 18.0 μg/g or more, 19.0 μg/g or more, or 20.0 μg/g or more, and may be 10000 μg/g or less, 9000 μg/g or less, 8000 μg/g or less, 7000 μg/g or less, 6000 μg/g or less, 5000 μg/g or less, 4500 μg/g or less, 4000 μg/g or less, 4500 μg/g or less, 3000 μg/g or less, 2500 μg/g or less, 2200 μg/g or less, 2000 μg/g or less, 1800 μg/g or less, 1600 μg/g or less, 1500 μg/g or less, 1300 μg/g or less, 1200 μg/g or less, 1100 μg/g or less, 1000 μg/g or less, 900 μg/g or less, 800 μg/g or less, 700 μg/g or less, 600 μg/g or less, 500 μg/g or less, 450 μg/g or less, 400 μg/g or less, 350 μg/g or less, 300 μg/g or less, 280 μg/g or less, 250 μg/g or less, 220 μg/g or less, 200 μg/g or less, 180 μg/g or less, 160 μg/g or less, 150 μg/g or less, 140 μg/g or less, 130 μg/g or less, 120 μg/g or less, 110 μg/g or less, 100 μg/g or less, 95 μg/g or less, 90 μg/g or less, 85 μg/g or less, 80 μg/g or less, 75 μg/g or less, 70 μg/g or less, 65 μg/g or less, 60 μg/g or less, 55 μg/g or less, 50 μg/g or less, 45 μg/g or less, 40 μg/g or less, 35 μg/g or less, 30 μg/g or less, 27 μg/g or less, 25 μg/g or less, or 22 μg/g or less.

In the processed food (III) an embodiment of the present invention, the content of allantoin may be 0.10 μg/g or more, 0.30 μg/g or more, 0.50 μg/g or more, 0.70 μg/g or more, 1.0 μg/g or more, 1.2 μg/g or more, 1.5 μg/g or more, 1.7 μg/g or more, 2.0 μg/g or more, 2.5 μg/g or more, 3.0 μg/g or more, 3.5 μg/g or more, 4.0 μg/g or more, 4.5 μg/g or more, 5.0 μg/g or more, 10.0 μg/g or more, 15.0 μg/g or more, 20.0 μg/g or more, 25.0 μg/g or more, 30.0 μg/g or more, 35.0 μg/g or more, 40.0 μg/g or more, 45.0 μg/g or more, 50.0 μg/g or more, 55.0 μg/g or more, 60.0 μg/g or more, 65.0 μg/g or more, 70.0 μg/g or more, 75.0 μg/g or more, 80.0 μg/g or more, 85.0 μg/g or more, 90.0 μg/g or more, 95.0 μg/g or more, 100.0 μg/g or more, 105.0 μg/g or more, 110.0 μg/g or more, 115.0 μg/g or more, 120.0 μg/g or more, 125.0 μg/g or more, 130.0 μg/g or more, 135.0 μg/g or more, 140.0 μg/g or more, 145.0 μg/g or more, 150.0 μg/g or more, 155.0 μg/g or more, 160.0 μg/g or more, 165.0 μg/g or more, 170.0 μg/g or more, 175.0 μg/g or more, 180.0 μg/g or more, 185.0 μg/g or more, 190.0 μg/g or more, 195.0 μg/g or more, and may be 200.0 μg/g or less, 195.0 μg/g or less, 190.0 μg/g or less, 185.0 μg/g or less, 180.0 μg/g or less, 175.0 μg/g or less, 170.0 μg/g or less, 165.0 μg/g or less, 160.0 μg/g or less, 155.0 μg/g or less, 150.0 μg/g or less, 145.0 μg/g or less, 140.0 μg/g or less, 135.0 μg/g or less, 130.0 μg/g or less, 125.0 μg/g or less, 120.0 μg/g or less, 115.0 μg/g or less, 110.0 μg/g or less, 105.0 μg/g or less, 100.0 μg/g or less, 95.0 μg/g or less, 90.0 μg/g or less, 85.0 μg/g or less, 80.0 μg/g or less, 75.0 μg/g or less, 70.0 μg/g or less, 65.0 μg/g or less, 60.0 μg/g or less, 55.0 μg/g or less, 50.0 μg/g or less, 45.0 μg/g or less, 40.0 μg/g or less, 35.0 μg/g or less, 30.0 μg/g or less, 25.0 μg/g or less, 20.0 μg/g or less, 15.0 μg/g or less, 10.0 μg/g or less, 9.0 μg/g or less, 8.0 μg/g or less, 7.0 μg/g or less, 6.0 μg/g or less, 5.0 μg/g or less, 4.0 μg/g or less, 3.0 μg/g or less, 2.0 μg/g or less, 1.0 μg/g or less, or less than 1.0 μg/g.

In the processed food (III) as an embodiment of the present invention, the ratio [uric acid/allantoin] between the content of uric acid (unit: μg/g) and the content of allantoin (unit: μg/g) is preferably less than 1.00, more preferably 0.950 or less, more preferably 0.910 or less, still more preferably 0.800 or less, still more preferably 0.700 or less, still more preferably 0.600 or less, and particularly preferably 0.500 or less, and further, the ratio may be 0.450 or less, 0.400 or less, 0.350 or less, 0.300 or less, 0.250 or less, 0.200 or less, 0.150 or less, or 0.100 or less.

The "protein having had xanthine oxidase activity" contained as the component (X) in the processed food (III) is the same as the component (X) contained in the processed food (II).

The "protein having had uricase activity" contained in the processed food (III) as the component (U) refers to a protein derived from a protein having uricase activity contained in the raw material, in which the uricase activity is deactivated by heating, pH adjustment, or the like in the production process of the processed food.

The "component derived from the protein" contained as the component (U) includes a component in which a structure of a protein in which uricase activity is deactivated is partially cleaved, a denatured product in which the protein is denatured to have another structure, or the like. That is, the component (U) does not need to have a structure as a complete protein.

When a raw material containing a protein having xanthine oxidase activity and a raw material containing a protein having uricase activity are used as the raw material, the processed food to be produced contains the component (X) and the component (U). Thus, the processed food (III) according to an embodiment of the present invention also includes a processed food using a raw material having xanthine oxidase activity and a raw material having uricase activity.

The raw material having xanthine oxidase activity is as described above.

The raw material having uricase activity is not particularly limited, and examples include raw materials derived

from a wide range of biological species ranging from bacteria, to mammals, and higher plants. Specific examples include raw milk (unsterilized raw milk) of a mammal, such as a cow; a microorganism belonging to the genus, such as Pseudomonas, Escherichia, Arthrobacter, or Nocardia; and Enterobacter cloacae, and a commercially available preparation of uricase.

The processed food (III) as an embodiment of the present invention having had xanthine oxidase activity, but it is sufficient that the processed food (III) contains a protein in which xanthine oxidase activity has already been deactivated or a component (X) derived from the protein, and whether the processed food (III) has xanthine oxidase activity is not limited. That is, the processed food (III) may have xanthine oxidase activity, but the processed food (III) does not have to have xanthine oxidase activity.

When the processed food (III) as an embodiment of the present invention has xanthine oxidase activity, the xanthine oxidase activity value is the same as that of the processed food (II).

The processed food (III) as an embodiment of the present invention has had uricase activity, but it is sufficient that the processed food (III) contains a protein in which uricase activity has already been deactivated or a component (U) derived from the protein, and whether the processed food (III) has uricase activity is not limited. That is, the processed food (III) may have uricase activity, but the processed food (III) does not have to have uricase activity.

When the processed food (III) as an embodiment of the present invention has uricase activity, the uricase activity value may be 0.01 U or more, 0.05 U or more, 0.1 U or more, 0.3 U or more, 0.5 U or more, 0.7 U or more, 1.0 U or more, 1.5 U or more, 2.0 U or more, 2.5 U or more, 3.0 U or more, 3.5 U or more, 4.0 U or more, 5.0 U or more, 5.5 U or more, 6.0 U or more, 7.0 U or more, 8.0 U or more, 9.0 U or more, or 10.0 U or more, and may be 10000 U or less, 9000 U or less, 8000 U or less, 7000 U or less, or 6000 U or less.

In the present specification, the uricase activity value means the relative amount of the enzyme when the amount of the enzyme needed for production of 1 μmol of allantoin per minute under the following conditions is defined as 1 unit (U).

A 50 mM tris-hydrochloric acid buffer solution in an amount of 2.9 ml and 0.1 ml of a 10 mM uric acid aqueous solution are mixed and pre-heated at 37°C, then 0.01 ml of a solution of an analyte is added and mixed gently, and then a change in absorption at 293 nm per minute is determined using a spectrophotometer controlled at 37°C with water as a control. The amount of the enzyme needed for production of 1 μmol of allantoin per minute is determined from this value and defined as 1 unit (U), and the amount of the enzyme relative to 1 unit (U) is defined as the uricase activity value.

The content of pyroglutamic acid in the processed food (III) according to an embodiment of the present invention is, from the viewpoint of producing a processed food with further improved taste, preferably 10 μg/g or more, 20 μg/g or more, 30 μg/g or more, 40 μg/g or more, 50 μg/g or more, 60 μg/g or more, 70 μg/g or more, 80 μg/g or more, 90 μg/g or more, 100 μg/g or more, 110 μg/g or more, 120 μg/g or more, 130 μg/g or more, 140 μg/g or more, 150 μg/g or more, 160 μg/g or more, 170 μg/g or more, 180 μg/g or more, 190 μg/g or more, 200 μg/g or more, 210 μg/g or more, 220 μg/g or more, 230 μg/g or more, 240 μg/g or more, 250 μg/g or more, 260 μg/g or more, 270 μg/g or more, 280 μg/g or more, 290 μg/g or more, 300 μg/g or more, 310 μg/g or more, 320 μg/g or more, 330 μg/g or more, 340 μg/g or more, 350 μg/g or more, 360 μg/g or more, 370 μg/g or more, 380 μg/g or more, 390 μg/g or more, 400 μg/g or more, 410 μg/g or more, 420 μg/g or more, 430 μg/g or more, 440 μg/g or more, 450 μg/g or more, 460 μg/g or more, 470 μg/g or more, 480 μg/g or more, 490 μg/g or more, 500 μg/g or more, 510 μg/g or more, 520 μg/g or more, 530 μg/g or more, 540 μg/g or more, 550 μg/g or more, 560 μg/g or more, 570 μg/g or more, 580 μg/g or more, 590 μg/g or more, 600 μg/g or more, 610 μg/g or more, 620 μg/g or more, 630 μg/g or more, 640 μg/g or more, 650 μg/g or more, 660 μg/g or more, 670 μg/g or more, 680 μg/g or more, 690 μg/g or more, 700 μg/g or more, 710 μg/g or more, 720 μg/g or more, 730 μg/g or more, 740 μg/g or more, 750 μg/g or more, 760 μg/g or more, 770 μg/g or more, 780 μg/g or more, 790 μg/g or more, 800 μg/g or more, 810 μg/g or more, 820 μg/g or more, 830 μg/g or more, 840 μg/g or more, 850 μg/g or more, 860 μg/g or more, 870 μg/g or more, 880 μg/g or more, 890 μg/g or more, 900 μg/g or more, 910 μg/g or more, 920 μg/g or more, 930 μg/g or more, 940 μg/g or more, 950 μg/g or more, 960 μg/g or more, 970 μg/g or more, 980 μg/g or more, or 990 μg/g or more, and may be 1000 μg/g or less, 990 μg/g or less, 980 μg/g or less, 970 μg/g or less, 960 μg/g or less, 950 μg/g or less, 940 μg/g or less, 930 μg/g or less, 920 μg/g or less, 910 μg/g or less, 900 μg/g or less, 890 μg/g or less, 880 μg/g or less, 870 μg/g or less, 860 μg/g or less, 850 μg/g or less, 840 μg/g or less, 830 μg/g or less, 820 μg/g or less, 810 μg/g or less, 800 μg/g or less, 790 μg/g or less, 780 μg/g or less, 770 μg/g or less, 760 μg/g or less, 750 μg/g or less, 740 μg/g or less, 730 μg/g or less, 720 μg/g or less, 710 μg/g or less, 700 μg/g or less, 690 μg/g or less, 680 μg/g or less, 670 μg/g or less, 660 μg/g or less, 650 μg/g or less, 640 μg/g or less, 630 μg/g or less, 620 μg/g or less, 610 μg/g or less, 600 μg/g or less, 590 μg/g or less, 580 μg/g or less, 570 μg/g or less, 560 μg/g or less, 550 μg/g or less, 540 μg/g or less, 530 μg/g or less, 520 μg/g or less, 510 μg/g or less, 500 μg/g or less, 490 μg/g or less, 480 μg/g or less, 470 μg/g or less, 460 μg/g or less, 450 μg/g or less, 440 μg/g or less, 430 μg/g or less, 420 μg/g or less, 410 μg/g or less, 400 μg/g or less, 390 μg/g or less, 380 μg/g or less, 370 μg/g or less, 360 μg/g or less, 350 μg/g or less, 340 μg/g or less, 330 μg/g or less, 320 μg/g or less, 310 μg/g or less, 300 μg/g or less, 290 μg/g or less, 280 μg/g or less, 270 μg/g or less, 260 μg/g or less, 250 μg/g or less, 240 μg/g or less, 230 μg/g or less, 220 μg/g or less, 210 μg/g or less, 200 μg/g or less, 190 μg/g or less, 180 μg/g or less, 170 μg/g or less, 160 μg/g or less, 150 μg/g or less, 140 μg/g or less, 130 μg/g or less, 120 μg/g or less, 110 μg/g or less, 100 μg/g or less, 90 μg/g or less, 80 μg/g or less, 70 μg/g or less, 60 μg/g or less, 50 μg/g or less, 40 μg/g or less, 30 μg/g or less, or 20 μg/g or

less.

2 Beer-taste beverage

The processed food according to an embodiment of the present invention may be a beer-taste beverage.

In particular, in the case of a malt beer-taste beverage, malt is known as a raw material containing purines. However, when a raw material having xanthine oxidase activity is used together with malt to prepare a beverage having xanthine oxidase activity or a beverage containing at least one component (X) selected from the group consisting of a protein having had xanthine oxidase activity and a component derived from the protein, xanthine generated from malt can be changed to uric acid, and the content of purines can be lowered.

In the present specification, the "beer-taste beverage" refers to an alcohol-containing or non-alcoholic carbonated beverage with a beer-like flavor. Thus, the "beer-taste beverage" in the present specification includes a carbonated beverage having a beer flavor unless otherwise specified.

Thus, the "beer-taste beverage" includes, for example, not only beer and fermented beer-taste beverages which are fermented beverages obtained by fermenting barley raw materials such as malt and non-germinated wheat and barley, water, and hops and the like as necessary using yeast as raw materials, but also any carbonated beverage (non-fermented beer-taste beverage) having a beer taste to which a beer flavoring containing a flavor component such as an ester, a higher alcohol (for example, isoamyl acetate, ethyl acetate, n-propanol, isobutanol, acetaldehyde, ethyl caproate, linalool, 4-vinylguaiacol, and the like), or a lactone is added.

Thus, the beer-taste beverage may be a fermented beverage that has undergone a yeast-based fermentation step or may be a non-fermented beverage that has not undergone a fermentation step. The "fermentation" used in the present specification may be alcoholic fermentation in which alcohol is produced or non-alcoholic fermentation in which no alcohol is produced.

Further, the beer-taste beverage may be an alcohol-containing beer-taste beverage with an alcoholic strength of 1.0 (v/v)% or more or may be a non-alcoholic beer-taste beverage with an alcoholic strength of less than 1.0 (v/v)%.

The alcoholic strength in the alcohol-containing beer-taste beverage according to an embodiment of the present invention may be, from the viewpoint of making a beverage that can give a refreshing stimulating sensation, 1.0 (v/v)% or more, 1.5 (v/v)% or more, 2.0 (v/v)% or more, 2.1 (v/v)% or more, 2.2 (v/v)% or more, 2.3 (v/v)% or more, 2.4 (v/v)% or more, 2.5 (v/v)% or more, 2.6 (v/v)% or more, 2.7 (v/v)% or more, 2.8 (v/v)% or more, 2.9 (v/v)% or more, 3.0 (v/v)% or more, 3.1 (v/v)% or more, 3.2 (v/v)% or more, 3.3 (v/v)% or more, 3.4 (v/v)% or more, 3.5 (v/v)% or more, 3.6 (v/v)% or more, 3.7 (v/v)% or more, 3.8 (v/v)% or more, 3.9 (v/v)% or more, 4.0 (v/v)% or more, 4.1 (v/v)% or more, 4.2 (v/v)% or more, 4.3 (v/v)% or more, 4.4 (v/v)% or more, 4.5 (v/v)% or more, 4.6 (v/v)% or more, 4.7 (v/v)% or more, 4.8 (v/v)% or more, 4.9 (v/v)% or more, 5.0 (v/v)% or more, 5.1 (v/v)% or more, 5.2 (v/v)% or more, 5.3 (v/v)% or more, 5.4 (v/v)% or more, 5.5 (v/v)% or more, 5.6 (v/v)% or more, or 5.7 (v/v)% or more, and from the viewpoint of producing an easy-to-drink beer-taste beverage, the alcoholic strength may be 20.0 (v/v)% or less, 17.0 (v/v)% or less, 15.0 (v/v)% or less, 12.0 (v/v)% or less, 10.0 (v/v)% or less, 9.0 (v/v)% or less, 8.0 (v/v)% or less, 7.0 (v/v)% or less, 6.0 (v/v)% or less, 5.8 (v/v)% or less, 5.6 (v/v)% or less, 5.5 (v/v)% or less, 5.4 (v/v)% or less, 5.2 (v/v)% or less, or 5.0 (v/v)% or less.

The alcoholic strength in the non-alcoholic beer-taste beverage according to an embodiment of the present invention may be less than 1.0 (v/v)%, 0.9 (v/v)% or less, 0.8 (v/v)% or less, 0.7 (v/v)% or less, 0.6 (v/v)% or less, 0.5 (v/v)% or less, 0.4 (v/v)% or less, 0.3 (v/v)% or less, 0.2 (v/v)% or less, 0.1 (v/v)% or less, 0.05 (v/v)% or less, 0.01 (v/v)% or less, 0.0050 (v/v)% or less, or 0.0025 (v/v)% or less, or the non-alcoholic beverage may be a non-alcoholic beer-taste beverage substantially free of alcohol.

The "non-alcoholic beer-taste beverage substantially free of alcohol" does not exclude beverages containing a trace amount of alcohol that is undetectable. The non-alcoholic beer-taste beverage also includes beverages whose alcoholic strength is 0 (v/v)% when the value is rounded off to the integer, beverages whose alcoholic strength is 0.0 (v/v)% when the value is rounded off to the first decimal place, and beverages whose alcoholic strength is 0.00 (v/v)% when the value is rounded off to the second decimal place.

In addition, the non-alcoholic beer-taste beverage according to an embodiment of the present invention may be a beverage with an alcoholic strength of 0.1 (v/v)% or more and less than 1.0 (v/v)%, 0.2 (v/v)% or more and less than 1.0 (v/v)%, 0.3 (v/v)% or more and less than 1.0 (v/v)%, 0.4 (v/v)% or more and less than 1.0 (v/v)%, 0.5 (v/v)% or more and less than 1.0 (v/v)%, 0.6 (v/v)% or more and less than 1.0 (v/v)%, 0.7 (v/v)% or more and less than 1.0 (v/v)%, 0.8 (v/v)% or more and less than 1.0 (v/v)%, or 0.9 (v/v)% or more and less than 1.0 (v/v)%.

The non-alcoholic beer-taste beverage may be a non-alcoholic fermented beer-taste beverage produced by removing the alcohol produced in the fermentation step after the fermentation step, may be a beverage produced by stopping the fermentation at a stage where the alcoholic strength is less than 1.0 (v/v)% in the yeast-based fermentation step, may be a beverage produced by diluting a fermented beer-taste beverage obtained through alcoholic fermentation to have an alcoholic strength within the ranges described above, or may be a non-alcoholic non-fermented beer-taste beverage prepared to have a beer-like flavor without performing a fermentation step. The non-alcoholic beer-taste

beverage also includes a beer-taste soft drink.

In addition, the beer-taste beverage may be a beer-taste malt beverage made using malt as a raw material or may be a beer-taste malt-free beverage made without using malt. The beer-taste beverage is preferably a beer-taste malt beverage and more preferably a beer-taste barley malt beverage.

The beer-taste beverage may be a top-fermented beer-taste beverage (ale beer-taste beverage) brewed through a fermentation step using a top-fermenting yeast (such as Saccharomyces), a bottom-fermented beer-taste beverage (lager beer-taste beverage, pilsner beer-taste beverage) brewed through a fermentation step using a bottom-fermenting yeast (such as Saccharomyces), or a fermented beer-taste beverage produced by using a top-fermenting yeast and a bottom-fermenting yeast at the same fermentation step or separate fermentation steps.

The beer-taste beverage may be a distilled liquor-containing beer-taste beverage containing a distilled liquor, such as spirits, whiskey, or shochu, and among them, a spirits-containing beer-taste beverage is preferred. The distilled liquor-containing beer-taste beverage may be a distilled liquor-containing fermented beer-taste beverage or may be a distilled liquor-containing non-fermented beer-taste beverage.

The beer-taste beverage may be a distilled liquor-free beer-taste beverage containing no distilled liquor or may be a spirits-free beer-taste beverage containing no spirits.

The beer-taste beverage according to a specific embodiment of the present invention may be a fermented beverage, may be an alcohol-containing fermented beverage, or may be a fermented malt beverage.

The malt proportion of the beer-taste beverage according to an embodiment of the present invention may be, from the viewpoint of making a beverage with excellent taste typical of a beer-taste beverage, 5 mass% or more, 6 mass% or more, 7 mass% or more, 8 mass% or more, 9 mass% or more, 10 mass% or more, 11 mass% or more, 12 mass% or more, 13 mass% or more, 14 mass% or more, 15 mass% or more, 16 mass% or more, 17 mass% or more, 18 mass% or more, 19 mass% or more, 20 mass% or more, 21 mass% or more, 22 mass% or more, 23 mass% or more, 24 mass% or more, 25 mass% or more, 26 mass% or more, 27 mass% or more, 28 mass% or more, 29 mass% or more, 30 mass% or more, 31 mass% or more, 32 mass% or more, 33 mass% or more, 34 mass% or more, 35 mass% or more, 36 mass% or more, 37 mass% or more, 38 mass% or more, 39 mass% or more, 40 mass% or more, 41 mass% or more, 42 mass% or more, 43 mass% or more, 44 mass% or more, 45 mass% or more, 46 mass% or more, 47 mass% or more, 48 mass% or more, 49 mass% or more, 50 mass% or more, 51 mass% or more, 52 mass% or more, 53 mass% or more, 54 mass% or more, 55 mass% or more, 56 mass% or more, 57 mass% or more, 58 mass% or more, 59 mass% or more, 60 mass% or more, 61 mass% or more, 62 mass% or more, 63 mass% or more, 64 mass% or more, 65 mass% or more, 66 mass% or more, 67 mass% or more, 68 mass% or more, 69 mass% or more, 70 mass% or more, 71 mass% or more, 72 mass% or more, 73 mass% or more, 74 mass% or more, 75 mass% or more, 76 mass% or more, 77 mass% or more, 78 mass% or more, 79 mass% or more, 80 mass% or more, 81 mass% or more, 82 mass% or more, 83 mass% or more, 84 mass% or more, 85 mass% or more, 86 mass% or more, 87 mass% or more, 88 mass% or more, 89 mass% or more, 90 mass% or more, 91 mass% or more, 92 mass% or more, 93 mass% or more, 94 mass% or more, 95 mass% or more, 96 mass% or more, 97 mass% or more, 98 mass% or more, or 99 mass% or more, and is 100 mass% or less, but from the viewpoint of making a beer-taste beverage that is easy to drink, the malt proportion may be less than 100 mass%, 90 mass% or less, 89 mass% or less, 88 mass% or less, 87 mass% or less, 86 mass% or less, 85 mass% or less, 84 mass% or less, 83 mass% or less, 82 mass% or less, 81 mass% or less, 80 mass% or less, 79 mass% or less, 78 mass% or less, 77 mass% or less, 76 mass% or less, 75 mass% or less, 74 mass% or less, 73 mass% or less, 72 mass% or less, 71 mass% or less, 70 mass% or less, 69 mass% or less, 68 mass% or less, 67 mass% or less, 66 mass% or less, 65 mass% or less, 64 mass% or less, 63 mass% or less, 62 mass% or less, 61 mass% or less, 60 mass% or less, 59 mass% or less, 58 mass% or less, 57 mass% or less, 56 mass% or less, 55 mass% or less, 54 mass% or less, 53 mass% or less, 52 mass% or less, 51 mass% or less, 50 mass% or less, 49 mass% or less, 48 mass% or less, 47 mass% or less, 46 mass% or less, 45 mass% or less, 44 mass% or less, 43 mass% or less, 42 mass% or less, 41 mass% or less, 40 mass% or less, 39 mass% or less, 38 mass% or less, 37 mass% or less, 36 mass% or less, 35 mass% or less, 34 mass% or less, 33 mass% or less, 32 mass% or less, 31 mass% or less, 30 mass% or less, 29 mass% or less, 28 mass% or less, 27 mass% or less, 26 mass% or less, 25 mass% or less, 24 mass% or less, 23 mass% or less, 22 mass% or less, 21 mass% or less, 20 mass% or less, 19 mass% or less, 18 mass% or less, 17 mass% or less, 16 mass% or less, 15 mass% or less, 14 mass% or less, 13 mass% or less, 12 mass% or less, or 11 mass% or less.

In the present specification, the "malt proportion" means a value calculated according to the Interpretation Notice on the Liquor Tax Law and the Administrative Ordinance Related to Alcoholic Beverages and the like enforced on April 1, 2018.

In general, as the malt proportion increases, the amount of malt-derived purines increases, and it becomes difficult to obtain a beer-taste beverage in which the amount of purines is lowered to a predetermined value or less.

However, xanthine, which is a non-assimilable purine, can be converted into uric acid by performing a xanthine oxidase treatment using an additive for a processed food having xanthine oxidase activity, and a beer-taste beverage with a lowered content of purines can be obtained. Further, adenine and guanine, which are yeast-non-assimilable purines, can be converted into yeast-assimilable purines, and xanthine generated through a purine nucleosidase treatment can also be

converted into uric acid by performing a purine nucleosidase treatment using an additive for a processed food having purine nucleosidase activity and then performing a xanthine oxidase treatment. Thus, the content of purines can be further lowered. In addition, adenine can be converted into hypoxanthine by performing an adenine deaminase treatment using an additive for a processed food having adenine deaminase activity, and then performing a xanthine oxidase treatment, and this enables efficient degradation by xanthine oxidase. Likewise, guanine can be converted into xanthine by performing a guanine deaminase treatment using an additive for a processed food having guanine deaminase activity, and then performing a xanthine oxidase treatment, and this also enables efficient degradation by xanthine oxidase.

That is, since purines can be lowered as described above even for a beer-taste beverage having a high malt proportion (for example, 20 mass% or more), the content of purines can be lowered.

In addition, as described above, the decrease in flavor components (ester and alcohol) and bitterness components peculiar to beer can be suppressed by adopting the method for lowering purines using an additive for a processed food, and a beer-taste beverage excellent in flavor and bitterness can be obtained.

In the beer-taste beverage according to an embodiment of the present invention, the total content of ester components including ethyl butyrate, ethyl caproate, ethyl octanoate, and ethyl decanoate in terms of an original wort extract concentration of 14.5 mass% in the beverage is, based on the total amount (100 mass%) of the beer-taste beverage, preferably 500 mass ppb or more, more preferably 520 mass ppb or more, even more preferably 550 mass ppb or more, still more preferably 570 mass ppb or more, yet more preferably 600 mass ppb or more, still even more preferably more preferably 620 mass ppb or more, and particularly preferably 650 mass ppb or more, and may be 10000 mass ppb or less, 8000 mass ppb or less, 6000 mass ppb or less, 5000 mass ppb or less, 4000 mass ppb or less, 3000 mass ppb or less, 2000 mass ppb or less, 1500 mass ppb or less, 1200 mass ppb or less, 1000 mass ppb or less, 900 mass ppb or less, 800 mass ppb or less, or 750 mass ppb or less.

In the beer-taste beverage according to an embodiment of the present invention, the content of phenethyl alcohol in terms of an original wort extract concentration of 14.5 mass% in the beverage is, based on the total amount (100 mass%) of the beer-taste beverage, preferably 18.0 mass ppm or more, more preferably 20.0 mass ppm or more, even more preferably 22.0 mass ppm or more, still more preferably 24.0 mass ppm or more, yet more preferably 25.0 mass ppm or more, still even more preferably more preferably 26.0 mass ppm or more, particularly preferably 27.0 mass ppm or more, and may be 300 mass ppm or less, 200 mass ppm or less, 150 mass ppm or less, 100 mass ppm or less, 90 mass ppm or less, 80 mass ppm or less, 70 mass ppm or less, 60 mass ppm or less, or 50 mass ppm or less.

In the present specification, the total content of the ester components and the content of phenethyl alcohol can be measured by a gas chromatography-mass spectrometry (GC-MS) method.

When the processed food according to an embodiment of the present invention is a beer-taste beverage, the content of pyroglutamic acid is, from the viewpoint of producing a processed food with further improved taste, preferably 10 μg/g or more, 20 μg/g or more, 30 μg/g or more, 40 μg/g or more, 50 μg/g or more, 60 μg/g or more, 70 μg/g or more, 80 μg/g or more, 90 μg/g or more, 100 μg/g or more, 110 μg/g or more, 120 μg/g or more, 130 μg/g or more, 140 μg/g or more, 150 μg/g or more, 160 μg/g or more, 170 μg/g or more, 180 μg/g or more, 190 μg/g or more, 200 μg/g or more, 210 μg/g or more, 220 μg/g or more, 230 μg/g or more, 240 μg/g or more, 250 μg/g or more, 260 μg/g or more, 270 μg/g or more, 280 μg/g or more, 290 μg/g or more, 300 μg/g or more, 310 μg/g or more, 320 μg/g or more, 330 μg/g or more, 340 μg/g or more, 350 μg/g or more, 360 μg/g or more, 370 μg/g or more, 380 μg/g or more, 390 μg/g or more, 400 μg/g or more, 410 μg/g or more, 420 μg/g or more, 430 μg/g or more, 440 μg/g or more, 450 μg/g or more, 460 μg/g or more, 470 μg/g or more, 480 μg/g or more, 490 μg/g or more, 500 μg/g or more, 510 μg/g or more, 520 μg/g or more, 530 μg/g or more, 540 μg/g or more, 550 μg/g or more, 560 μg/g or more, 570 μg/g or more, 580 μg/g or more, 590 μg/g or more, 600 μg/g or more, 610 μg/g or more, 620 μg/g or more, 630 μg/g or more, 640 μg/g or more, 650 μg/g or more, 660 μg/g or more, 670 μg/g or more, 680 μg/g or more, 690 μg/g or more, 700 μg/g or more, 710 μg/g or more, 720 μg/g or more, 730 μg/g or more, 740 μg/g or more, 750 μg/g or more, 760 μg/g or more, 770 μg/g or more, 780 μg/g or more, 790 μg/g or more, 800 μg/g or more, 810 μg/g or more, 820 μg/g or more, 830 μg/g or more, 840 μg/g or more, 850 μg/g or more, 860 μg/g or more, 870 μg/g or more, 880 μg/g or more, 890 μg/g or more, 900 μg/g or more, 910 μg/g or more, 920 μg/g or more, 930 μg/g or more, 940 μg/g or more, 950 μg/g or more, 960 μg/g or more, 970 μg/g or more, 980 μg/g or more, or 990 μg/g or more, and may be 1000 μg/g or less, 990 μg/g or less, 980 μg/g or less, 970 μg/g or less, 960 μg/g or less, 950 μg/g or less, 940 μg/g or less, 930 μg/g or less, 920 μg/g or less, 910 μg/g or less, 900 μg/g or less, 890 μg/g or less, 880 μg/g or less, 870 μg/g or less, 860 μg/g or less, 850 μg/g or less, 840 μg/g or less, 830 μg/g or less, 820 μg/g or less, 810 μg/g or less, 800 μg/g or less, 790 μg/g or less, 780 μg/g or less, 770 μg/g or less, 760 μg/g or less, 750 μg/g or less, 740 μg/g or less, 730 μg/g or less, 720 μg/g or less, 710 μg/g or less, 700 μg/g or less, 690 μg/g or less, 680 μg/g or less, 670 μg/g or less, 660 μg/g or less, 650 μg/g or less, 640 μg/g or less, 630 μg/g or less, 620 μg/g or less, 610 μg/g or less, 600 μg/g or less, 590 μg/g or less, 580 μg/g or less, 570 μg/g or less, 560 μg/g or less, 550 μg/g or less, 540 μg/g or less, 530 μg/g or less, 520 μg/g or less, 510 μg/g or less, 500 μg/g or less, 490 μg/g or less, 480 μg/g or less, 470 μg/g or less, 460 μg/g or less, 450 μg/g or less, 440 μg/g or less, 430 μg/g or less, 420 μg/g or less, 410 μg/g or less, 400 μg/g or less, 390 μg/g or less, 380 μg/g or less, 370 μg/g or less, 360 μg/g or less, 350 μg/g or less, 340 μg/g or less, 330 μg/g or less, 320 μg/g or less, 310 μg/g or less, 300 μg/g or less, 290 μg/g or less, 280 μg/g or less, 270 μg/g or less, 260 μg/g or less, 250 μg/g or less,

240 μg/g or less, 230 μg/g or less, 220 μg/g or less, 210 μg/g or less, 200 μg/g or less, 190 μg/g or less, 180 μg/g or less, 170 μg/g or less, 160 μg/g or less, 150 μg/g or less, 140 μg/g or less, 130 μg/g or less, 120 μg/g or less, 110 μg/g or less, 100 μg/g or less, 90 μg/g or less, 80 μg/g or less, 70 μg/g or less, 60 μg/g or less, 50 μg/g or less, 40 μg/g or less, 30 μg/g or less, or 20 μg/g or less.

When the processed food according to an embodiment of the present invention is a beer-taste beverage, the content of free amino nitrogen (FAN) may be 0.1 mg/100 mL or more, 0.3 mg/100 mL or more, 0.5 mg/100 mL or more, 0.7 mg/100 mL or more, 1.0 mg/100 mL or more, 1.5 mg/100 mL or more, 2.0 mg/100 mL or more, 2.5 mg/100 mL or more, 3.0 mg/100 mL or more, 3.5 mg/100 mL or more, 4.0 mg/100 mL or more, 4.5 mg/100 mL or more, 5.0 mg/100 mL or more, 5.5 mg/100 mL or more, 6.0 mg/100 mL or more, 6.5 mg/100 mL or more, 7.0 mg/100 mL or more, 7.5 mg/100 mL or more, 8.0 mg/100 mL or more, 8.5 mg/100 mL or more, 9.0 mg/100 mL or more, 9.5 mg/100 mL or more, 10.0 mg/100 mL or more, or 10.5 mg/100 mL or more, and may be 40.0 mg/100 mL or less, 35.0 mg/100 mL or less, 30.0 mg/100 mL or less, 29.0 mg/100 mL or less, 28.0 mg/100 mL or less, 27.0 mg/100 mL or less, 26.0 mg/100 mL or less, 25.0 mg/100 mL or less, 24.0 mg/100 mL or less, 23.0 mg/100 mL or less, 22.0 mg/100 mL or less, 21.0 mg/100 mL or less, 20.0 mg/100 mL or less, 19.0 mg/100 mL or less, 18.0 mg/100 mL or less, 17.0 mg/100 mL or less, 16.0 mg/100 mL or less, 15.0 mg/100 mL or less, 14.0 mg/100 mL or less, 13.0 mg/100 mL or less, 12.0 mg/100 mL or less, or 11.0 mg/100 mL or less.

The content of FAN can be adjusted by appropriately setting the addition of diluting water or carbonated water, the types of raw materials (such as malt, corn grits, and sugar solution), the amounts of raw materials, the type of enzyme, the amount of enzyme added (also including a proteolytic enzyme), the timing of enzyme addition, the time for proteolysis in a preparation tank, the pH in a preparation tank, the pH in the preparation step (wort production step from feeding of malt until before addition of yeast), the time for wort filtration, the set temperature and holding time in each temperature region in preparation of wort, the boiling time and pH in the boiling step, the original wort extract concentration in the pre-fermentation liquid, the original wort extract concentration in the fermentation step, the fermentation conditions (such as the oxygen concentration, aeration conditions, yeast species, amount of yeast added, the number of yeast grown, removal timing of yeast, fermentation temperature, fermentation time, pressure setting, and carbon dioxide concentration), and the like.

In addition, in the present specification, the content of FAN can be measured, for example, by a method described in 8.18 Free Amino Nitrogen of Revised BCOJ Beer Analysis Method (published by Public Interest Incorporated Foundation, The Brewing Society of Japan, edited by [Analysis Committee] Brewery Convention of Japan, Brewers Association of Japan, Enlarged and Revised Edition of 2013).

When the processed food according to an embodiment of the present invention is a beer-taste beverage, the apparent fermentation degree may be 0% or more, 5% or more, 10% or more, 15% or more, 20% or more, 25% or more, 30% or more, 35% or more, 40% or more, or 50% or more, 60% or more, 70% or more, 80% or more, 82% or more, 84% or more, 86% or more, 88% or more, 90% or more, or 92% or more, and may be 120% or less, 115% or less, 110% or less, 105% or less, 100% or less, 95% or less, 90% or less, 85% or less, 80% or less, 75% or less, 70% or less, 65% or less, 60% or less, or 55% or less.

The apparent fermentation degree can be adjusted by appropriately setting the addition of diluting water or carbonated water, the types of raw materials (such as malt, corn grits, and sugar solution), the amounts of raw materials, the type of enzyme, the amount of enzyme added (also including a saccharolytic enzyme or an isomerase), the temperature in enzymatic reaction, the timing of enzyme addition, the saccharification time, the pH during saccharification, the temperature during saccharification, the pH in the preparation step (wort production step from feeding of malt until before addition of yeast), the temperature in the preparation step, the time for wort filtration, the set temperature and holding time in each temperature region in preparation of wort (including during saccharification), the original wort extract concentration in the pre-fermentation liquid, the original wort extract concentration in the fermentation step, the fermentation conditions (such as the oxygen concentration, aeration conditions, yeast species, amount of yeast added, the number of yeast grown, removal timing of yeast, fermentation temperature, fermentation time, pressure setting, and carbon dioxide concentration), and the like.

In the present specification, the "apparent fermentation degree" means the proportion of the concentration of sugar that can be consumed by yeast as a nutrient source for alcoholic fermentation to the total concentration of sugar contained in the pre-fermentation liquid. For example, the apparent fermentation degree AA of the beer-taste beverage can be calculated from Formula (1) below.

$$\text{Formula (1): } AA\ (\%) = 100 \times (P - Es)/P$$

In the above Formula (1), "P" represents an original extract (original wort extract) and can be measured by a method described in "BCOJ Beer Analysis Method (published by The Brewing Society of Japan, edited by Brewers Association of Japan, revised: November 1, 2004)".

"Es" represents an apparent extract of the beer-taste beverage. The apparent extract can be calculated from the

following Formula (2), as described in, for example, "BCOJ Beer Analysis Method (published by The Brewing Society of Japan, edited by Brewers Association of Japan, revised: November 1, 2004)".

$$\text{Formula (2): } Es = -460.234 + 662.649 \times D - 202.414 \times D^2$$

In Formula (2), D is the specific gravity of a degassed beer-taste beverage.

The apparent extract "Es" may have a negative value depending on D in Formula (2), and thus the calculated apparent fermentation degree may exceed 100%.

When the processed food according to an embodiment of the present invention is a beer-taste beverage, the sugar content may be 0.1 g/100 mL or more, 0.2 g/100 mL or more, 0.3 g/100 mL or more, 0.4 g/100 mL or more, 0.5 g/100 mL or more, 0.6 g/100 mL or more, 0.7 g/100 mL or more, 0.8 g/100 mL or more, 0.9 g/100 mL or more, 1.0 g/100 mL or more, 1.1 g/100 mL or more, 1.2 g/100 mL or more, 1.3 g/100 mL or more, 1.4 g/100 mL or more, 1.5 g/100 mL or more, 1.6 g/100 mL or more, 1.7 g/100 mL or more, 1.8 g/100 mL or more, 1.9 g/100 mL or more, 2.0 g/100 mL or more, 2.1 g/100 mL or more, 2.2 g/100 mL or more, 2.3 g/100 mL or more, 2.4 g/100 mL or more, 2.5 g/100 mL or more, 2.6 g/100 mL or more, 2.7 g/100 mL or more, 2.8 g/100 mL or more, 2.9 g/100 mL or more, 3.0 g/100 mL or more, 3.1 g/100 mL or more, 3.2 g/100 mL or more, 3.3 g/100 mL or more, 3.4 g/100 mL or more, 3.5 g/100 mL or more, 3.6 g/100 mL or more, 3.7 g/100 mL or more, 3.8 g/100 mL or more, 3.9 g/100 mL or more, 4.0 g/100 mL or more, 4.1 g/100 mL or more, 4.2 g/100 mL or more, 4.3 g/100 mL or more, 4.4 g/100 mL or more, 4.5 g/100 mL or more, 4.6 g/100 mL or more, 4.7 g/100 mL or more, 4.8 g/100 mL or more, 4.9 g/100 mL or more, 5.0 g/100 mL or more, 5.1 g/100 mL or more, 5.2 g/100 mL or more, 5.3 g/100 mL or more, 5.4 g/100 mL or more, 5.5 g/100 mL or more, 5.6 g/100 mL or more, 5.7 g/100 mL or more, 5.8 g/100 mL or more, 5.9 g/100 mL or more, 6.0 g/100 mL or more, 6.1 g/100 mL or more, 6.2 g/100 mL or more, 6.3 g/100 mL or more, 6.4 g/100 mL or more, 6.5 g/100 mL or more, 6.6 g/100 mL or more, 6.7 g/100 mL or more, 6.8 g/100 mL or more, 6.9 g/100 mL or more, 7.0 g/100 mL or more, 7.1 g/100 mL or more, 7.2 g/100 mL or more, 7.3 g/100 mL or more, 7.4 g/100 mL or more, 7.5 g/100 mL or more, 7.6 g/100 mL or more, 7.7 g/100 mL or more, 7.8 g/100 mL or more, 7.9 g/100 mL or more, 8.0 g/100 mL or more, 8.1 g/100 mL or more, 8.2 g/100 mL or more, 8.3 g/100 mL or more, 8.4 g/100 mL or more, 8.5 g/100 mL or more, 8.6 g/100 mL or more, 8.7 g/100 mL or more, 8.8 g/100 mL or more, 8.9 g/100 mL or more, 9.0 g/100 mL or more, 9.1 g/100 mL or more, 9.2 g/100 mL or more, 9.3 g/100 mL or more, 9.4 g/100 mL or more, 9.5 g/100 mL or more, 9.6 g/100 mL or more, 9.7 g/100 mL or more, 9.8 g/100 mL or more, 9.9 g/100 mL or more, 10.0 g/100 mL or more, 10.1 g/100 mL or more, 10.2 g/100 mL or more, 10.3 g/100 mL or more, 10.4 g/100 mL or more, 10.5 g/100 mL or more, 10.6 g/100 mL or more, 10.7 g/100 mL or more, 10.8 g/100 mL or more, 10.9 g/100 mL or more, 11.0 g/100 mL or more, 11.1 g/100 mL or more, 11.2 g/100 mL or more, 11.3 g/100 mL or more, 11.4 g/100 mL or more, 11.5 g/100 mL or more, 11.6 g/100 mL or more, 11.7 g/100 mL or more, 11.8 g/100 mL or more, 11.9 g/100 mL or more, 12.0 g/100 mL or more, 12.1 g/100 mL or more, 12.2 g/100 mL or more, 12.3 g/100 mL or more, 12.4 g/100 mL or more, 12.5 g/100 mL or more, 12.6 g/100 mL or more, 12.7 g/100 mL or more, 12.8 g/100 mL or more, 12.9 g/100 mL or more, 13.0 g/100 mL or more, 13.1 g/100 mL or more, 13.2 g/100 mL or more, 13.3 g/100 mL or more, 13.4 g/100 mL or more, 13.5 g/100 mL or more, 13.6 g/100 mL or more, 13.7 g/100 mL or more, 13.8 g/100 mL or more, 13.9 g/100 mL or more, 14.0 g/100 mL or more, 14.1 g/100 mL or more, 14.2 g/100 mL or more, 14.3 g/100 mL or more, 14.4 g/100 mL or more, 14.5 g/100 mL or more, 14.6 g/100 mL or more, 14.7 g/100 mL or more, 14.8 g/100 mL or more, 14.9 g/100 mL or more, 15.0 g/100 mL or more, 15.1 g/100 mL or more, 15.2 g/100 mL or more, 15.3 g/100 mL or more, 15.4 g/100 mL or more, 15.5 g/100 mL or more, 15.6 g/100 mL or more, 15.7 g/100 mL or more, 15.8 g/100 mL or more, 15.9 g/100 mL or more, 16.0 g/100 mL or more, 16.1 g/100 mL or more, 16.2 g/100 mL or more, 16.3 g/100 mL or more, 16.4 g/100 mL or more, 16.5 g/100 mL or more, 16.6 g/100 mL or more, 16.7 g/100 mL or more, 16.8 g/100 mL or more, 16.9 g/100 mL or more, 17.0 g/100 mL or more, 17.1 g/100 mL or more, 17.2 g/100 mL or more, 17.3 g/100 mL or more, 17.4 g/100 mL or more, 17.5 g/100 mL or more, 17.6 g/100 mL or more, 17.7 g/100 mL or more, 17.8 g/100 mL or more, 17.9 g/100 mL or more, 18.0 g/100 mL or more, 18.1 g/100 mL or more, 18.2 g/100 mL or more, 18.3 g/100 mL or more, 18.4 g/100 mL or more, 18.5 g/100 mL or more, 18.6 g/100 mL or more, 18.7 g/100 mL or more, 18.8 g/100 mL or more, 18.9 g/100 mL or more, 19.0 g/100 mL or more, 19.1 g/100 mL or more, 19.2 g/100 mL or more, 19.3 g/100 mL or more, 19.4 g/100 mL or more, 19.5 g/100 mL or more, 19.6 g/100 mL or more, 19.7 g/100 mL or more, 19.8 g/100 mL or more, or 19.9 g/100 mL or more.

When the processed food according to an embodiment of the present invention is a beer-taste beverage, the sugar content may be 20.0 g/100 mL or less, 19.9 g/100 mL or less, 19.8 g/100 mL or less, 19.7 g/100 mL or less, 19.6 g/100 mL or less, 19.5 g/100 mL or less, 19.4 g/100 mL or less, 19.3 g/100 mL or less, 19.2 g/100 mL or less, 19.1 g/100 mL or less, 19.0 g/100 mL or less, 18.9 g/100 mL or less, 18.8 g/100 mL or less, 18.7 g/100 mL or less, 18.6 g/100 mL or less, 18.5 g/100 mL or less, 18.4 g/100 mL or less, 18.3 g/100 mL or less, 18.2 g/100 mL or less, 18.1 g/100 mL or less, 18.0 g/100 mL or less, 17.9 g/100 mL or less, 17.8 g/100 mL or less, 17.7 g/100 mL or less, 17.6 g/100 mL or less, 17.5 g/100 mL or less, 17.4 g/100 mL or less, 17.3 g/100 mL or less, 17.2 g/100 mL or less, 17.1 g/100 mL or less, 17.0 g/100 mL or less, 16.9 g/100 mL or less, 16.8 g/100 mL or less, 16.7 g/100 mL or less, 16.6 g/100 mL or less, 16.5 g/100 mL or less, 16.4 g/100 mL or less, 16.3 g/100 mL or less, 16.2 g/100 mL or less, 16.1 g/100 mL or less, 16.0 g/100 mL or less, 15.9 g/100 mL or less,

15.8 g/100 mL or less, 15.7 g/100 mL or less, 15.6 g/100 mL or less, 15.5 g/100 mL or less, 15.4 g/100 mL or less, 15.3 g/100 mL or less, 15.2 g/100 mL or less, 15.1 g/100 mL or less, 15.0 g/100 mL or less, 14.9 g/100 mL or less, 14.8 g/100 mL or less, 14.7 g/100 mL or less, 14.6 g/100 mL or less, 14.5 g/100 mL or less, 14.4 g/100 mL or less, 14.3 g/100 mL or less, 14.2 g/100 mL or less, 14.1 g/100 mL or less, 14.0 g/100 mL or less, 13.9 g/100 mL or less, 13.8 g/100 mL or less, 13.7 g/100 mL or less, 13.6 g/100 mL or less, 13.5 g/100 mL or less, 13.4 g/100 mL or less, 13.3 g/100 mL or less, 13.2 g/100 mL or less, 13.1 g/100 mL or less, 13.0 g/100 mL or less, 12.9 g/100 mL or less, 12.8 g/100 mL or less, 12.7 g/100 mL or less, 12.6 g/100 mL or less, 12.5 g/100 mL or less, 12.4 g/100 mL or less, 12.3 g/100 mL or less, 12.2 g/100 mL or less, 12.1 g/100 mL or less, 12.0 g/100 mL or less, 11.9 g/100 mL or less, 11.8 g/100 mL or less, 11.7 g/100 mL or less, 11.6 g/100 mL or less, 11.5 g/100 mL or less, 11.4 g/100 mL or less, 11.3 g/100 mL or less, 11.2 g/100 mL or less, 11.1 g/100 mL or less, 11.0 g/100 mL or less, 10.9 g/100 mL or less, 10.8 g/100 mL or less, 10.7 g/100 mL or less, 10.6 g/100 mL or less, 10.5 g/100 mL or less, 10.4 g/100 mL or less, 10.3 g/100 mL or less, 10.2 g/100 mL or less, 10.1 g/100 mL or less, 10.0 g/100 mL or less, 9.9 g/100 mL or less, 9.8 g/100 mL or less, 9.7 g/100 mL or less, 9.6 g/100 mL or less, 9.5 g/100 mL or less, 9.4 g/100 mL or less, 9.3 g/100 mL or less, 9.2 g/100 mL or less, 9.1 g/100 mL or less, 9.0 g/100 mL or less, 8.9 g/100 mL or less, 8.8 g/100 mL or less, 8.7 g/100 mL or less, 8.6 g/100 mL or less, 8.5 g/100 mL or less, 8.4 g/100 mL or less, 8.3 g/100 mL or less, 8.2 g/100 mL or less, 8.1 g/100 mL or less, 8.0 g/100 mL or less, 7.9 g/100 mL or less, 7.8 g/100 mL or less, 7.7 g/100 mL or less, 7.6 g/100 mL or less, 7.5 g/100 mL or less, 7.4 g/100 mL or less, 7.3 g/100 mL or less, 7.2 g/100 mL or less, 7.1 g/100 mL or less, 7.0 g/100 mL or less, 6.9 g/100 mL or less, 6.8 g/100 mL or less, 6.7 g/100 mL or less, 6.6 g/100 mL or less, 6.5 g/100 mL or less, 6.4 g/100 mL or less, 6.3 g/100 mL or less, 6.2 g/100 mL or less, 6.1 g/100 mL or less, 6.0 g/100 mL or less, 5.9 g/100 mL or less, 5.8 g/100 mL or less, 5.7 g/100 mL or less, 5.6 g/100 mL or less, 5.5 g/100 mL or less, 5.4 g/100 mL or less, 5.3 g/100 mL or less, 5.2 g/100 mL or less, 5.1 g/100 mL or less, 5.0 g/100 mL or less, 4.9 g/100 mL or less, 4.8 g/100 mL or less, 4.7 g/100 mL or less, 4.6 g/100 mL or less, 4.5 g/100 mL or less, 4.4 g/100 mL or less, 4.3 g/100 mL or less, 4.2 g/100 mL or less, 4.1 g/100 mL or less, 4.0 g/100 mL or less, 3.9 g/100 mL or less, 3.8 g/100 mL or less, 3.7 g/100 mL or less, 3.6 g/100 mL or less, 3.5 g/100 mL or less, 3.4 g/100 mL or less, 3.3 g/100 mL or less, 3.2 g/100 mL or less, 3.1 g/100 mL or less, 3.0 g/100 mL or less, 2.9 g/100 mL or less, 2.8 g/100 mL or less, 2.7 g/100 mL or less, 2.6 g/100 mL or less, 2.5 g/100 mL or less, 2.4 g/100 mL or less, 2.3 g/100 mL or less, 2.2 g/100 mL or less, 2.1 g/100 mL or less, or 2.0 g/100 mL or less.

In addition, the beer-taste beverage may be a low-sugar beverage or a sugar-free beverage, and the specific sugar content may be less than 2.0 g/100 mL, 1.9 g/100 mL or less, 1.8 g/100 mL or less, 1.7 g/100 mL or less, 1.6 g/100 mL or less, 1.5 g/100 mL or less, 1.4 g/100 mL or less, 1.3 g/100 mL or less, 1.2 g/100 mL or less, 1.1 g/100 mL or less, 1.0 g/100 mL or less, less than 1.0 g/100 mL, 0.9 g/100 mL or less, 0.8 g/100 mL or less, 0.7 g/100 mL or less, 0.6 g/100 mL or less, 0.5 g/100 mL or less, less than 0.5 g/100 mL, 0.4 g/100 mL or less, 0.3 g/100 mL or less, 0.2 g/100 mL or less.

The sugar content can be adjusted by appropriately setting the addition of diluting water or carbonated water, the types of raw materials (such as malt, corn grits, and sugar solution), the amounts of raw materials, the type of enzyme, the amount of enzyme added (also including a saccharolytic enzyme or an isomerase), the timing of enzyme addition, the saccharification time, the pH during saccharification, the pH in the preparation step (wort production step from feeding of malt until before addition of yeast), the time for wort filtration, the set temperature and holding time in each temperature region in preparation of wort (including during saccharification), the original wort extract concentration in the pre-fermentation liquid, the original wort extract concentration in the fermentation step, the fermentation conditions (such as the oxygen concentration, aeration conditions, yeast species, amount of yeast added, the number of yeast grown, removal timing of yeast, fermentation temperature, fermentation time, pressure setting, and carbon dioxide concentration), and the like.

In addition, the "sugar" in the present specification refers to a sugar based on the Nutrition Labeling Standards for Foods (Ministry of Health, Labour and Welfare Notification No. 176, 2003, Consumer Affairs Agency Notification No. 8, Partial Revision, September 27, 2013) and specifically means a material in which protein, lipid, dietary fiber, ash, alcohol content, and water have been removed from the target food. Thus, the amount of sugar in a food can be calculated by subtracting the amounts of protein, lipid, dietary fiber, ash, and water from the weight of the food.

Here, the amounts of protein, lipid, dietary fiber, ash, and water can be measured by the methods described in the Nutrition Labeling Standards. Specifically, the amount of protein can be measured by a method of quantitative conversion of nitrogen, the amount of lipid can be measured by an ether extraction method, the amount of dietary fiber can be measured by the Prosky method, the amount of ash can be measured by a direct ashing method, and the amount of water can be measured by a method of heating and drying under reduced pressure.

When the processed food according to an embodiment of the present invention is a beer-taste beverage, the content of dietary fiber may be 0 g/100 mL or more, 0.05 g/100 mL or more, 0.1 g/100 mL or more, 0.15 g/100 mL or more, 0.2 g/100 mL or more, 0.25 g/100 mL or more, 0.3 g/100 mL or more, 0.35 g/100 mL or more, 0.4 g/100 mL or more, 0.5 g/100 mL or more, 0.7 g/100 mL or more, 1.0 g/100 mL or more, 1.5 g/100 mL or more, 2.0 g/100 mL or more, 2.5 g/100 mL or more, or 3.0 g/100 mL or more, and may be 5.0 g/100 mL or less, 4.5 g/100 mL or less, 4.0 g/100 mL or less, 3.5 g/100 mL or less, 3.0 g/100 mL or less, 2.5 g/100 mL or less, 2.0 g/100 mL or less, 1.5 g/100 L or less, 1.0 g/100 mL or less, 0.75 g/100 mL or less, 0.60 g/100 mL or less, 0.50 g/100 mL or less, 0.40 g/100 mL or less, 0.35 g/100 mL or less, 0.30 g/100 mL or less, 0.25 g/100 mL or less, 0.20 g/100 mL or less, 0.15 g/100 mL or less, or 0.10 g/100 mL or less.

"Dietary fiber" is a general term for indigestible components which are contained in foods and are not digested or hardly digested by digestive enzymes in the human stomach, intestine, or the like, and is broadly divided into water-soluble dietary fiber, which is water-soluble, and insoluble dietary fiber, which is insoluble in water.

Examples of the water-soluble dietary fiber include indigestible dextrin, polydextrose, guar gum degradation products, pectin, glucomannan, alginic acid, laminarin, fucoidin, and carrageenan. In addition, examples of the insoluble dietary fiber include cellulose, hemicellulose, lignin, chitin, and chitosan.

In the present invention, the dietary fiber may be not only a dietary fiber incorporated by addition but also a dietary fiber originating from a raw material or a dietary fiber originating from an animal or plant, and the origin is not particularly limited.

The content of dietary fiber can be adjusted by appropriately setting the addition of diluting water or carbonated water, the types of raw materials (such as malt, corn grits, and sugar solution), the amounts of raw materials, the type of enzyme, the amount of enzyme added (also including a saccharolytic enzyme or an isomerase), the timing of enzyme addition, the saccharification time, the pH during saccharification, the pH in the preparation step (wort production step from feeding of malt until before addition of yeast), the time for wort filtration, the set temperature and holding time in each temperature region in preparation of wort (including during saccharification), the original wort extract concentration in the pre-fermentation liquid, the original wort extract concentration in the fermentation step, the fermentation conditions (such as the oxygen concentration, aeration conditions, yeast species, amount of yeast added, the number of yeast grown, removal timing of yeast, fermentation temperature, fermentation time, pressure setting, and carbon dioxide concentration), and the like.

In addition, in the present specification, the content of dietary fiber can be measured by the Prosky method.

When the processed food according to an embodiment of the present invention is a beer-taste beverage, the total polyphenol amount may be 0 mass ppm or more, 5 mass ppm or more, 10 mass ppm or more, 15 mass ppm or more, 20 mass ppm or more, 25 mass ppm or more, 30 mass ppm or more, 35 mass ppm or more, 40 mass ppm or more, 45 mass ppm or more, 50 mass ppm or more, 55 mass ppm or more, 60 mass ppm or more, 65 mass ppm or more, 70 mass ppm or more, 75 mass ppm or more, 80 mass ppm or more, 85 mass ppm or more, 90 mass ppm or more, 95 mass ppm or more, 100 mass ppm or more, 110 mass ppm or more, 120 mass ppm or more, 130 mass ppm or more, 140 mass ppm or more, 150 mass ppm or more, 160 mass ppm or more, or 170 mass ppm or more, and may be 300 mass ppm or less, 290 mass ppm or less, 280 mass ppm or less, 270 mass ppm or less, 260 mass ppm or less, 250 mass ppm or less, 240 mass ppm or less, 230 mass ppm or less, 220 mass ppm or less, 210 mass ppm or less, 200 mass ppm or less, 190 mass ppm or less, or 180 mass ppm or less.

The total polyphenol amount can be performed by appropriately setting the addition of diluting water or carbonated water, the types of raw materials (such as malt, corn grits, and sugar solution), the amounts of raw materials, the type of enzyme, the amount of enzyme added, the timing of enzyme addition, aeration time in a preparation tank (such as mash aeration), the pH in a preparation tank, the pH in the preparation step (wort production step from feeding of malt until before addition of yeast), the time for wort filtration, the set temperature and holding time in each temperature region in preparation of wort (including during saccharification), the original wort extract concentration in the pre-fermentation liquid, the original wort extract concentration in the fermentation step, the fermentation conditions (such as the oxygen concentration, aeration conditions, yeast species, amount of yeast added, the number of yeast grown, removal timing of yeast, fermentation temperature, fermentation time, pressure setting, and carbon dioxide concentration), and the like.

In addition, the total polyphenol amount can be controlled by adjusting the usage amount of a raw material with a high polyphenol content, such as barley malt or malt husks (hulls). Specifically, the total polyphenol amount can be increased by increasing the usage amount of a raw material with a high polyphenol content, such as malt.

In addition, in the present specification, the total polyphenol amount can be measured, for example, by a method described in Revised BCOJ Beer Analysis Method (published by Public Interest Incorporated Foundation, The Brewing Society of Japan, edited by Analysis Committee, Brewery Convention of Japan, Brewers Association of Japan, Enlarged and Revised Edition of 2013).

When the processed food according to an embodiment of the present invention is a beer-taste beverage, the content of proline may be 0.1 mg/100 mL or more, 0.5 mg/100 mL or more, 1.0 mg/100 mL or more, 2.0 mg/100 mL or more, 3.0 mg/100 mL or more, 5.0 mg/100 mL or more, 7.0 mg/100 mL or more, 10.0 mg/100 mL or more, 12.0 mg/100 mL or more, 15.0 mg/100 mL or more, 17.0 mg/100 mL or more, 20.0 mg/100 mL or more, 25.0 mg/100 mL or more, 30.0 mg/100 mL or more, 35.0 mg/100 mL or more, 40.0 mg/100 mL or more, 45.0 mg/100 mL or more, 50.0 mg/100 mL or more, 55.0 mg/100 mL or more, 60.0 mg/100 mL or more, 65.0 mg/100 mL or more, 70.0 mg/100 mL or more, 75.0 mg/100 mL or more, 80.0 mg/100 mL or more, 85.0 mg/100 mL or more, 90.0 mg/100 mL or more, 95.0 mg/100 mL or more, 100 mg/100 mL or more, 105 mg/100 mL or more, 110 mg/100 mL or more, 115 mg/100 mL or more, 120 mg/100 mL or more, 125 mg/100 mL or more, 130 mg/100 mL or more, 135 mg/100 mL or more, 140 mg/100 mL or more, 145 mg/100 mL or more, 150 mg/100 mL or more, 155 mg/100 mL or more, 160 mg/100 mL or more, 165 mg/100 mL or more, 170 mg/100 mL or more, 175 mg/100 mL or more, 180 mg/100 mL or more, 185 mg/100 mL or more, 190 mg/100 mL or more, 195 mg/100 mL or more, 200 mg/100 mL or more, 205 mg/100 mL or more, 210 mg/100 mL or more, 215 mg/100 mL or more, 220 mg/100 mL or

more, 225 mg/100 mL or more, 230 mg/100 mL or more, 235 mg/100 mL or more, 240 mg/100 mL or more, 245 mg/100 mL or more, 250 mg/100 mL or more, 255 mg/100 mL or more, 260 mg/100 mL or more, 265 mg/100 mL or more, 270 mg/100 mL or more, 275 mg/100 mL or more, 280 mg/100 mL or more, 285 mg/100 mL or more, 290 mg/100 mL or more, or 295 mg/100 mL or more, and may be 300 mg/100 mL or less, 295 mg/100 mL or less, 290 mg/100 mL or less, 285 mg/100 mL or less, 280 mg/100 mL or less, 275 mg/100 mL or less, 270 mg/100 mL or less, 265 mg/100 mL or less, 260 mg/100 mL or less, 255 mg/100 mL or less, 250 mg/100 mL or less, 245 mg/100 mL or less, 240 mg/100 mL or less, 235 mg/100 mL or less, 230 mg/100 mL or less, 225 mg/100 mL or less, 220 mg/100 mL or less, 215 mg/100 mL or less, 210 mg/100 mL or less, 205 mg/100 mL or less, 200 mg/100 mL or less, 195 mg/100 mL or less, 190 mg/100 mL or less, 185 mg/100 mL or less, 180 mg/100 mL or less, 175 mg/100 mL or less, 170 mg/100 mL or less, 165 mg/100 mL or less, 160 mg/100 mL or less, 155 mg/100 mL or less, 150 mg/100 mL or less, 145 mg/100 mL or less, 140 mg/100 mL or less, 135 mg/100 mL or less, 130 mg/100 mL or less, 125 mg/100 mL or less, 120 mg/100 mL or less, 115 mg/100 mL or less, 110 mg/100 mL or less, 105 mg/100 mL or less, 100 mg/100 mL or less, 95.0 mg/100 mL or less, 90.0 mg/100 mL or less, 85.0 mg/100 mL or less, 80.0 mg/100 mL or less, 75.0 mg/100 mL or less, 70.0 mg/100 mL or less, 65.0 mg/100 mL or less, 60.0 mg/100 mL or less, 55.0 mg/100 mL or less, 50.0 mg/100 mL or less, 45.0 mg/100 mL or less, 40.0 mg/100 mL or less, 35.0 mg/100 mL or less, 32.5 mg/100 mL or less, 30.0 mg/100 mL or less, 27.5 mg/100 mL or less, 25.0 mg/100 mL or less, 22.5 mg/100 mL or less, 20.0 mg/100 mL or less, 19.0 mg/100 mL or less, 18.0 mg/100 mL or less, 17.0 mg/100 mL or less, 16.0 mg/100 mL or less, or 15.0 mg/100 mL or less.

Proline is a type of amino acid that is contained in a relatively large amount in barley, such as malt, and whose content does not change much before and after the fermentation step. Adjusting the content of proline results in a beer-taste beverage with even better taste.

In the present specification, the content of proline can be measured, for example, using an automatic amino acid analyzer L-8800A available from Hitachi, Ltd. or the like.

When the processed food according to an embodiment of the present invention is a beer-taste beverage, from the viewpoint of making a beverage with excellent taste typical of a beer-taste beverage, the original wort extract concentration may be 5.0 mass% or more, 5.1 mass% or more, 5.2 mass% or more, 5.3 mass% or more, 5.4 mass% or more, 5.5 mass% or more, 5.6 mass% or more, 5.7 mass% or more, 5.8 mass% or more, 5.9 mass% or more, 6.0 mass% or more, 6.1 mass% or more, 6.2 mass% or more, 6.3 mass% or more, 6.4 mass% or more, 6.5 mass% or more, 6.6 mass% or more, 6.7 mass% or more, 6.8 mass% or more, 6.9 mass% or more, 7.0 mass% or more, 7.1 mass% or more, 7.2 mass% or more, 7.3 mass% or more, 7.4 mass% or more, 7.5 mass% or more, 7.6 mass% or more, 7.7 mass% or more, 7.8 mass% or more, 7.9 mass% or more, 8.0 mass% or more, 8.1 mass% or more, 8.2 mass% or more, 8.3 mass% or more, 8.4 mass% or more, 8.5 mass% or more, 8.6 mass% or more, 8.7 mass% or more, 8.8 mass% or more, 8.9 mass% or more, 9.0 mass% or more, 9.1 mass% or more, 9.2 mass% or more, 9.3 mass% or more, 9.4 mass% or more, 9.5 mass% or more, 9.6 mass% or more, 9.7 mass% or more, 9.8 mass% or more, 9.9 mass% or more, 10.0 mass% or more, 10.1 mass% or more, 10.2 mass% or more, 10.3 mass% or more, 10.4 mass% or more, 10.5 mass% or more, 10.6 mass% or more, 10.7 mass% or more, 10.8 mass% or more, 10.9 mass% or more, 11.0 mass% or more, 11.1 mass% or more, 11.2 mass% or more, 11.3 mass% or more, 11.4 mass% or more, 11.5 mass% or more, 11.6 mass% or more, 11.7 mass% or more, 11.8 mass% or more, 11.9 mass% or more, 12.0 mass% or more, 12.1 mass% or more, 12.2 mass% or more, 12.3 mass% or more, 12.4 mass% or more, 12.5 mass% or more, 12.6 mass% or more, 12.7 mass% or more, 12.8 mass% or more, 12.9 mass% or more, 13.0 mass% or more, 13.1 mass% or more, 13.2 mass% or more, 13.3 mass% or more, 13.4 mass% or more, 13.5 mass% or more, 13.6 mass% or more, 13.7 mass% or more, 13.8 mass% or more, 13.9 mass% or more, 14.0 mass% or more, 14.1 mass% or more, 14.2 mass% or more, 14.3 mass% or more, 14.4 mass% or more, 14.5 mass% or more, 14.6 mass% or more, 14.7 mass% or more, 14.8 mass% or more, 14.9 mass% or more, 15.0 mass% or more, 15.1 mass% or more, 15.2 mass% or more, 15.3 mass% or more, 15.4 mass% or more, 15.5 mass% or more, 15.6 mass% or more, 15.7 mass% or more, 15.8 mass% or more, 15.9 mass% or more, 16.0 mass% or more, 16.1 mass% or more, 16.2 mass% or more, 16.3 mass% or more, 16.4 mass% or more, 16.5 mass% or more, 16.6 mass% or more, 16.7 mass% or more, 16.8 mass% or more, 16.9 mass% or more, 17.0 mass% or more, 17.1 mass% or more, 17.2 mass% or more, 17.3 mass% or more, 17.4 mass% or more, 17.5 mass% or more, 17.6 mass% or more, 17.7 mass% or more, 17.8 mass% or more, 17.9 mass% or more, 18.0 mass% or more, 18.1 mass% or more, 18.2 mass% or more, 18.3 mass% or more, 18.4 mass% or more, 18.5 mass% or more, 18.6 mass% or more, 18.7 mass% or more, 18.8 mass% or more, 18.9 mass% or more, 19.0 mass% or more, 19.1 mass% or more, 19.2 mass% or more, 19.3 mass% or more, 19.4 mass% or more, 19.5 mass% or more, 19.6 mass% or more, 19.7 mass% or more, 19.8 mass% or more, or 19.9 mass% or more.

When the processed food according to an embodiment of the present invention is a beer-taste beverage, from the view point of making a beverage with distinguished refreshing aroma and sweet aroma typical of a beer-taste beverage, the original wort extract concentration may be 20.0 mass% or less, 19.9 mass% or less, 19.8 mass% or less, 19.7 mass% or less, 19.6 mass% or less, 19.5 mass% or less, 19.4 mass% or less, 19.3 mass% or less, 19.2 mass% or less, 19.1 mass% or less, 19.0 mass% or less, 18.9 mass% or less, 18.8 mass% or less, 18.7 mass% or less, 18.6 mass% or less, 18.5 mass% or less, 18.4 mass% or less, 18.3 mass% or less, 18.2 mass% or less, 18.1 mass% or less, 18.0 mass% or less, 17.9 mass% or less, 17.8 mass% or less, 17.7 mass% or less, 17.6 mass% or less, 17.5 mass% or less, 17.4 mass%

or less, 17.3 mass% or less, 17.2 mass% or less, 17.1 mass% or less, 17.0 mass% or less, 16.9 mass% or less, 16.8 mass% or less, 16.7 mass% or less, 16.6 mass% or less, 16.5 mass% or less, 16.4 mass% or less, 16.3 mass% or less, 16.2 mass% or less, 16.1 mass% or less, 16.0 mass% or less, 15.9 mass% or less, 15.8 mass% or less, 15.7 mass% or less, 15.6 mass% or less, 15.5 mass% or less, 15.4 mass% or less, 15.3 mass% or less, 15.2 mass% or less, 15.1 mass% or less, 15.0 mass% or less, 14.9 mass% or less, 14.8 mass% or less, 14.7 mass% or less, 14.6 mass% or less, 14.5 mass% or less, 14.4 mass% or less, 14.3 mass% or less, 14.2 mass% or less, 14.1 mass% or less, 14.0 mass% or less, 13.9 mass% or less, 13.8 mass% or less, 13.7 mass% or less, 13.6 mass% or less, 13.5 mass% or less, 13.4 mass% or less, 13.3 mass% or less, 13.2 mass% or less, 13.1 mass% or less, 13.0 mass% or less, 12.9 mass% or less, 12.8 mass% or less, 12.7 mass% or less, 12.6 mass% or less, 12.5 mass% or less, 12.4 mass% or less, 12.3 mass% or less, 12.2 mass% or less, 12.1 mass% or less, 12.0 mass% or less, 11.9 mass% or less, 11.8 mass% or less, 11.7 mass% or less, 11.6 mass% or less, 11.5 mass% or less, 11.4 mass% or less, 11.3 mass% or less, 11.2 mass% or less, 11.1 mass% or less, 11.0 mass% or less, 10.9 mass% or less, 10.8 mass% or less, 10.7 mass% or less, 10.6 mass% or less, 10.5 mass% or less, 10.4 mass% or less, 10.3 mass% or less, 10.2 mass% or less, 10.1 mass% or less, 10.0 mass% or less, 9.9 mass% or less, 9.8 mass% or less, 9.7 mass% or less, 9.6 mass% or less, 9.5 mass% or less, 9.4 mass% or less, 9.3 mass% or less, 9.2 mass% or less, 9.1 mass% or less, 9.0 mass% or less, 8.9 mass% or less, 8.8 mass% or less, 8.7 mass% or less, 8.6 mass% or less, 8.5 mass% or less, 8.4 mass% or less, 8.3 mass% or less, 8.2 mass% or less, 8.1 mass% or less, 8.0 mass% or less, 7.9 mass% or less, 7.8 mass% or less, 7.7 mass% or less, 7.6 mass% or less, 7.5 mass% or less, 7.4 mass% or less, 7.3 mass% or less, 7.2 mass% or less, 7.1 mass% or less, 7.0 mass% or less, 6.9 mass% or less, 6.8 mass% or less, 6.7 mass% or less, 6.6 mass% or less, 6.5 mass% or less, 6.4 mass% or less, 6.3 mass% or less, 6.2 mass% or less, 6.1 mass% or less, 6.0 mass% or less, 5.9 mass% or less, 5.8 mass% or less, 5.7 mass% or less, 5.6 mass% or less, 5.5 mass% or less, 5.4 mass% or less, 5.3 mass% or less, 5.2 mass% or less, or 5.1 mass% or less.

The "original wort extract concentration" in the present specification can be measured by the method described in "BCOJ Beer Analysis Method" (published by The Brewing Society of Japan, edited by Brewers Association of Japan, revised edition of November 1, 2004).

When the processed food according to an embodiment of the present invention is a beer-taste beverage, the product of the malt proportion (unit: mass%) and the original wort extract concentration (unit: mass%) [malt proportion × original wort extract concentration] of the beverage may be 100 or more, 120 or more, 150 or more, 170 or more, 200 or more, 220 or more, 250 or more, 270 or more, 300 or more, 350 or more, 400 or more, 450 or more, 500 or more, 550 or more, 600 or more, 650 or more, 700 or more, 750 or more, 800 or more, 850 or more, 900 or more, 950 or more, 1000 or more, 1100 or more, 1200 or more, 1300 or more, 1400 or more, 1500 or more, 1600 or more, or 1700 or more, and may be 10000 or less, 9500 or less, 9000 or less, 8500 or less, 8000 or less, 7500 or less, 7000 or less, 6500 or less, 6000 or less, 5500 or less, 5000 or less, 4500 or less, 4000 or less, 3500 or less, 3000 or less, 2500 or less, or 2000 or less.

When the processed food according to an embodiment of the present invention is a beer-taste beverage, the bitterness value of the beverage is, from the viewpoint of making a beverage typical of a beer-taste beverage, preferably less than 60 BUs, more preferably 55 BUs or less, even more preferably 50 BUs or less, still more preferably 45 BUs or less, particularly preferably 40 BUs or less, or may be 35 BUs or less, 30 BUs or less, or 25 BUs or less.

When the processed food according to an embodiment of the present invention is a beer-taste beverage using hops as a raw material, the bitterness value of the beverage may be 5 BUs or more, 6.0 BUs or more, 7 BUs or more, 8.0 BUs or more, 9.0 BUs or more, 10 BUs or more, 11 BUs or more, 12 BUs or more, 13.0 BUs or more, 14.0 BUs or more, 15 BUs or more, 16.0 BUs or more, 17 BUs or more, 18.0 BUs or more, 19.0 BUs or more, 20.0 BUs or more, 21.0 BUs or more, 22.0 BUs or more, 23.0 BUs or more, 24.0 BUs or more, 25.0 BUs or more, 26.0 BUs or more, 27.0 BUs or more, 28.0 BUs or more, 29.0 BUs or more, 30.0 BUs or more, 40.0 BUs or more, 50.0 BUs or more, 60.0 BUs or more, 70.0 BUs or more, 80.0 BUs or more, 90.0 BUs or more, or 100 BUs or more, and may be 150 BUs or less, 120 BUs or less, 100 BUs or less, 90.0 BUs or less, 80.0 BUs or less, 70.0 BUs or less, 60.0 BUs or less, 50.0 BUs or less, 45.0 BUs or less, 40.0 BUs or less, 39.0 BUs or less, 38.0 BUs or less, 37.0 BUs or less, 36.0 BUs or less, or 35.0 BUs or less.

When the processed food according to an embodiment of the present invention is a beer-taste beverage made without using hops as a raw material, the bitterness value of the beverage may be less than 5.0 BUs, 3.0 BUs or less, 2.0 BUs or less, 1.0 BUs or less, 0.5 BUs or less, 0.3 BUs or less, 0.1 BUs or less, or 0.01 BUs or less.

The bitterness value of the beverage is an index of bitterness imparted by hop-derived components containing isohumulone as a main component and can be controlled by appropriately adjusting the usage amount of hops or a hop-derived component, such as a hop extract. The bitterness value can also be controlled by appropriately adjusting the type of hop, the amount of hop added, and the timing of hop addition.

In the present specification, the "bitterness value" of the beverage can be measured by the measurement method described in "8.15 Bitterness Value" in Revised BCOJ Beer Analysis Method (published by Public Interest Incorporated Foundation, The Brewing Society of Japan, edited by [Analysis Committee] Brewery Convention of Japan, Brewers Association of Japan, Enlarged and Revised Edition of 2013).

When the processed food according to an embodiment of the present invention is a beer-taste beverage, the beer-taste beverage may further contain spirits derived from grain as an alcohol component to prepare the alcoholic

strength.

Here, the "spirits" means an alcoholic beverage produced by saccharifying grain, such as wheat, barley, rice, buckwheat, or corn, as a raw material using malt or, as necessary, an enzymatic agent, fermenting the saccharified product using yeast, and then distilling the fermented product.

Among these, from the viewpoint of making a beverage with good taste, the beer-taste beverage, a processed food according to an embodiment of the present invention, preferably contains spirits made from a plant belonging to the family Gramineae as a raw material, preferably contains spirits of barley or the like, and more preferably contains barley spirits or wheat spirits.

When the processed food according to an embodiment of the present invention is a beer-taste beverage, the color of the beer-taste beverage is not particularly limited, but the color may be amber or gold like ordinary beer, black like black beer, or colorless and transparent, or may be colored as desired by adding a colorant or the like. The color of the beer-taste beverage can be determined by the naked eye, but may be defined by the total light transmittance, chromaticity, or the like.

When the processed food according to an embodiment of the present invention is a beer-taste beverage, the chromaticity of the beer-taste beverage may be, for example, 0.1 EBC or more, more than 1.0 EBC, 1.5 EBC or more, 2.0 EBC or more, 2.5 EBC or more, 3.0 EBC or more, 3.5 EBC or more, 4.0 EBC or more, 4.5 EBC or more, 5.0 EBC or more, 5.5 EBC or more, 6.0 EBC or more, or 6.5 EBC or more, and from the viewpoint of making a beverage with excellent taste typical of a beer-taste beverage, the chromaticity of the beer-taste beverage is, preferably 7.0 EBC or more, more preferably 7.2 EBC or more, even more preferably 7.5 EBC or more, still more preferably 8.0 EBC or more, yet more preferably 8.5 EBC or more, particularly preferably 9.0 EBC or more, and further may be 9.5 EBC or more, 10.0 EBC or more, 10.5 EBC or more, 11.0 EBC or more, 11.5 EBC or more, 12.0 EBC or more, 12.5 EBC or more, or 13.0 EBC or more, and may be 250 EBC or less, 220 EBC or less, 200 EBC or less, 180 EBC or less, 160 EBC or less, 140 EBC or less, 120 EBC or less, 100 EBC or less, 80 EBC or less, 70 EBC or less, 60 EBC or less, 50 EBC or less, 40 EBC or less, 35 EBC or less, 30 EBC or less, 27 EBC or less, 25 EBC or less, 23 EBC or less, 20 EBC or less, 18 EBC or less, 16 EBC or less, or 15 EBC or less.

In the present specification, the "chromaticity" of the beer-taste beverage can be measured by the measurement method described in "8.8 Chromaticity" in Revised BCOJ Beer Analysis Method (published by Public Interest Incorporated Foundation, The Brewing Society of Japan, edited by Analysis Committee, Brewery Convention of Japan, Brewers Association of Japan, Enlarged and Revised Edition of 2013). The "chromaticity" of the beer-taste beverage is specified by the unit of chromaticity (EBC unit) defined by the European Brewery Convention. A beverage with a smaller numerical value has a lighter and brighter color, whereas a beverage with a larger numerical value has a deeper and darker color.

The chromaticity of the beer-taste beverage according to an embodiment of the present invention can be controlled, for example, by appropriately adjusting the type of malt used, the blending ratio in the case of using two or more types of malts in combination, or the boiling conditions for preparation of the pre-fermentation liquid. More specifically, for example, to increase the chromaticity of the beer-taste beverage, the chromaticity can be adjusted by increasing the blending proportion of dark malt as the malt, increasing the temperature during boiling treatment, increasing boiling time, performing decoction during preparation of a saccharified liquid, and the like. Further, the chromaticity can also be adjusted to a higher level by increasing the original wort extract concentration or increasing the malt proportion.

When the processed food according to an embodiment of the present invention is a beer-taste beverage, the pH of the beer-taste beverage is not particularly limited, but from the viewpoint of preventing the occurrence of microorganisms, the pH may be 5.0 or lower, 4.9 or lower, 4.8 or lower, 4.7 or lower, 4.6 or lower, 4.55 or lower, 4.5 or lower, 4.4 or lower, 4.3 or lower, 4.2 or lower, or 4.1 or lower, and from the viewpoint of improving the flavor of the beer-taste beverage, the pH may be 2.0 or higher, 2.1 or higher, 2.2 or higher, 2.3 or higher, 2.4 or higher, 2.5 or higher, 2.6 or higher, 2.7 or higher, 2.8 or higher, 2.9 or higher, 3.0 or higher, 3.1 or higher, 3.2 or higher, 3.3 or higher, 3.4 or higher, 3.5 or higher, 3.6 or higher, 3.7 or higher, 3.8 or higher, 3.9 or higher, 4.0 or higher, 4.1 or higher, or 4.2 or higher.

3 Raw material for beverage

When the processed food according to an embodiment of the present invention is a beverage, a raw material commonly used in each beverage can be used. For example, as a main raw material in the case of a beer-taste beverage, malt may be used together with water, or grains or saccharides other than malt may be used without using malt. Further, the beer-taste beverage may be a beverage made using hops as a raw material or may be a beverage made without using hops.

When the processed food according to an embodiment of the present invention is a beverage, a preservative, a sweetener, a water-soluble dietary fiber, a bittering agent or a bitterness-imparting agent, an antioxidant, a flavoring, an acidulant, a salt, or the like may be used according to the type of each beverage.

The beverage preferably contains a raw material having xanthine oxidase activity as the raw material for the beverage. The raw material having xanthine oxidase activity is described above, and a commercially available preparation

of xanthine oxidase may be used as the raw material.

When the beverage contains a raw material having xanthine oxidase activity as the raw material for the beverage, purines can be converted into uric acid by xanthine oxidase activity, and thus the beverage may contain a raw material containing purines.

The raw material containing purines is described above and is preferably malt in the case where the processed food according to an embodiment of the present invention is a beer-taste beverage.

3.1.1 Malt and grain other than malt

When the processed food according to an embodiment of the present invention is a beer-taste beverage, the malt to be used as the raw material refers to malt obtained by germinating seeds of barley or the like, such as barley, wheat, rye, wild oats, oats, adlay, or oats, drying the germinated seeds, and removing roots, and may be from any production area and of any variety.

The malt used in an embodiment of the present invention is preferably barley malt. Barley malt is one of the malts most commonly used as a raw material for Japanese beer-taste beverages. There are several types of barley, such as two-rowed barley and six-rowed barley, and any of them may be used. Further, in addition to ordinary malt, colored malt or the like can also be used. When colored malt is used, different types of colored malts may be appropriately used in combination, or one colored malt may be used.

The malt to be used in an embodiment of the present invention is preferably selected as appropriate in accordance with the desired chromaticity of the beer-taste beverage, and the malt to be selected may be used alone or in combination of two or more kinds thereof.

In addition to or instead of malt, a grain other than malt may be used.

Examples of such a grain include barley and the like that do not fall under malt (such as barley, wheat, rye, wild oats, oats, adlay, and oats), rice (such as white rice and brown rice), corn, kaoliang, potato, legumes (such as soybeans and peas), buckwheat, sorghum, foxtail millet, Japanese millet, starch resulting therefrom, and extracts thereof.

When the malt proportion is suppressed or malt is not used, a liquid sugar containing a carbon source can be used, and as a nitrogen source, a yeast extract, a protein derived from an animal or plant, or an amino acid-containing raw material (e.g., such as soy protein) other than malt, such as the grain described above, can be used.

As a specific embodiment of the case where the malt proportion is suppressed or malt is not used, it is preferable to increase amounts of yeast-assimilable raw materials (carbon source and nitrogen source) other than malt. Examples of the carbon source of the yeast-assimilable raw material include monosaccharides, disaccharides, trisaccharides, and sugar solutions thereof, and examples of the nitrogen source include yeast extract, amino acid-containing materials (such as soybean protein), soybean, yeast extract, pea, wheat malt, ungerminated grains, and decomposition products thereof. Although wheat malt may be used here, it is preferable not to use wheat malt from the viewpoint of allergen.

When the processed food according to an embodiment of the present invention is a beer-taste beverage, the beer-taste beverage may be a beer-taste beverage containing substantially no soybean peptide having a weight average molecular weight less than 10000 as a raw material, or may be a beer-taste beverage having no soybean peptide described above.

The "beer-taste beverage containing substantially no soybean peptide" means a beverage in which the soybean peptide is used in an amount less than 5.0 mass%, less than 3.0 mass%, less than 2.0 mass%, less than 1.0 mass%, less than 0.10 mass%, less than 0.01 mass%, less than 0.001 mass%, or less than 0.0001 mass%, with respect to the total amount (100 mass%) of raw materials excluding water of the beer-taste beverage.

When the processed food according to an embodiment of the present invention is a beer-taste beverage, the fruit, pericarp, bark, leaf, flower, stem, root, and seed of a plant other than plants of the Gramineae family such as barley, which can be used as a raw material, can be appropriately selected.

Specific examples of the plant other than plants of the Gramineae family include citrus fruits, soft fruits, herbs, and spices. Examples of the citrus fruits include an orange, Citrus junos, a lemon, a lime, a mandarin orange, a grapefruit, Citrus Iyo Group, Citrus japonica, Citrus sphaerocarpa, Citrus limetta 'Daidai', Citrus depressa, and Citrus sudachi.

Examples of the soft fruits include a peach, a grape, a banana, an apple, a grape, a pineapple, a strawberry, a pear, a muscat, and a blackcurrant. Examples of the herbs and the spices include coriander, pepper, fennel, Sichuan pepper, zanthoxyli fructus, cardamom, caraway, nutmeg, mace, juniper berry, allspice, vanilla, elderberry, grains of paradise, anise, and star anise.

These may be used as they are, may be used after being crushed, may be used in the form of an extract derived by extraction with an extraction solvent such as water or ethanol, or may be used after being squeezed (fruit juice or the like). One of these herbs and spices may be used alone, or two or more thereof may be used in combination.

In the case where the processed food according to an embodiment of the present invention is a beer-taste beverage, the above can be used as appropriate in accordance with the gusto of consumers, but in order to enjoy a clear and refreshing taste like beer, it is preferable that the above citrus fruits, soft fruits, herbs, and spices be not used at all or

used in a minimum amount as raw materials. In particular, a blackcurrant gives an inappropriate milky aroma in beer, and thus a blackcurrant or blackcurrant juice is preferably not used at all or used in a minimum amount in the raw material.

3.1.2 Hops

When the processed food according to an embodiment of the present invention is a beer-taste beverage made using hops, examples of the form of the hops include pellet hops, powdered hops, and hop extract. The hops used may be a processed hop product, such as isomerized hops or reduced hops.

When the processed food according to an embodiment of the present invention is a beer-taste beverage made using hops, the amount of hops to be added is appropriately adjusted but is preferably from 0.0001 to 1 mass% based on the total amount (100 mass%) of the raw materials for the beverage.

A beer-taste beverage made using hops as a raw material is a beverage containing iso-$\alpha$-acid, which is a component derived from hops. The content of iso-$\alpha$-acid in the beer-taste beverage made using hops may be greater than 0.1 mass ppm or greater than 1.0 mass ppm based on the total amount (100 mass%) of the beer-taste beverage.

On the other hand, the content of iso-$\alpha$-acid in a beer-taste beverage made without using hops may be less than or equal to 0.1 mass ppm based on the total amount (100 mass%) of the beer-taste beverage.

In the present specification, the content of iso-$\alpha$-acid means a value measured by the high-performance liquid chromatography (HPLC) analysis method described in Revised BCOJ Beer Analysis Method (published by Public Interest Incorporated Foundation, The Brewing Society of Japan, edited by [Analysis Committee] Brewery Convention of Japan, Brewers Association of Japan, Enlarged and Revised Edition of 2013).

3.1.3 Preservative

When the processed food according to an embodiment of the present invention is a beverage, it may be a beverage further blended with a preservative.

Examples of the preservative used in an embodiment of the present invention include benzoic acid; benzoate salts, such as sodium benzoate; benzoate esters, such as propyl parahydroxybenzoate and butyl parahydroxybenzoate; and dimethyl dicarbonate. For the preservative, a commercially available preparation, such as Kyohryoku Sanpurezah (Powerful Sanplezer) (a mixture of sodium benzoate and butyl benzoate, available from San-Ei Gen F.F.I., Inc.) may be used.

One of these preservatives may be used alone, or two or more of these preservatives may be used in combination.

When the processed food according to an embodiment of the present invention is a beverage blended with a preservative, the content of the preservative is adjusted preferably to 5 to 1200 mass ppm, more preferably to 10 to 1100 mass ppm, even more preferably to 15 to 1000 mass ppm, and even more preferably to 20 to 900 mass ppm based on the total amount (100 mass%) of the beverage.

3.1.4 Sweetener

When the processed food according to an embodiment of the present invention is a beverage, it may be a beverage further blended with a sweetener.

Examples of the sweetener used in an embodiment of the present invention include saccharides obtained by degrading starch derived from grain with an acid, an enzyme, or the like, such as commercially available saccharified liquids and commercially available starch syrup; tri- or higher saccharides; sugar alcohols; natural sweeteners, such as stevia; and artificial sweeteners.

One of these sweeteners may be used alone, or two or more of these sweeteners may be used in combination.

These saccharides may be in the form of a liquid, such as a solution, or a solid, such as a powder.

There are no particular limitations on the type of raw material grain for starch, the method of purifying starch, and the conditions for treatment, such as hydrolysis with an enzyme or an acid. For example, a saccharide may be used with the proportion of maltose increased by appropriately setting conditions for hydrolysis with an enzyme or an acid. In addition, sucrose, fructose, glucose, maltose, trehalose, maltotriose, maltotetraose, isomaltose, isomaltotriose, isomaltotetraose, panose, and solutions thereof (sugar solutions) can also be used.

Examples of the artificial sweetener include aspartame, acesulfame potassium (acesulfame K), sucralose, and neotame.

When the processed food according to an embodiment of the present invention is a beverage, it may be a beverage with a limited content of a high-intensity sweetener.

The content of the high-intensity sweetener contained in the beverage with a limited content of the high-intensity sweetener may be less than 10.0 parts by mass, less than 5.0 parts by mass, less than 2.0 parts by mass, less than 1.0

parts by mass, less than 0.1 parts by mass, less than 0.05 parts by mass, less than 0.01 parts by mass, less than 0.001 parts by mass, or less than 0.0001 parts by mass relative to 100 parts by mass of the total amount of uric acid contained in the beverage.

The content of the high-intensity sweetener contained in the beverage with a limited content of the high-intensity sweetener may be less than 1000 mass ppm, less than 100 mass ppm, less than 10 mass ppm, less than 1 mass ppm, less than 100 mass ppb, less than 10 mass ppb, less than 1 mass ppb, less than 100 mass ppt, less than 10 mass ppt, or less than 1 mass ppt based on the total amount (100 mass%) of the beverage.

Specific examples of the high-intensity sweetener are as described above.

When the processed food according to an embodiment of the present invention is a beverage, it may be a beverage with a limited content of rebaudioside A.

The beverage of rebaudioside A contained in the beverage with a limited content of rebaudioside A may be less than 10.0 parts by mass, less than 5.0 parts by mass, less than 2.0 parts by mass, less than 1.0 parts by mass, less than 0.1 parts by mass, less than 0.05 parts by mass, less than 0.01 parts by mass, less than 0.001 parts by mass, or less than 0.0001 parts by mass relative to 100 parts by mass of the total amount of uric acid contained in the beverage.

The content of rebaudioside A contained in the beverage with a limited content of rebaudioside A may be less than 1000 mass ppm, less than 100 mass ppm, less than 10 mass ppm, less than 1 mass ppm, less than 100 mass ppb, less than 10 mass ppb, less than 1 mass ppb, less than 100 mass ppt, less than 10 mass ppt, or less than 1 mass ppt based on the total amount (100 mass%) of the beverage.

When the processed food according to an embodiment of the present invention is a beverage, it may be a beverage with a limited content of erythritol.

The content of erythritol contained in the beverage with a limited content of erythritol may be less than 10.0 parts by mass, less than 5.0 parts by mass, less than 2.0 parts by mass, less than 1.0 parts by mass, less than 0.1 parts by mass, less than 0.05 parts by mass, less than 0.01 parts by mass, less than 0.001 parts by mass, or less than 0.0001 parts by mass relative to 100 parts by mass of the total amount of uric acid contained in the beverage.

The content of erythritol contained in the beverage with a limited content of erythritol may be less than 1000 mass ppm, less than 100 mass ppm, less than 10 mass ppm, less than 1 mass ppm, less than 100 mass ppb, less than 10 mass ppb, less than 1 mass ppb, less than 100 mass ppt, less than 10 mass ppt, or less than 1 mass ppt based on the total amount (100 mass%) of the beverage.

3.1.5 Water-soluble dietary fiber

When the processed food according to an embodiment of the present invention is a beverage, the beverage may be a beverage in which water-soluble dietary fiber is further blended, or may be a beverage in which no water-soluble dietary fiber is blended (added).

Examples of the water-soluble dietary fiber include indigestible dextrin, polydextrose, guar gum degradation products, pectin, glucomannan, alginic acid, laminarin, fucoidin, and carrageenan. From the viewpoint of versatility, such as stability and safety, indigestible dextrin or polydextrose is preferred.

When the processed food according to an embodiment of the present invention is a beverage, the beverage may be a beverage in which no indigestible dextrin is blended (added) as a raw material. The beverage of this embodiment contains water-soluble dietary fiber derived from raw materials (for example, malt and the like) without blending (adding) indigestible dextrin. The content of water-soluble dietary fiber derived from raw materials is described in, for example, Standard Tables of Food Composition in Japan 2020 (eighth revised edition).

When the processed food of an embodiment of the present invention is a beverage, the content of the water-soluble dietary fiber may be, based on the total amount (100 mass%) of the beverage, 0.05 mass% or more, 0.1 mass% or more, 0.15 mass% or more, 0.2 mass% or more, 0.25 mass% or more, 0.3 mass% or more, 0.35 mass% or more, 0.4 mass% or more, 0.5 mass% or more, 0.7 mass% or more, 1.0 mass% or more, 1.5 mass% or more, 2.0 mass% or more, 2.5 mass% or more, or 3.0 mass% or more, and may be 5.0 mass% or less, 4.5 mass% or less, 4.0 mass% or less, 3.5 mass% or less, 3.0 mass% or less, 2.5 mass% or less, 2.0 mass% or less, less than 1.5 mass%, less than 1.0 mass%, less than 0.75 mass%, less than 0.60 mass%, less than 0.50 mass%, 0.40 mass% or less, 0.35 mass% or less, 0.30 mass% or less, 0.25 mass% or less, 0.20 mass% or less, 0.15 mass% or less, 0.10 mass% or less, or less than 0.10 mass%.

The content of the water-soluble dietary fiber may be adjusted to fall within the above range by adding a commercially available product, or may be adjusted in the production process in such a manner that the content of the dietary fiber derived from a raw material such as malt falls within the above range. When a commercially available product is added, by setting the content of the water-soluble dietary fiber within the above range, for example, in the case of a beer-taste beverage, unsuitable powdery feel can be suppressed, and when the content of the dietary fiber is adjusted in the production process, by setting the content of the water-soluble dietary fiber within the above range, for example, filterability in wort filtration and beer filtration can be improved, and production efficiency can be increased.

For example, when the content of water-soluble dietary fiber in the beer-taste beverage is adjusted in the

production process of the beer-taste beverage, the content of water-soluble dietary fiber can be adjusted by adjusting the addition of diluting water or carbonated water, the type of raw materials (such as barley, malt, corn, and sugar solution), the amount of raw material, the type of enzyme, the amount of enzyme added, the timing of enzyme addition (such as during the saccharification step, before addition of yeast, after addition of yeast, and during aging), the set temperature, pH, and holding time in each temperature region in preparing the saccharified liquid, and the like.

3.1.6 Bittering agent and bitterness-imparting agent

When the processed food according to an embodiment of the present invention is a beverage, it may be a beverage further blended with one or more selected from a bittering agent and a bitterness-imparting agent.
In particular, when the processed food according to an embodiment of the present invention is a beer-taste beverage, bitterness may be imparted by hops, or a bittering agent or bitterness-imparting agent indicated below may be used together with hops. Alternatively, the bittering agent or bitterness-imparting agent indicated below may be used instead of hops without using hops.
The bittering agent or bitterness-imparting agent is not particularly limited, and a substance used as a bitterness-imparting agent in ordinary beer and low-malt beer can be used. Examples thereof include rosemary, litchi, caraway, juniper berry, sage, Ganoderma sichuanense, bay laurel, quassin, caffeine, absinthin, naringin, Phellodendron amurense, citrus extract, bitter wood extract, coffee extract, tea extract, bitter gourd extract, lotus embryo extract, Aloe arborescens extract, rosemary extract, litchi extract, laurel extract, sage extract, caraway extract, Artemisia absinthium extract, and alginic acid.
One of these bittering agents and bitterness-imparting agents may be used alone, or two or more thereof may be used in combination.

3.1.7 Antioxidant

When the processed food according to an embodiment of the present invention is a beverage, it may be a beverage further blended with an antioxidant.
The antioxidant is not particularly limited, and a substance used as an antioxidant in ordinary beer and low-malt beer can be used, and examples include ascorbic acid, erythorbic acid, and catechin.
One of these antioxidants may be used alone, or two or more thereof may be used in combination.

3.1.8 Flavoring

When the processed food according to an embodiment of the present invention is a beverage, it may be a beverage further blended with a flavoring.
The flavoring is not particularly limited and can be appropriately selected according to each beverage.
For example, when the processed food according to an embodiment of the present invention is a beer-taste beverage, examples of the beer flavoring include flavor components such as esters and higher alcohols.
Specific examples of the flavor component include isoamyl acetate, ethyl acetate, n-propanol, isobutanol, acetaldehyde, ethyl caproate, ethyl caprylate, isoamyl propionate, linalool, geraniol, citral, 4-vinylguaiacol (4-VG), 4-methyl-3-pentenoic acid, 2-methyl-2-pentenoic acid, 1,4-cineol, 1,8-cineol, 2,3-diethyl-5-methylpyrazine, γ-decanolactone, γ-undecalactone, ethyl hexanoate, ethyl 2-methylbutyrate, ethyl n-butyrate, myrcene, citral, limonene, maltol, ethyl maltol, phenylacetic acid, furaneol, furfural, methional, 3-methyl-2-butene-1-thiol, 3-methyl-2-butanethiol, diacetyl, ferulic acid, geranic acid, geranylacetate, ethyl butyrate, octanoic acid, decanoic acid, 9-decenoic acid, nonanoic acid, tetradecanoic acid, propanoic acid, 2-methylpropanoic acid, γ-butyrolactone, 2-aminoacetophenone, ethyl 3-phenylpropionate, 2-ethyl-4-hydroxy-5-methyl-3(2H)-furanone, dimethylsulfone, 3-methylcyclopentane -1,2-dione, 2-methylbutanal, 3-methylbutanal, 2-methyltetrahydrofuran-3-one, 2-acetylfuran, 2-methyltetrahydrofuran-3-one, hexanal, hexanol, cis-3-hexenal, 1-octen-3-ol, β-eudesmol, 4-mercapto-4-methylpentan-2-one, β-caryophyllene, β-myrcene, furfuryl alcohol, 2-ethylpyrazine, 2,3-dimethylpyrazine, 2-methylbutyl acetate, isoamyl alcohol, 5-hydroxymethylfurfural, phenylacetaldehyde, 1-phenyl-3-butene-1-one, trans-2-hexenal, nonanal, and phenethyl alcohol. One of these flavorings may be used alone, or two or more of these flavorings may be used in combination.
When the processed food according to an embodiment of the present invention is a beer-taste beverage, the content of the flavor component such as ester or higher alcohol can be adjusted by separately adding a flavoring containing these flavor components. However, when alcoholic fermentation is involved in the production process, the content may be adjusted by alcoholic fermentation without adding a flavoring or together with addition of a flavoring.
The content of the flavor component such as ester or higher alcohol in a case of involving alcoholic fermentation can be controlled by appropriately setting the addition of diluting water or carbonated water, the sugar composition and amino acid composition of the pre-fermentation liquid before addition of yeast, sugar concentration, amino acid

concentration, original extract concentration in the pre-fermentation liquid, yeast species, fermentation conditions (such as oxygen concentration, aeration conditions, yeast species, amount of yeast added, the number of yeast grown, yeast removal timing, fermentation temperature, fermentation time, pressure setting, and carbon dioxide concentration), cooling timing, and the like.

3.1.9 Acidulant

When the processed food according to an embodiment of the present invention is a beverage, it may be a beverage further blended with an acidulant.
The acidulant is not particularly limited as long as it is a substance with a sour taste, and examples include tartaric acid, phosphoric acid, citric acid, gluconic acid, lactic acid, malic acid, phytic acid, acetic acid, succinic acid, glucono-delta-lactone, and salts thereof.
Among these, the acidulant is preferably at least one selected from tartaric acid, phosphoric acid, citric acid, gluconic acid, lactic acid, malic acid, phytic acid, acetic acid, succinic acid, and salts thereof, more preferably at least one selected from tartaric acid, phosphoric acid, citric acid, lactic acid, tartaric acid, acetic acid, and salts thereof, and even more preferably at least one selected from tartaric acid, phosphoric acid, and lactic acid.
One of these acidulants may be used alone, or two or more of these acidulants may be used in combination.

3.1.10 Salt

When the processed food according to an embodiment of the present invention is a beverage, it may be a beverage further blended with a salt.
Examples of the salt include sodium chloride, acid potassium phosphate, acid calcium phosphate, ammonium phosphate, magnesium sulfate, calcium sulfate, potassium metabisulfite, calcium chloride, magnesium chloride, potassium nitrate, ammonium sulfate, potassium chloride, monosodium citrate, disodium citrate, and trisodium citrate.
One of these salts may be used alone, or two or more of these salts may be used in combination.

3.2 Carbonic acid gas

When the processed food according to an embodiment of the present invention is a carbonated beverage, it contains carbonic acid gas.
The amount of carbonic acid gas in the carbonated beverage may be adjusted using carbonation equipment or may be adjusted by adding carbonated water. When the processed food according to an embodiment of the present invention is a beer-taste beverage, carbonic acid gas produced in the fermentation step of the beer-taste beverage can be used as it is as carbonic acid gas contained in the beer-taste beverage.
The carbonic acid gas concentration in the case where the processed food according to an embodiment of the present invention is a carbonated beverage is preferably 0.30 (w/w)% or more, more preferably 0.35 (w/w)% or more, even more preferably 0.40 (w/w)% or more, still more preferably 0.42 (w/w)% or more, and particularly preferably 0.45 (w/w)% or more, and preferably 0.80 (w/w)% or less, more preferably 0.70 (w/w)% or less, even more preferably 0.60 (w/w)% or less, still more preferably 0.57 (w/w) or less, and particularly preferably 0.55 (w/w)% or less.
In the present specification, the carbonic acid gas concentration can be measured by immersing a container containing a target carbonated beverage in a water bath at 20°C for 30 minutes or more with occasional shaking of the container to adjust the beverage to 20°C and then using a gas volume measuring instrument (e.g., such as GVA-500 (available from Kyoto Electronics Manufacturing Co., Ltd.)).
When the processed food according to an embodiment of the present invention is a packaged beverage, the carbonic acid gas pressure of the packaged beverage is appropriately adjusted such that the carbonic acid gas concentration is in the range described above and may be 5.0 kg/cm$^2$ or less, 4.5 kg/cm$^2$ or less, or 4.0 kg/cm$^2$ or less, and 0.20 kg/cm$^2$ or more, 0.50 kg/cm$^2$ or more, or 1.0 kg/cm$^2$ or more. Any of these upper and lower limits may be combined; for example, the carbonic acid gas pressure of the beverage may be greater than or equal to 0.20 kg/cm$^2$ and less than or equal to 5.0 kg/cm$^2$, greater than or equal to 0.50 kg/cm$^2$ and less than or equal to 4.5 kg/cm$^2$, or greater than or equal to 1.0 kg/cm$^2$ and less than or equal to 4.0 kg/cm$^2$.
In the present specification, the gas pressure refers to the gas pressure in the container except in special cases.
The pressure can be measured by a method well-known to those skilled in the art, for example, using a method in which a sample adjusted to 20°C is fixed to a gas internal pressure meter, the stopcock of the gas internal pressure meter is opened once to release the gas, the stopcock is closed again, the gas internal pressure meter is shaken, and a value when the pointer reaches a certain position is read; or using a commercially available gas pressure measuring instrument.

3.3 Additional additive

To the processed food according to an embodiment of the present invention, an additive of various types may be added as necessary to the extent that the effects of the present invention are not hindered.
Examples of such an additive include colorants; foam-forming agents; fermentation promoters; yeast extract; protein-based substances, such as peptide-containing substances; and seasonings, such as amino acids.
The colorant is used to impart a desired color to the processed food, and a caramel dye, a cacao dye, a safflower dye, a colored sugar solution, and/or the like can be used.
When the processed food according to an embodiment of the present invention is a beer-taste beverage, the foam-forming agent is used to form beer-like foam or to keep the foam of the beverage, and a plant-extracted saponin-based substance, such as soybean saponin and/or quillaja saponin; a plant protein, such as corn and/or soybean; a peptide-containing substance, such as a collagen peptide; a yeast extract; an emulsifiers (sucrose fatty acid ester, glycerin fatty acid ester, lecithin, and/or lysolecithin); and/or the like can be appropriately used.
The fermentation promoter is used to promote fermentation by yeast in the case where the processed food according to an embodiment of the present invention is a fermented beer-taste beverage. For example, a yeast extract; a bran component, such as rice or wheat bran; a vitamin; a mineral agent; and/or the like can be used alone or in combination.

3.4 Packaged processed food

The processed food according to an embodiment of the present invention may be a packaged processed food packaged in a container. For the container processed food, a container of any form and material may be used; examples of the container include a bottle, a can, a bottle can, a barrel, a PET bottle, a paper pack, a pouch, a bag-in-box, a paper bag, a resin bag, a portion pack, and a chilled cup, and the container is appropriately selected according to the type of processed food.

4. Additive for processed food

The additive for a processed food according to an embodiment of the present invention has at least one of xanthine oxidase activity or uricase activity.
The additive for a processed food according to an embodiment of the present invention may be a mixture of an additive having xanthine oxidase activity and an additive having uricase activity.
The additive for a processed food according to an embodiment of the present invention may be an additive that falls under the definition that "additives mean substances which are used by being added, mixed or infiltrated into food or by other methods in the production process of a food or for the purpose of processing or preservation of a food"
as stipulated in Article 2, Item 2 of the Food Sanitation Law.
The additive for a processed food according to an embodiment of the present invention may be any of an additive having only xanthine oxidase activity, an additive having only uricase activity, and an additive having both xanthine oxidase activity and uricase activity.
The additive for a processed food having xanthine oxidase activity can change xanthine to uric acid and effectively lower the purines in the processed food by being added in the production process of the processed food and performing a xanthine oxidase treatment.
Uric acid changed from xanthine has an effect of suppressing deterioration of properties (such as flavor and appearance) peculiar to the processed food and improving stability of various properties. The content of uric acid can be adjusted by adding uric acid or a urate salt such as sodium urate, but uric acid has low solubility in water, and thus it is difficult to adjust a processed food containing uric acid at a high concentration by such a method. Although there is a method of using a raw material containing uric acid in producing a processed food, the raw material containing uric acid is limited, and some types of processed food may have poor compatibility with such a raw material. There is also a method of using a liquid with high solubility for uric acid instead of water, but the compatibility between the processed food and such a liquid must be considered also for this method.
In view of these points, the use of an additive for a processed food having xanthine oxidase activity for the processed food is advantageous in that a processed food with a high uric acid concentration and a lowered content of purines can be efficiently produced.
The additive for a processed food having xanthine oxidase activity contains at least a raw material having xanthine oxidase activity or a component derived from the raw material.
Examples of the raw material having xanthine oxidase activity include raw materials derived from a wide range of biological species ranging from bacteria, to mammals, and higher plants. Specific examples include raw milk (unsterilized raw milk) of a mammal, such as a cow; a microorganism belonging to the genus, such as Pseudomonas, Escherichia, Arthrobacter, or Nocardia; and Enterobacter cloacae.

The xanthine oxidase activity value of the additive for a processed food according to an embodiment of the present invention may be 0.01 U or more, 0.05 U or more, 0.1 U or more, 0.3 U or more, 0.5 U or more, 0.7 U or more, 1.0 U or more, 1.5 U or more, 2.0 U or more, 2.5 U or more, 3.0 U or more, 3.5 U or more, 4.0 U or more, 5.0 U or more, 5.5 U or more, 6.0 U or more, 7.0 U or more, 8.0 U or more, 9.0 U or more, or 10.0 U or more, and may be 10000 U or less, 9000 U or less, 8000 U or less, 7000 U or less, or 6000 U or less.

The additive for a processed food having uricase activity can further convert uric acid generated from xanthine through xanthine oxidase treatment into allantoin.

The additive for a processed food having uricase activity contains at least a raw material having uricase activity or a component derived from the raw material.

Examples of the raw material having uricase activity include, for example, raw materials derived from a wide range of biological species ranging from bacteria, to mammals, and higher plants. Specific examples include raw milk (unsterilized raw milk) of a mammal, such as a cow; a microorganism belonging to the genus, such as Pseudomonas, Escherichia, Arthrobacter, or Nocardia; and Enterobacter cloacae.

The uricase activity value of the additive for a processed food according to an embodiment of the present invention may be 0.01 U or more, 0.05 U or more, 0.1 U or more, 0.3 U or more, 0.5 U or more, 0.7 U or more, 1.0 U or more, 1.5 U or more, 2.0 U or more, 2.5 U or more, 3.0 U or more, 3.5 U or more, 4.0 U or more, 5.0 U or more, 5.5 U or more, 6.0 U or more, 7.0 U or more, 8.0 U or more, 9.0 U or more, or 10.0 U or more, and may be 10000 U or less, 9000 U or less, 8000 U or less, 7000 U or less, or 6000 U or less.

The additive for a processed food according to an embodiment of the present invention may be a solid or a liquid.

The additive for a processed food according to an embodiment of the present invention may contain a protein having had xanthine oxidase activity and/or uricase activity in which xanthine oxidase activity and/or uricase activity has been inactivated through a process such as heating or pH adjustment.

The additive for a processed food according to an embodiment of the present invention may contain a filler, a buffering agent, a suspending agent, a stabilizer, a preservative, an antiseptic, a physiological saline solution, and/or the like in addition to the active ingredient having xanthine oxidase activity and/or uricase activity (i.e., the enzyme).

The degree of purification of the enzyme as an active ingredient is not particularly limited. That is, the enzyme may be a crude enzyme or a purified enzyme.

Examples of the filler include lactose, sorbitol, D-mannitol, maltodextrin, and white sugar.

Examples of the buffering agent include phosphate salts, citrate salts, and acetate salts.

For the stabilizer, for example, propylene glycol or ascorbic acid can be used. Examples of the preservative include phenol, benzalkonium chloride, benzyl alcohol, chlorobutanol, and methyl paraben.

Examples of the antiseptic include benzalkonium chloride, paraoxybenzoic acid, and chlorobutanol.

The purine-lowering enzymatic agent for food according to an embodiment of the present invention can be produced, for example, through the following steps (I) and (II):

- Step (I): culturing a microorganism that produces the enzyme; and
- Step (II): removing bacterial cells after the culture.

In step (I), the culture conditions and culture method are not particularly limited as long as they allow production of the enzyme. That is, a method and culture conditions suitable for the culture of the microorganism used can be appropriately set with the condition that the enzyme is produced. The culture method may be liquid culture or solid culture.

Examples of the method of removing bacterial cells in step (II) include centrifugation, filtration, and filter treatment.

The culture solution containing no bacterial cells obtained through steps (I) and (II) undergoes step (III) of purifying the culture solution as necessary and then used as an enzymatic agent.

The pH at which the enzymatic activity of the additive for a processed food according to an embodiment of the present invention is expressed may be 2.0 or higher, 2.2 or higher, 2.4 or higher, 2.6 or higher, 2.8 or higher, 3.0 or higher, 3.1 or higher, 3.2 or higher, 3.3 or higher, 3.4 or higher, 3.5 or higher, 3.6 or higher, 3.7 or higher, 3.8 or higher, 3.9 or higher, 4.0 or higher, 4.1 or higher, 4.2 or higher, 4.3 or higher, 4.4 or higher, 4.5 or higher, 4.6 or higher, 4.7 or higher, 4.8 or higher, 4.9 or higher, or 5.0 or higher, and may be 7.0 or lower, 6.9 or lower, 6.8 or lower, 6.7 or lower, 6.6 or lower, 6.5 or lower, 6.4 or lower, 6.3 or lower, 6.2 or lower, 6.1 or lower, 6.0 or lower, 5.9 or lower, 5.8 or lower, 5.7 or lower, 5.6 or lower, 5.5 or lower, 5.4 or lower, 5.3 or lower, 5.2 or lower, 5.1 or lower, 5.0 or lower, 4.9 or lower, 4.8 or lower, 4.7 or lower, 4.6 or lower, 4.5 or lower, 4.4 or lower, 4.3 or lower, 4.2 or lower, 4.1 or lower, or 4.0 or lower.

The temperature at which the enzymatic activity of the additive for a processed food according to an embodiment of the present invention is expressed may be 0°C or higher, 5°C or higher, 15°C or higher, 20°C or higher, 25°C or higher, 30°C or higher, 35°C or higher, 40°C or higher, or 45°C or higher, and may be 140°C or lower, 135°C or lower, 130°C or lower, 125°C or lower, 120°C or lower, 115°C or lower, 110°C or lower, 105°C or lower, 100°C or lower, 95°C or lower, 90°C or lower, 85°C or lower, 80°C or lower, 75°C or lower, or 70°C or lower.

The additive for a processed food according to an embodiment of the present invention can be added in a production process of various processed foods but is particularly preferably added in a production process of a beer-taste beverage and more preferably added in a production process of a fermented malt beverage.

Beer-taste beverages (in particular, fermented malt beverages) are beverages with a high content of purines due to the use of malt. However, adding the additive for processed food according to an embodiment of the present invention in the production process of a beer-taste beverage can effectively lower the purine content even though malt is used in a high proportion.

5. Method for producing processed food

A method for producing a processed food according to an embodiment of the present invention includes step (a): adding an additive for a processed food having at least one of xanthine oxidase activity or uricase activity.

The timing for performing step (a) may be any timing in the production process of the processed food. The additive may be added all at once or may be added in multiple times.

The additive for a processed food having xanthine oxidase activity may be added followed by addition of an additive for a processed food having uricase activity, or a mixture of the additive for a processed food having xanthine oxidase activity and the additive for a processed food having uricase activity may be added at the same time. An additive for a processed food having both xanthine oxidase activity and uricase activity may be added.

By adding the additive in this manner, when a raw material containing a large amount of purines is used as a raw material of the processed food, xanthine contained in the raw material is changed to uric acid through xanthine oxidase treatment, and then uric acid is changed to allantoin through uricase treatment, which can lower the amount of purines.

In step (a), the raw material having xanthine oxidase activity is as described above, but a commercially available preparation of xanthine oxidase may be used as the raw material.

The raw material having uricase activity is as described above, but a commercially available preparation of uricase may be used as the raw material.

In step (a), the blending amount of the additive for a processed food can be appropriately adjusted, and is preferably a blending amount at which the xanthine oxidase activity value or the uricase activity value becomes a predetermined value.

The specific xanthine oxidase activity value or the uricase activity value may be 0.01 U or more, 0.05 U or more, 0.1 U or more, 0.3 U or more, 0.5 U or more, 0.7 U or more, 1.0 U or more, 1.5 U or more, 2.0 U or more, 2.5 U or more, 3.0 U or more, 3.5 U or more, 4.0 U or more, 5.0 U or more, 5.5 U or more, 6.0 U or more, 7.0 U or more, 8.0 U or more, 9.0 U or more, or 10.0 U or more, and may be 10000 U or less, 9000 U or less, 8000 U or less, 7000 U or less, or 6000 U or less.

In step (a), a heat treatment may be performed after addition of the additive for a processed food.

In the heat treatment, the heating temperature may be 20°C or higher, 25°C or higher, 30°C or higher, 35°C or higher, 40°C or higher, or 45°C or higher, and may be 140°C or lower, 135°C or lower, 130°C or lower, 125°C or lower, 120°C or lower, 115°C or lower, 110°C or lower, 105°C or lower, 100°C or lower, 95°C or lower, 90°C or lower, 85°C or lower, 80°C or lower, 75°C or lower, or 70°C or lower.

The heating time may be 1 minute or more, 10 minutes or more, 20 minutes or more, 30 minutes or more, 40 minutes or more, 50 minutes or more, or 60 minutes or more, and may be 10 hours or less, 9 hours or less, 8 hours or less, 7 hours or less, or 6 hours or less.

The pH of the raw material after adding the additive for a processed food in step (a) may be 2.0 or higher, 2.2 or higher, 2.4 or higher, 2.6 or higher, 2.8 or higher, 3.0 or higher, 3.1 or higher, 3.2 or higher, 3.3 or higher, 3.4 or higher, 3.5 or higher, 3.6 or higher, 3.7 or higher, 3.8 or higher, 3.9 or higher, 4.0 or higher, 4.1 or higher, 4.2 or higher, 4.3 or higher, 4.4 or higher, 4.5 or higher, 4.6 or higher, 4.7 or higher, 4.8 or higher, 4.9 or higher, or 5.0 or higher, and may be 7.0 or lower, 6.9 or lower, 6.8 or lower, 6.7 or lower, 6.6 or lower, 6.5 or lower, 6.4 or lower, 6.3 or lower, 6.2 or lower, 6.1 or lower, 6.0 or lower, 5.9 or lower, 5.8 or lower, 5.7 or lower, 5.6 or lower, 5.5 or lower, 5.4 or lower, 5.3 or lower, 5.2 or lower, 5.1 or lower, 5.0 or lower, 4.9 or lower, 4.8 or lower, 4.7 or lower, 4.6 or lower, 4.5 or lower, 4.4 or lower, 4.3 or lower, 4.2 or lower, 4.1 or lower, or 4.0 or lower.

The processed food produced by the production method according to an embodiment of the present invention may have residual xanthine oxidase activity and or/uricase activity.

The xanthine oxidase activity value and the uricase activity value of the produced processed food may be 0.01 U or more, 0.05 U or more, 0.1 U or more, 0.3 U or more, 0.5 U or more, 0.7 U or more, 1.0 U or more, 1.5 U or more, 2.0 U or more, 2.5 U or more, 3.0 U or more, 3.5 U or more, 4.0 U or more, 5.0 U or more, 5.5 U or more, 6.0 U or more, 7.0 U or more, 8.0 U or more, 9.0 U or more, or 10.0 U or more, and may be 10000 U or less, 9000 U or less, 8000 U or less, 7000 U or less, or 6000 U or less.

The method for producing a processed food according to an embodiment of the present invention preferably further includes step (b): adding an additive for a processed food having one or more enzymatic activities selected from purine nucleosidase activity, adenine deaminase activity, and guanine deaminase activity.

In step (b), an additive for a processed food having two or three of the above-mentioned enzymatic activities may be added, or two or more of additives for processed food each having only one enzymatic activity may be added.

Step (b) can be performed at the timing of, before step (a), in the same manner as step (a), and after step (a), but from the viewpoint of effectively lowering the purine content, step (b) is preferably performed before step (a) and/or in the same manner as step (a), and is more preferably performed at least before step (a).

By subjecting the raw material to a purine nucleosidase treatment as step (b), adenosine and guanosine in the solution can be converted into yeast-assimilable free purine groups. Even though xanthine is generated by the purine nucleosidase treatment, xanthine can be lowered by performing the xanthine oxidase treatment in step (a) after step (b).

Further, by subjecting the raw material to an adenine deaminase treatment as step (b), adenine in the solution can be converted into hypoxanthine, and decomposition by xanthine oxidase can be efficiently performed. Likewise, guanine in the solution can be converted into xanthine by performing the guanine deaminase treatment, which enables efficient degradation by xanthine oxidase.

The processed food according to an embodiment of the present invention thus obtained is filled in a predetermined container and distributed to the market as a product.

The method for packaging the processed food is not particularly limited, and a packaging method known to those skilled in the art can be used. Through the packaging, the processed food according to an embodiment of the present invention is filled and sealed in a container. In the packaging, a container of any form and material may be used, and examples of the container include containers described in "3.4 Packaged processed food".

The method for producing a processed food according to an embodiment of the present invention will be described by taking a method for producing a beer-taste beverage as an example.

The method for producing a beer-taste beverage according to an embodiment of the present invention preferably includes step (a) adding an additive having at least one of xanthine oxidase activity or uricase activity, and more preferably includes step (b) adding an additive for a processed food having one or more enzymatic activities selected from purine nucleosidase activity, adenine deaminase activity, and guanine deaminase activity.

Step (b) can be performed at the timing of, before step (a), in the same manner as step (a), and after step (a), but from the viewpoint of effectively lowering the purine content, step (b) is preferably performed before step (a) and/or in the same manner as step (a), and is more preferably performed at least before step (a).

Hereinafter, the method for producing a beer-taste beverage according to an embodiment of the present invention will be described in detail by taking a method for producing a fermented beer-taste beverage and a method for producing a non-fermented beer-taste beverage as examples.

5.1 Method for producing fermented beer-taste beverage

Examples of the method for producing a fermented beer-taste beverage that is a processed food according to an embodiment of the present invention include a method including the following steps (1) to (3).

Step (1): performing at least one treatment of saccharification treatment, boiling treatment, or solid content removal treatment on a raw material to produce a pre-fermentation liquid;
Step (2): cooling the pre-fermentation liquid obtained in step (1) to produce a cooled pre-fermentation liquid;
Step (3): adding yeast to the cooled pre-fermentation liquid obtained in step (2) to perform alcoholic fermentation.

In the method for producing a fermented beer-taste beverage, step (a) above can be performed at one or more timings of (i) to (v) below:

· (i): before step (1);
· (ii): simultaneously with at least one of step (1), step (2), or step (3);
· (iii): between step (1) and step (2);
· (iv): between step (2) and step (3); and
· (v): after step (3).

In step (a), the additive for a processed food having xanthine oxidase activity may be added followed by addition of an additive for a processed food having uricase activity, or a mixture of the additive for a processed food having xanthine oxidase activity and the additive for a processed food having uricase activity may be added at the same time. An additive for a processed food having both xanthine oxidase activity and uricase activity may be added.

The method for producing a fermented beer-taste beverage according to an embodiment of the present invention may further include step (b): adding an additive for a processed food having one or more enzymatic activities selected from purine nucleosidase activity, adenine deaminase activity, and guanine deaminase activity from the viewpoint of producing a beverage with a further lowered content of purines.

In step (b), an additive for a processed food having two or three of the above-mentioned enzymatic activities may be added, or two or more of additives for processed food each having only one enzymatic activity may be added.

Step (b) can be performed before step (a), in the same manner as step (a), and after step (a), but from the viewpoint of effectively lowering the purine content, step (b) is preferably performed before step (a) and/or in the same manner as step (a), and is more preferably performed at least before step (a).

Moreover, step (b) may be performed simultaneously with step (1) or after completion of step (1), or simultaneously with step (3) or after completion of step (3).

In the case of producing a beverage with a bitterness value of 5 BUs or more as a raw material in the method for producing a fermented beer-taste beverage, the method preferably includes adding hops. In the case of producing a beverage with a bitterness value of less than 5 BUs as a raw material, the method preferably does not include adding hops.

<Step (1)>

Step (1) is a step of performing at least one treatment of the group consisting of saccharification treatment, boiling treatment, and solid content removal treatment, using various raw materials to produce a pre-fermentation liquid.

For example, in the case of using malt as a raw material, various raw materials including water and malt are fed in a preparation kettle or a preparation tank, and an enzymatic agent that promotes a change of a component derived from the raw material may be added as necessary before fermentation.

Examples of the enzymatic agent include amylase, protease, purine nucleosidase, deaminase, polyphenol oxidase, glucanase, xylanase, pectinase, cellulase, lipase, glucosidase, xanthine oxidase, and transglucosidase. In addition, examples include enzymatic agents falling under "(3) Following Enzymatic Agents Added during Brewing Step for Purpose of Rationalization of Brewing and the like" in Article 3 "7. Articles not Handled as Raw Materials for Alcoholic Beverages" of the Notice on the Liquor Tax Law and the Administrative Ordinance Related to Alcoholic Beverages (revised on June 27, 2018).

Adding these enzymatic agents can efficiently adjust the component composition of the resulting fermented beer-taste beverage. As various raw materials besides malt, hops, a preservative, a sweetener, a water-soluble dietary fiber, a bittering agent or bitterness-imparting agent, an antioxidant, a flavoring, an acidulant, a salt, and/or the like may be added. These raw materials may be added before performing the saccharification treatment, during the saccharification treatment, or after completion of the saccharification treatment. These raw materials may be added after the alcoholic fermentation in the next step.

A mixture of the various raw materials is heated to saccharify the starch of the raw materials to perform saccharification treatment.

The temperature and time of the saccharification treatment are preferably appropriately adjusted in view of the type of malt used, the malt proportion, raw materials besides water and malt, the type and amount of the enzyme used, the original wort extract concentration of the finally resulting beverage, and the like. For example, in an embodiment of the present invention, the temperature of the saccharification treatment is preferably from 35 to 80°C, and the time of the saccharification treatment is preferably from 10 to 360 minutes. After the saccharification treatment, filtration is performed, resulting in the formation of a saccharified liquid.

The saccharified liquid is preferably subjected to boiling treatment.

When this boiling treatment is performed, hops, a bittering agent, and the like are preferably added in the case of using them as raw materials. Hops, a bittering agent, and/or the like may be added between the start of boiling the saccharified liquid and before the completion of the boiling.

Instead of the saccharified liquid, a pre-fermentation liquid may be prepared by adding hops, a bittering agent, and/or the like to a mixture obtained by adding warm water to a malt extract, and boiling the mixture.

When malt is not used as a raw material, a pre-fermentation liquid may be prepared by mixing, as the raw materials, a liquid sugar containing a carbon source; a nitrogen source as an amino acid-containing raw material other than barley and the like or malt; hops; a preservative; a sweetener; a water-soluble dietary fiber; a bittering agent or a bitterness-imparting agent; an antioxidant; a flavoring; an acidulant; a salt; and/or the like together with warm water to prepare a liquid sugar solution, and boiling the liquid sugar solution.

In the case of using hops, it may be added before the boiling treatment or may be added between the start of boiling the liquid sugar solution and before the completion of the boiling.

<Step (2)>

Step (2) is a step of cooling the pre-fermentation liquid produced in step (1) to produce a cooled pre-fermentation liquid.

After the completion of the boiling treatment, the pre-fermentation liquid is transferred to a whirlpool and cooled to 0 to 20°C. After the cooling, solid contents, such as coagulated protein, may be removed to adjust the original wort extract

concentration.

Through such treatment, a cooled pre-fermentation liquid is produced.

<Step (3)>

Step (3) is a step of adding yeast to the cooled pre-fermentation liquid produced in step (2) to perform alcoholic fermentation.

The yeast used in this step can be appropriately selected in view of the type of the fermented beverage to be produced, the target flavor, the fermentation conditions, and the like, and top-fermenting yeast may be used, or bottom-fermenting yeast may be used. In addition, wine yeast, sake yeast, wild yeast capable of producing alcohol, or the like may be used.

The yeast in the form of a yeast suspension as is may be added to raw materials, or a slurry produced by concentrating the yeast by centrifugation or sedimentation may be added to the pre-fermentation liquid. Alternatively, a material obtained by completely removing the supernatant after the centrifugation may be added. The amount of yeast added to a stock solution can be appropriately set and is, for example, appropriately from $5 \times 10^6$ cells/mL to $1 \times 10^8$ cells/mL.

Various conditions, such as the fermentation temperature and the fermentation period, for performing alcoholic fermentation can be appropriately set, and fermentation may be performed, for example, under conditions of 8 to 25°C for 5 to 10 days. During the fermentation step, the temperature (temperature increase or temperature decrease) or pressure of the fermented liquid may be changed.

In addition, after completion of this step, the yeast may be removed with a filter or the like, and water or an additive, such as a flavoring, an acidulant, or a dye, may be added as necessary.

After these steps, a step performed in the production of a beer-taste beverage known to those skilled in the art, such as a step of storing an alcoholic beverage and a filtration step, may be performed.

The fermented beer-taste beverage thus produced is filled in a predetermined container and distributed to the market as a product.

The method for packaging the fermented beer-taste beverage is not particularly limited, and a packaging method known to those skilled in the art can be used. Through the packaging, the fermented beer-taste beverage is filled and sealed in a container. In the packaging, a container of any form and material may be used, and examples of the container are as described above.

5.2 Method for producing non-fermented beer-taste beverage

Examples of the method for producing a non-fermented beer-taste beverage that is a processed food according to an embodiment of the present invention include a method including the following step (1), step (2), and step (4).

- · Step (1): performing at least one treatment of saccharification treatment, boiling treatment, or solid content removal treatment on a raw material to obtain a pre-beverage liquid;
- · Step (2): cooling the pre-beverage liquid obtained in step (1) to obtain a cooled pre-fermentation liquid; and
- · Step (4): adding carbonic acid gas to the cooled pre-beverage liquid produced in step (2).

Steps (1) and (2) are the same as the methods for adjusting the "pre-fermentation liquid" and the "cooled pre-fermentation liquid" in the "method for producing a fermented beer-taste beverage" described above.

In the case of producing a non-fermented non-alcoholic beer-taste beverage, step (4) may be performed as it is.

In the case of producing a non-fermented alcohol-containing beer-taste beverage, the pre-beverage liquid produced in step (1) and/or the cooled pre-beverage liquid produced in step (2) may be further blended with a distilled liquor, such as spirits, whiskey, or shochu, to adjust an alcohol-containing beverage.

In addition, for a method for adding carbonic acid gas in step (4), carbonic acid gas may be added by mixing the cooled pre-beverage liquid produced in step (2) and carbonated water, or carbonic acid gas may be directly added to a cooled beverage stock solution.

When carbonic acid gas is added, an additive, such as a preservative, a sweetener, a flavoring, an acidulant, and/or a dye may be added as necessary.

In the method for producing a non-fermented beer-taste beverage, step (a) above can be performed at one or more timings of (i) to (v) below:

- · (i): before step (1);
- · (ii): simultaneously with at least one of step (1), step (2), or step (4);
- · (iii): between step (1) and step (2);

· (iv): between step (2) and step (4); and
· (v): after step (4).

In the case of producing a non-fermented alcohol-containing beer-taste beverage, step (a) may be performed simultaneously with blending with a distilled liquor, such as spirits, whiskey, or shochu.

In step (a), the additive for a processed food having xanthine oxidase activity may be added followed by addition of an additive for a processed food having uricase activity, or a mixture of the additive for a processed food having xanthine oxidase activity and the additive for a processed food having uricase activity may be added at the same time. An additive for a processed food having both xanthine oxidase activity and uricase activity may be added.

The method for producing a non-fermented beer-taste beverage may further include step (b): adding an additive for a processed food having purine nucleosidase activity from the viewpoint of making a beverage with a further lowered content of purines.

Step (b) can be performed before step (a), in the same manner as step (a), and after step (a), but from the viewpoint of effectively lowering the purine content, step (b) is preferably performed before step (a) and/or in the same manner as step (a), and is more preferably performed at least before step (a).

Further, step (b) may be performed simultaneously with step (1) or after completion of step (1), or simultaneously with step (4) or after completion of step (4).

In the case of producing a beverage with a bitterness value of 5 BUs or more as a raw material in the method for producing a non-fermented beer-taste beverage, the method preferably includes a step of adding hops. In the case of producing a beverage with a bitterness value of less than 5 BUs as a raw material, the method preferably does not include adding hops. The step of adding hops is preferably performed simultaneously with step (1).

The non-fermented beer-taste beverage thus produced is filled in a predetermined container and distributed to the market as a product.

The method for packaging the non-fermented beer-taste beverage is not particularly limited, and a packaging method known to those skilled in the art can be used. Through the packaging, the non-fermented beer-taste beverage is filled and sealed in a container. In the packaging, a container of any form and material may be used, and examples of the container are as described above.

6. Method for lowering purine content in processed food

A method for lowering a purine content according to an embodiment of the present invention is a method for lowering the content of purines by adding an additive for a processed food having xanthine oxidase activity to convert xanthine into uric acid in a production process of a processed food.

The additive for a processed food having xanthine oxidase activity is as described above. The heating temperature, heating time, and pH after addition of the additive for a processed food having xanthine oxidase activity are as described above.

In addition, a method for lowering a purine content according to an embodiment of the present invention may be a method for lowering the content of purines by adding an additive for a processed food having xanthine oxidase activity, and an additive for a processed food having uricase activity to convert xanthine into uric acid and further to convert uric acid into allantoin in a production process of a processed food.

The additive for a processed food having uricase activity is as described above. The heating temperature, heating time, and pH after addition of the additive for a processed food having uricase activity are as described above.

In the method for lowering a purine content according to an embodiment of the present invention, the processed food whose purine content is to be lowered is not particularly limited and is as described above. However, a beer-taste beverage is preferred because it is made using purine-rich raw materials (in particular, malt).

The method for lowering a purine content according to an embodiment of the present invention can effectively lower the purine content also in a purine-rich processed food like a beer-taste beverage.

Examples

Hereinafter, the present invention will be described in more detail by examples, but the present invention is not limited by these examples. The contents of adenine, guanine, xanthine, uric acid, allantoin, total purines, pyroglutamic acid, and proline, and the xanthine oxidase activity value and uricase activity value of the additive for a processed food are values measured in accordance with the above-described method.

[Beverage treated with xanthine oxidase and uricase]

Comparative Example A-1

Crushed barley malt was fed in a preparation tank containing 40 L of warm water kept at 40 to 55°C, then the temperature was raised to 78°C while the temperature was repeatedly raised and kept in a stepwise manner, then malt dregs were removed by filtration, and a saccharified liquid was produced. Next, hops were further added to the saccharified liquid, boiling was performed, and solid-liquid separation treatment was performed to produce clear wort. Then, brewer's yeast (bottom-fermenting yeast) was added to a pre-fermentation liquid produced by cooling the wort to perform alcoholic fermentation to give an alcoholic strength of 5 v/v%. Then, the yeast was removed by filtration, and a beer-taste beverage (a-0) with a malt proportion of 100 mass% and an original wort extract concentration of 12.5 mass% was produced.

Example A-1

To 1 mL of the beer-taste beverage (a-0) produced in the same manner as in Comparative Example A-1, 10 μL of an additive for a processed food with xanthine oxidase activity of 100 U/mL was added, the mixture was thoroughly stirred and allowed to stand undisturbed at 40°C for 120 minutes to perform xanthine oxidase treatment, and a beer-taste beverage (a-1) was produced. The beer-taste beverage (a-1) contains the component (X) because an additive for a processed food having xanthine oxidase activity is used.

Example A-2

To 1 mL of the beer-taste beverage (a-1) produced in the same manner as in Example A-1, 10 μL of an additive for a processed food with uricase activity of 100 U/mL was added, the mixture was thoroughly stirred and allowed to stand undisturbed at 40°C for 120 minutes to perform uricase treatment, and a beer-taste beverage (a-2) was produced. The beer-taste beverage (a-2) contains the component (U) together with the component (X) because an additive for a processed food having uricase activity is used.

The produced beer-taste beverages (a-0) to (a-2) were measured for the contents of xanthine, uric acid, and allantoin. The measurement results are listed in Table 1.

[Table 1]

Table 1

| | | Comparative Example A-1 | Example A-1 | Example A-2 |
|---|---|---|---|---|
| Beer-taste beverage | | (a-0) | (a-1) | (a-2) |
| Purine nucleosidase treatment (• yes, - no) | | - | - | - |
| Xanthine oxidase treatment (• yes, - no) | | - | • | • |
| Uricase treatment (• yes, - no) | | - | - | • |
| Malt proportion | mass% | 100 | 100 | 100 |
| Original wort extract concentration | mass% | 12.5 | 12.5 | 12.5 |
| Content of xanthine | μg/g | 18.2 | < 1.0 | < 1.0 |
| Content of uric acid | μg/g | < 1.0 | 21.6 | < 1.0 |
| Content of allantoin | μg/g | < 1.0 | < 1.0 | 28.4 |
| Content of pyroglutamic acid | μg/g | 226 | 226 | 226 |
| Alcoholic strength | v/v% | 5.00 | 5.00 | 5.00 |
| Content of proline | mg/100 ml | 42 | 42 | 42 |
| Xanthine (μg/g)/pyroglutamic acid (μg/g) | | 0.080 | < 0.0044 | < 0.0044 |

(continued)

| | Comparative Example A-1 | Example A-1 | Example A-2 |
|---|---|---|---|
| Malt proportion (mass%) × original wort extract concentration (mass%) | 1250 | 1250 | 1250 |

A comparison of Example A-1 with Comparative Example A-1 in Table 1 shows that the xanthine oxidase treatment lowered the xanthine content and allowed production of uric acid. A comparison of Example A-1 with Example A-2 shows that the uricase treatment lowered uric acid content and produced allantoin.

This confirmed that addition of an additive for a processed food having xanthine oxidase activity is effective in lowering the content of xanthine. This also confirmed that addition of an additive for a processed food having uricase activity is effective in lowering uric acid content.

[Effect of pH and temperature on xanthine oxidase activity and uricase activity]

Examples B-1 to B-18

To 1 mL each of test solutions listed in Table 2, 10 μL of an additive for a processed food having xanthine oxidase activity of 100 U/mL and 10 μL of an additive for a processed food having uricase activity of 100 U/mL were simultaneously added, and the mixture was allowed to stand undisturbed at the temperature listed in Table 2 for 16 hours. The xanthine concentration and uric acid concentration of the test solution after standing for 16 hours were measured, and each reduction percentage was calculated from the following equation.

.

[Reduction percentage (%)] = 100 - [xanthine concentration or uric acid concentration (mg/100 mL) of test solution after standing for 16 hours]/[xanthine concentration or uric acid concentration of test solution before addition of additive] × 100

The test solutions A to H listed in Table 2 used in examples are as follows.

- Test solution A: a solution prepared by adding xanthine and uric acid to a 0.1 M acetate buffer solution, which is a base solution, to give a xanthine concentration of 2.05 mg/100 mL, a uric acid concentration of 1.86 mg/100 mL, and a pH of 3.5.
- Test solution B: a solution prepared by adding xanthine and uric acid to a 0.1 M acetate buffer solution, which is a base solution, to give a xanthine concentration of 1.79 mg/100 mL, a uric acid concentration of 1.73 mg/100 mL, and a pH of 4.0.
- Test solution C: a solution prepared by adding xanthine and uric acid to a 0.1 M acetate buffer solution, which is a base solution, to give a xanthine concentration of 1.68 mg/100 mL, a uric acid concentration of 1.77 mg/100 mL, and a pH of 4.5.
- Test solution D: a solution prepared by adding xanthine and uric acid to a 0.1 M acetate buffer solution, which is a base solution, to give a xanthine concentration of 1.89 mg/100 mL, a uric acid concentration of 1.74 mg/100 mL, and a pH of 5.5.
- Test solution E: a solution prepared by adding xanthine and uric acid to a 0.1 M phosphate buffer solution, which is a base solution, to give a xanthine concentration of 1.87 mg/100 mL, a uric acid concentration of 1.73 mg/100 mL, and a pH of 6.0.
- Test solution F: a solution prepared by using, as a base solution, a fermented malt beverage (19°C) with a malt proportion of 51 mass% produced based on an ordinary method using malt, sucrose, and hops as raw materials, and adding xanthine and uric acid to the base solution to give a xanthine concentration of 0.72 mg/100 mL, a uric acid concentration of 1.02 mg/100 mL, and a pH of 4.0.
- Test solution G: a solution prepared by using, as a base solution, a fermented malt beverage (19°C) with a malt proportion of 51 mass% produced based on an ordinary method using malt, sucrose, and hops as raw materials, and adding xanthine and uric acid to the base solution to give a xanthine concentration of 0.82 mg/100 mL, a uric acid concentration of 1.18 mg/100 mL, and a pH of 4.5.
- Test solution H: a solution prepared by using, as a base solution, a pre-fermentation wort (19°C) with a malt proportion of 51 mass% produced based on an ordinary method using malt and sucrose as raw materials, and adding xanthine

and uric acid to the base solution to give a xanthine concentration of 0.17 mg/100 mL, a uric acid concentration of 0.60 mg/100 mL, and a pH of 5.5.

[Table 2]

Table 2

| | Test solution | Base solution | Test solution pH | Temperature (°C) | Xanthine concentration | | | Uric acid concentration | | |
|---|---|---|---|---|---|---|---|---|---|---|
| | | | | | Before adding enzymes (mg/100 mL) | After standing for 16 hours (mg/100 mL) | Reduction percentage (%) | Before adding enzymes (mg/100 mL) | After standing for 16 hours (mg/100 mL) | Reduction percentage (%) |
| Example B-1 | A | 0.1 M Acetate buffer solution | 3.5 | 10 | 2.05 | 0.00 | 100.0 | 1.86 | 0.71 | 61.9 |
| Example B-2 | | | | 20 | 2.05 | 0.00 | 100.0 | 1.86 | 0.09 | 95.0 |
| Example B-3 | B | 0.1 M Acetate buffer solution | 4.0 | 10 | 1.79 | 0.00 | 100.0 | 1.73 | 0.14 | 92.0 |
| Example B-4 | | | | 20 | 1.79 | 0.00 | 100.0 | 1.73 | 0.02 | 98.8 |
| Example B-5 | C | 0.1 M Acetate buffer solution | 4.5 | 10 | 1.68 | 0.00 | 100.0 | 1.77 | 0.02 | 98.8 |
| Example B-6 | | | | 20 | 1.68 | 0.00 | 100.0 | 1.77 | 0.02 | 98.8 |
| Example B-7 | | | | 40 | 1.68 | 0.00 | 100.0 | 1.77 | 0.02 | 99.0 |
| Example B-8 | | | | 60 | 1.68 | 0.00 | 100.0 | 1.77 | 0.02 | 98.9 |
| Example B-9 | | | | 80 | 1.68 | 0.00 | 100.0 | 1.77 | 1.39 | 21.3 |
| Example B-10 | D | 0.1 M Acetate buffer solution | 5.5 | 40 | 1.89 | 0.00 | 100.0 | 1.74 | 0.03 | 98.3 |
| Example B-11 | | | | 60 | 1.89 | 0.00 | 100.0 | 1.74 | 0.03 | 98.1 |
| Example B-12 | | | | 80 | 1.89 | 0.00 | 100.0 | 1.74 | 0.62 | 64.1 |

(continued)

| | Test solution | Base solution | Test solution pH | Temperature (°C) | Xanthine concentration | | | Uric acid concentration | | |
|---|---|---|---|---|---|---|---|---|---|---|
| | | | | | Before adding enzymes (mg/100 mL) | After standing for 16 hours (mg/100 mL) | Reduction percentage (%) | Before adding enzymes (mg/100 mL) | After standing for 16 hours (mg/100 mL) | Reduction percentage (%) |
| Example B-13 | E | 0.1 M Phosphate buffer solution | 6.0 | 40 | 1.87 | 0.00 | 100.0 | 1.73 | 0.04 | 97.9 |
| Example B-14 | | | | 60 | 1.87 | 0.00 | 100.0 | 1.73 | 0.02 | 98.6 |
| Example B-15 | | | | 80 | 1.87 | 0.00 | 100.0 | 1.73 | 0.38 | 78.2 |
| Example B-16 | F | Fermented malt beverage with 51 mass% malt (19°C) | 4.0 | 20 | 0.72 | 0.00 | 100.0 | 1.02 | 0.06 | 94.4 |
| Example B-17 | G | Fermented malt beverage with 51 mass% malt (19°C) | 4.5 | 20 | 0.82 | 0.00 | 99.8 | 1.18 | 0.03 | 97.4 |
| Example B-18 | H | Pre-fermentation wort (19°C) | 5.5 | 60 | 0.17 | 0.01 | 96.0 | 0.60 | 0.00 | 99.9 |

The results listed in Table 2 confirmed that xanthine oxidase activity and uricase activity were expressed, and xanthine and uric acid were degraded at every pH and temperature in test solutions A to H.

[Beer-taste beverage with lowered purine content]

Examples C-1-1 to C-4-2, Comparative Examples C-1-1 to C-1-1

Crushed barley malt and as necessary sucrose to give a malt proportion listed in Table 3 were fed as raw materials in a preparation tank containing 40 L of warm water kept at 40 to 55°C, then the temperature was raised to 78°C while stepwisely raising and keeping the temperature was repeatedly performed, then malt dregs were removed by filtration, and a saccharified liquid was obtained. Next, hops were further added to the saccharified liquid, boiling was performed, and solid-liquid separation treatment was performed to produce clear wort. Then, in examples and comparative examples except Comparative Example C-1-1, the wort was cooled and subjected to (1) purine nucleosidase treatment indicated below, and the treated wort was used as a pre-fermentation liquid. In Comparative Example C-1-1, the wort was cooled, and the cooled wort was used as a pre-fermentation liquid. Then, brewer's yeast (bottom-fermenting yeast) was added to the pre-fermentation liquid to perform alcoholic fermentation, the yeast was removed by filtration, and a fermented solution was obtained.

In the case of performing xanthine oxidase treatment and uricase treatment, the resulting fermented solution was subjected to (2) xanthine oxidase treatment indicated below and (3) uricase treatment indicated below in this order.

(1) Purine nucleosidase treatment

To 100 mL of the pre-fermentation liquid, 130 μL of an additive for a processed food having purine nucleosidase activity of 160 U/mL was added, and the mixture was allowed to stand undisturbed at 50°C for 2 hours.

(2) Xanthine oxidase treatment

To 100 mL of the fermented solution, 1000 μL of an additive for a processed food having xanthine oxidase activity of 100 U/mL was added, and the mixture was allowed to stand undisturbed at 40°C for 16 hours.

Since the xanthine oxidase treatment (2) was performed through the step of adding the additive for a processed food having xanthine oxidase activity, it is determined that the beer-taste beverage produced by performing the treatment contains the component (X).

(3) Uricase treatment

To 100 mL of the fermented solution, 1000 μL of an additive for a processed food having uricase activity of 100 U/mL was added, and the mixture was allowed to stand undisturbed at 40°C for 16 hours.

Since (3) uricase treatment was performed through the step of adding the additive for a processed food having uricase activity, it is determined that the beer-taste beverage produced by performing the treatment contains the component (U) described above.

For the resulting beer-taste beverages, the various contents, malt proportion, original wort extract concentration, alcoholic strength, and content of proline are listed in Table 3. In addition, sensory evaluation of the presence or absence of the taste typical of a beer-taste beverage was performed as follows.

<Sensory evaluation>

Five panelists who had been regularly trained evaluated the beverages obtained in examples and comparative examples cooled to approximately 4°C for the "presence or absence of the taste typical of a beer-taste beverage" of each beverage for testing by a score in a range of 5.0 (maximum value) to 1.0 (minimum value) in increments of 0.1 based on the score criteria described below, and average values of the scores of the five panelists were calculated. The results are listed in Table 3.

In the evaluation, samples that meet the following criteria "5.0", "4.0", "3.0", "2.0", and "1.0" were prepared in advance to standardize the criteria among the panelists. In addition, for the same beverage, no difference in a score value of 2.0 or more was observed among panelists.

[Score criteria for presence or absence of taste typical of beer-taste beverage]

- "5.0": The taste typical of a beer-taste beverage is very strongly perceived.
- "4.0": The taste typical of a beer-taste beverage is sufficiently perceived.
- "3.0": The taste typical of a beer-taste beverage is perceived.
- "2.0": The taste typical of a beer-taste beverage is hardly perceived.
- "1.0": The taste typical of a beer-taste beverage is not perceived at all.

[Table 3]

Table 3

| | | Comparative Example C-1-1 | Comparative Example C-1-2 | Example C-1-1 | Comparative Example C-1-3 | Comparative Example C-1-4 | Example C-1-2 | Comparative Example C-2-1 | Example C-2-1 | Comparative Example C-2-2 | Example C-2-2 |
|---|---|---|---|---|---|---|---|---|---|---|---|
| (1) Purine nucleosidase treatment (• yes, - no) | | - | • | • | - | • | • | • | • | • | • |
| (2) Xanthine oxidase treatment (• yes, - no) | | - | - | • | - | - | • | - | • | - | • |
| (3) Uricase treatment (• yes, - no) | | - | - | • | - | - | • | - | • | - | • |
| Malt proportion | mass% | 100 | 100 | 100 | 100 | 100 | 100 | 75 | 75 | 75 | 75 |
| Original wort extract concentration | mass% | 11 | 11 | 11 | 17 | 17 | 17 | 11 | 11 | 17 | 17 |
| Total content of adenine and guanine | µg/g | 30.1 | 18.0 | 10.6 | 46.6 | 27.8 | 16.4 | 11.8 | 5.9 | 18.3 | 9.0 |
| Content of xanthine | µg/g | 6.1 | 17.0 | < 1.0 | 9.4 | 26.3 | < 1.0 | 12.9 | < 1.0 | 20.0 | < 1.0 |
| Content of uric acid | µg/g | < 1.0 | < 1.0 | < 1.0 | < 1.0 | < 1.0 | < 1.0 | < 1.0 | < 1.0 | < 1.0 | < 1.0 |
| Content of allantoin | µg/g | < 1.0 | < 1.0 | 5.7 | < 1.0 | < 1.0 | 8.8 | < 1.0 | 4.0 | < 1.0 | 6.1 |
| Content of total purines | µg/g | 38.7 | 42.3 | 11.2 | 59.9 | 65.4 | 17.3 | 28.2 | 6.1 | 43.5 | 9.4 |
| Content of pyroglutamic acid | µg/g | 223 | 214 | 214 | 344 | 330 | 330 | 164 | 164 | 254 | 254 |
| Alcoholic strength | v/v% | 5.45 | 5.56 | 5.56 | 8.43 | 8.60 | 8.60 | 6.17 | 6.17 | 9.54 | 9.54 |

(continued)

| | | Comparative Example C-1-1 | Comparative Example C-1-2 | Example C-1-1 | Comparative Example C-1-3 | Comparative Example C-1-4 | Example C-1-2 | Comparative Example C-2-1 | Example C-2-1 | Comparative Example C-2-2 | Example C-2-2 |
|---|---|---|---|---|---|---|---|---|---|---|---|
| Content of proline | mg/100 ml | 31 | 54 | 54 | 47 | 83 | 83 | 36 | 36 | 56 | 56 |
| Xanthine (μg/g)/pyroglutamic acid (μg/g) | | 0.027 | 0.079 | < 0.0029 | 0.027 | 0.080 | < 0.0030 | 0.079 | < 0.0029 | 0.079 | 0.0039 |
| Malt proportion (mass%) × original wort extract concentration (mass%) | | 1100 | 1100 | 1100 | 1700 | 1700 | 1700 | 825 | 825 | 1275 | 1275 |
| Sensory evaluation: presence or absence of taste typical of a beer-taste beverage | | 4.1 | 4.0 | 4.0 | 4.5 | 4.4 | 4.4 | 3.8 | 3.8 | 4.2 | 4.2 |

| | | Comparative Example C-3-1 | Example C-3-1 | Comparative Example C-3-2 | Example C-3-2 | Comparative Example C-4-1 | Example C-4-1 | Comparative Example C-4-2 | Example C-4-2 | Comparative Example C-4-3 | Example C-4-3 |
|---|---|---|---|---|---|---|---|---|---|---|---|
| (1) Nucleosidase treatment (• yes, - no) | | • | • | • | • | • | • | • | • | • | • |
| (2) Xanthine oxidase treatment (• yes, - no) | | - | • | - | • | - | • | - | • | - | • |
| (3) Uricase treatment (• yes, - no) | | - | • | - | • | - | • | - | • | - | • |
| Malt proportion | mass% | 51 | 51 | 51 | 51 | 24 | 24 | 24 | 24 | 24 | 24 |
| Original wort extract concentration | mass% | 11 | 11 | 17 | 17 | 8.78 | 8.78 | 11 | 11 | 17 | 17 |
| Total content of adenine and guanine | µg/g | 8.7 | 3.6 | 13.4 | 5.5 | 2.1 | 2.1 | 1.0 | 1.2 | 1.6 | 1.9 |
| Content of xanthine | µg/g | 7.8 | < 1.0 | 12.0 | < 1.0 | 3.5 | < 1.0 | 2.3 | < 1.0 | 3.6 | < 1.0 |
| Content of uric acid | µg/g | < 1.0 | < 1.0 | < 1.0 | < 1.0 | < 1.0 | < 1.0 | < 1.0 | < 1.0 | < 1.0 | < 1.0 |
| Content of allantoin | µg/g | < 1.0 | 1.6 | < 1.0 | 2.4 | < 1.0 | 19.0 | < 1.0 | 1.1 | < 1.0 | 1.7 |
| Content of total purines | µg/g | 18.8 | 3.8 | 29.1 | 5.8 | 4.7 | < 1.0 | 3.4 | 1.2 | 5.3 | 1.9 |
| Content of pyroglutamic acid | µg/g | 113 | 113 | 174 | 174 | 58 | 58 | 72 | 72 | 111 | 111 |
| Alcoholic strength | v/v% | 6.86 | 6.86 | 10.60 | 10.60 | 4.00 | 4.00 | 6.60 | 6.60 | 10.20 | 10.20 |
| Content of proline | mg/100 ml | 28 | 28 | 43 | 43 | 12 | 12 | 3 | 3 | 5 | 5 |

(continued)

| | Comparative Example C-3-1 | Example C-3-1 | Comparative Example C-3-2 | Example C-3-2 | Comparative Example C-4-1 | Example C-4-1 | Comparative Example C-4-2 | Example C-4-2 | Comparative Example C-4-3 | Example C-4-3 |
|---|---|---|---|---|---|---|---|---|---|---|
| Xanthine (μg/g)/pyroglutamic acid (μg/g) | 0.069 | < 0.0029 | 0.069 | < 0.0057 | 0.060 | < 0.017 | 0.032 | < 0.0029 | 0.032 | < 0.0090 |
| Malt proportion (mass%) × original wort extract concentration (mass%) | 561 | 561 | 867 | 867 | 210.7 | 210.7 | 264 | 264 | 408 | 408 |
| Sensory evaluation: presence or absence of taste typical of a beer-taste beverage | 3.5 | 3.5 | 3.8 | 3.8 | 3.1 | 3.1 | 3.2 | 3.2 | 3.5 | 3.5 |

As can be seen from Table 3, the results show that xanthine was degraded and the content of purines was lowered in the beer-taste beverages prepared in examples, and a taste typical of a beer-taste beverage was also perceived.

[Content of flavor components depending on difference in method for lowering purine content]

Preparation Example D-0

Crushed barley malt and as necessary sucrose to give a malt proportion listed in Table 4 were fed as raw materials in a preparation tank containing 40 L of warm water kept at 40 to 55°C, then the temperature was raised to 78°C while stepwisely raising and keeping the temperature was repeatedly performed, then malt dregs were removed by filtration, and a saccharified liquid was obtained. Next, hops were further added to the saccharified liquid, boiling was performed, and solid-liquid separation treatment was performed to produce clear wort. The wort was cooled, and then to 100 mL of the cooled wort, 130 μL of an additive for a processed food with a purine nucleosidase activity of 160 U/mL was added, and the mixture was allowed to stand undisturbed at 50°C for 2 hours to perform purine nucleosidase treatment, and a pre-fermentation liquid was obtained. Then, brewer's yeast (bottom-fermenting yeast) was added to the pre-fermentation liquid to perform alcoholic fermentation, the yeast was removed by filtration, and a fermented solution (d-0) was obtained.

Example D-1

To 100 mL of the fermented solution (d-0) obtained in Preparation Example D-0, 1000 μL of an additive for a processed food having xanthine oxidase activity of 100 U/mL was added, and the mixture was allowed to stand undisturbed at 40°C for 16 hours to perform xanthine oxidase treatment. Then, to 100 mL of the fermented solution treated with xanthine oxidase, 1000 μL of an additive for a processed food having uricase activity of 100 U/mL was added, the mixture was allowed to stand undisturbed at 40°C for 16 hours to perform uricase treatment, and a beer-taste beverage (d-1) was obtained.

Comparative Example D-1

To 100 mL of the fermented solution (d-0) obtained in Preparation Example D-0, activated clay was added to give a concentration of 3000 mass ppm, and the mixture was gently stirred to make the activated clay uniform in the solution. The solution was then allowed to stand undisturbed for 1 hour to bring the solution into contact with the activated clay. After the contact for 1 hour, the activated clay was removed by filtration, and a beer-taste beverage (d-i) was obtained.

Comparative Example D-2

To 100 mL of the fermented solution (d-0) obtained in Preparation Example D-0, activated carbon was added to give a concentration of 3000 mass ppm, and the mixture was gently stirred to make the activated carbon uniform in the solution. The solution was then allowed to stand undisturbed for 1 hour to bring the solution into contact with the activated carbon. After the contact for 1 hour, the activated carbon was removed by filtration, and a beer-taste beverage (d-ii) was obtained.

The fermented solution (d-0), and the beer-taste beverages (d-1), (d-i), and (d-ii) thus prepared were measured for various properties listed in Table 4, and the results listed in Table 4 were obtained.

[Table 4]

Table 4

| | Preparation Example D-0 | Example D-1 | Comparative Example D-1 | Comparative Example D-2 |
|---|---|---|---|---|
| Fermented solution/beer-taste beverage | (d-0) | (d-1) | (d-i) | (d-ii) |
| Method for lowering purine content | Purine nucleosidase | Purine nucleosidase + xanthine oxidase + uricase | Purine nucleosidase + physical contact with activated clay | Purine nucleosidase + physical contact with activated carbon |

(continued)

| | | Preparation Example D-0 | Example D-1 | Comparative Example D-1 | Comparative Example D-2 |
|---|---|---|---|---|---|
| Original wort extract concentration | mass% | 14.5 | 14.5 | 14.5 | 14.5 |
| Apparent extract concentration | mass% | 2.2 | 2.2 | 2.1 | 2.2 |
| Apparent fermentation degree | % | 85 | 85 | 85 | 85 |
| Alcoholic strength | v/v% | 6.6 | 6.6 | 6.6 | 6.6 |
| pH | - | 3.50 | 3.50 | 3.47 | 3.55 |
| Chromaticity | EBC | 19.4 | 19.4 | 14.5 | 18.7 |
| Bitterness value | BUs | 36.4 | 36.4 | 27.8 | 33.2 |
| FAN | mg/100 ml | 4.1 | 4.1 | 3.5 | 4.1 |
| (1) Content of ethyl butyrate | mass ppb | 41 | 41 | 41 | 27 |
| (2) Content of ethyl caproate | mass ppb | 143 | 143 | 134 | 50 |
| (3) Content of ethyl octanoate | mass ppb | 426 | 426 | 278 | 94 |
| (4) Content of ethyl decanoate | mass ppb | 87 | 87 | 36 | 8 |
| Total content of esters of (1) to (4) | mass ppb | 696 | 696 | 490 | 179 |
| Content of phenethyl alcohol | mass ppm | 27.3 | 27.3 | 27.3 | 17.4 |
| Content of iso-$\alpha$-acid | mass ppm | 33.63 | 33.63 | 24.13 | 31.01 |
| Content of $\alpha$-acid | mass ppm | 1.51 | 1.51 | 0.67 | 0.79 |
| Content of xanthine | $\mu$g/g | 9.7 | < 1.0 | < 1.0 | 8.2 |
| Content of pyroglutamic acid | $\mu$g/g | 111 | 111 | 105 | 106 |
| Xanthine ($\mu$g/g)/pyroglutamic acid ($\mu$g/g) | | 0.087 | < 0.0090 | < 0.010 | 0.077 |
| Total content of adenine and guanine | $\mu$g/g | 5.28 | 5.28 | 4.78 | 5.18 |

(continued)

| | | Preparation Example D-0 | Example D-1 | Comparative Example D-1 | Comparative Example D-2 |
|---|---|---|---|---|---|
| Content of total purines | μg/g | 15.84 | 6.14 | 5.68 | 14.05 |

From the results listed in Table 4, it is confirmed that the beer-taste beverage (d-1) prepared in Example D-1 had a lowered content of purines while flavor components (such as ester components and an alcohol component) peculiar to beer were retained. On the other hand, in the beer-taste beverages (d-i) and (d-ii) prepared in Comparative Examples D-1 and D-2, the content of purines was lowered, but decreases in flavor components, such as ester components and an alcohol component, were observed compared with the fermented solution (d-0) prepared in Preparation Example D-0.

## Claims

1. A processed food having a xanthine/pyroglutamic acid ratio between a content of xanthine (unit: μg/g) and a content of pyroglutamic acid (unit: μg/g) of 0.0200 or less,
the content of pyroglutamic acid being 40 μg/g or more.

2. The processed food according to claim 1, wherein the content of xanthine is 2.2 μg/g or less.

3. The processed food according to claim 1 or 2, wherein the processed food has a content of uric acid of 2.0 μg/g or more.

4. The processed food according to claim 1 or 2, wherein the processed food has a content of uric acid of less than 2.0 μg/g.

5. The processed food according to claim 4, wherein the processed food has a content of allantoin of 0.10 μg/g or more and 50.0 μg/g or less.

6. A processed food containing at least one component (X) selected from the group consisting of a protein having had xanthine oxidase activity and a component derived from the protein.

7. A processed food containing at least one component (X) selected from the group consisting of a protein having had xanthine oxidase activity and a component derived from the protein, and at least one component (U) selected from the group consisting of a protein having had uricase activity and a component derived from the protein.

8. The processed food according to claim 6 or 7, wherein the processed food has a content of pyroglutamic acid of 10 μg/g or more.

9. The processed food according to claim 1, 6, or 7, wherein the processed food is a beer-taste beverage.

10. The processed food according to claim 9, wherein the beer-taste beverage contains no spirits.

11. The processed food according to claim 9, wherein the beer-taste beverage has a total content of ester components of 500 mass ppb or more in terms of an original wort extract concentration of 14.5 mass% based on a total amount of the beer-taste beverage, the ester components including ethyl butyrate, ethyl caproate, ethyl octanoate, and ethyl decanoate.

12. The processed food according to claim 9, wherein the beer-taste beverage has a malt proportion of 10 mass% or more.

13. The processed food according to claim 9, wherein the beer-taste beverage has an alcoholic strength of 1.0 (v/v)% or more.

14. The processed food according to claim 9, wherein the beer-taste beverage has an alcoholic strength of less than 1.0 (v/v)%.

**15.** The processed food according to claim 9, wherein the beer-taste beverage is a fermented beverage.

**16.** The processed food according to claim 9, wherein the beer-taste beverage is a fermented malt beverage.

**17.** The processed food according to claim 9, wherein the beer-taste beverage has an original wort extract concentration of 7.5 mass% or more.

**18.** An additive for a processed food, the additive having at least one of xanthine oxidase activity or uricase activity.

**19.** The additive for a processed food according to claim 18, wherein the additive is added in a production process of a beer-taste beverage.

**20.** The additive for a processed food according to claim 19, wherein the beer-taste beverage is a fermented malt beverage.

**21.** The additive for a processed food according to claim 18 or 19, wherein the additive for a processed food has a xanthine oxidase activity value of 0.01 U or more.

**22.** The additive for a processed food according to claim 18 or 19, wherein the additive for a processed food has a uricase activity value of 0.01 U or more.

**23.** A method for producing a processed food, the method comprising step (a): adding an additive for a processed food having at least one of xanthine oxidase activity or uricase activity.

**24.** A method for producing a beer-taste beverage, the method comprising step (a): adding an additive for a processed food having at least one of xanthine oxidase activity or uricase activity.

**25.** The method for producing a beer-taste beverage according to claim 24, the method comprising the following steps (1) to (3), wherein step (a) is performed at least before the step (1), simultaneously with one or more steps of steps (1) to (3), between two steps selected from steps (1) to (3), or after step (3):

step (1): performing at least one treatment of saccharification treatment, boiling treatment, or solid content removal treatment on a raw material to produce a pre-fermentation liquid;
step (2): cooling the pre-fermentation liquid obtained in step (1) to produce a cooled pre-fermentation liquid;
step (3): adding yeast to the cooled pre-fermentation liquid obtained in step (2) to perform alcoholic fermentation.

**26.** The method for producing a beer-taste beverage according to claim 24 or 25, wherein the beer-taste beverage has a malt proportion of 10 mass% or more.

**27.** A method for lowering a purine content in a processed food, the method comprising adding an additive for a processed food having xanthine oxidase activity to convert xanthine into uric acid, thereby lowering a content of purines, in a production process of a processed food.

**28.** A method for lowering a purine content in a processed food, the method comprising adding an additive for a processed food having xanthine oxidase activity and an additive for a processed food having uricase activity to convert xanthine into uric acid and further convert uric acid into allantoin, thereby lowering a content of purines, in a production process of a processed food.

**29.** The method for lowering a purine content in a processed food according to claim 27 or 28, wherein the processed food is a beer-taste beverage.

**INTERNATIONAL SEARCH REPORT**

International application No. **PCT/JP2023/023929**

**A. CLASSIFICATION OF SUBJECT MATTER**

***A23L 33/17***(2016.01)i; ***A23L 2/00***(2006.01)i; ***A23L 2/52***(2006.01)i; ***C12C 5/02***(2006.01)i; ***C12C 12/00***(2006.01)i; ***C12G 3/04***(2019.01)i
FI: A23L33/17; A23L2/00 F; A23L2/00 Z; C12C5/02; C12C12/00; C12G3/04

According to International Patent Classification (IPC) or to both national classification and IPC

**B. FIELDS SEARCHED**

Minimum documentation searched (classification system followed by classification symbols)

A23L33/17; A23L2/00; A23L2/52; C12C5/02; C12C12/00; C12G3/04

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | CN 109554376 A (GUANGXI UNIVERSITY) 02 April 2019 (2019-04-02) paragraphs [0177]-[0187] | 18-20, 22-26 |
| Y | paragraphs [0177]-[0187] | 7-17 |
| A | paragraphs [0177]-[0187] | 4-6, 21, 27-29 |
| Y | JP 2009-219367 A (TOYO BOSEKI KABUSHIKI KAISHA) 01 October 2009 (2009-10-01) paragraph [0020] | 7-17 |
| A | paragraph [0020] | 4-6, 21, 27-29 |
| Y | JP 2020-195318 A (SUNTORY HOLDINGS LTD.) 10 December 2020 (2020-12-10) paragraph [0015] | 1-3, 8-17 |
| A | paragraph [0015] | 4-6, 21, 27-29 |
| Y | JP 2012-125205 A (KIRIN BEER KK) 05 July 2012 (2012-07-05) paragraphs [0013], [0017] | 1-3 |
| A | paragraphs [0013], [0017] | 4-6, 21, 27-29 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **12 September 2023** | **19 September 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

INTERNATIONAL SEARCH REPORT

International application No.
**PCT/JP2023/023929**

**C. DOCUMENTS CONSIDERED TO BE RELEVANT**

| Category* | Citation of document, with indication, where appropriate, of the relevant passages | Relevant to claim No. |
|---|---|---|
| A | JP 2021-141836 A (SUNTORY HOLDINGS LTD.) 24 September 2021 (2021-09-24) paragraphs [0008]-[0054] | 1-29 |
| A | JP 9-172962 A (YOTSUBA NYUGYO KK) 08 July 1997 (1997-07-08) paragraphs [0007]-[0036] | 1-29 |
| P, X | WO 2023/277150 A1 (SUNTORY HOLDINGS LTD.) 05 January 2023 (2023-01-05) paragraphs [0007]-[0171] | 6-7, 9-29 |
| P, X | WO 2023/277149 A1 (SUNTORY HOLDINGS LTD.) 05 January 2023 (2023-01-05) paragraphs [0007]-[0139] | 6-7, 9-10, 12-20, 22-29 |

Form PCT/ISA/210 (second sheet) (January 2015)

**INTERNATIONAL SEARCH REPORT**
**Information on patent family members**

International application No.
**PCT/JP2023/023929**

| Patent document cited in search report | | | Publication date (day/month/year) | Patent family member(s) | Publication date (day/month/year) |
|---|---|---|---|---|---|
| CN | 109554376 | A | 02 April 2019 | (Family: none) | |
| JP | 2009-219367 | A | 01 October 2009 | (Family: none) | |
| JP | 2020-195318 | A | 10 December 2020 | (Family: none) | |
| JP | 2012-125205 | A | 05 July 2012 | (Family: none) | |
| JP | 2021-141836 | A | 24 September 2021 | (Family: none) | |
| JP | 9-172962 | A | 08 July 1997 | (Family: none) | |
| WO | 2023/277150 | A1 | 05 January 2023 | (Family: none) | |
| WO | 2023/277149 | A1 | 05 January 2023 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2018064503 A


### Non-patent literature cited in the description


- 8.18 Free Amino Nitrogen of Revised BCOJ Beer Analysis Method. Public Interest Incorporated Foundation, The Brewing Society of Japan, 2013
- BCOJ Beer Analysis Method. The Brewing Society of Japan, 01 November 2004
- Revised BCOJ Beer Analysis Method. Public Interest Incorporated Foundation, The Brewing Society of Japan, 2013
- 8.15 Bitterness Value. Revised BCOJ Beer Analysis Method. Public Interest Incorporated Foundation, The Brewing Society of Japan, 2013
- 8.8 Chromaticity. Revised BCOJ Beer Analysis Method. Public Interest Incorporated Foundation, The Brewing Society of Japan, 2013